# EUROPEAN PATENT APPLICATION

(11) **EP 4 844 658 A1**
(43) Date of publication of application: **25.11.2026**
(21) Application number: 26178778.2
(22) Date of filing: 14.05.2026
(51) Int. Cl.: G06Q 10/107

(54) **USER INTERFACES, METHODS, AND SYSTEMS FOR GENERATING AND DISPLAYING POLLS**

(30) Priority: 19.05.2025 US 202563808549 P; 06.06.2025 US 202563818972 P; 13.05.2026 US 202619676566
(71) Applicant: Apple Inc., Cupertino, CA 95014 (US)
(72) Inventor: DALONZO, Christian X., Cupertino, California, 95014 (US); LEMAY, Stephen O., Cupertino, California, 95014 (US)
(74) Representative: Carpmaels & Ransford LLP

(57) **Abstract**

In some embodiments, an electronic device displays a user interface element when it detects one or more messages associated with a messaging conversation which satisfy one or more criteria. In some embodiments, an electronic device displays a poll in a first location when sent to a messaging conversation by a first user, and displays the poll in a second location when modified by a second user. In some embodiments, a system for an AI/ML model detects one or more criteria for automatically recommending a poll for a messaging interface.

## Description

### Cross-Reference to Related Applications

This application claims the benefit of U.S. Provisional Application No. 63/818,972, filed June 6, 2025, U.S. Provisional Application No. 63/808,549, filed May 19, 2025, and U.S. Patent Application No. 19/676,566, filed May 13, 2026, the contents of which are herein incorporated by reference in their entireties for all purposes.

### Field of the Disclosure

This disclosure relates generally to an electronic device presenting user interfaces for generating polls and transmitting polls using one or more methods and/or systems such as in conjunction with use of a messaging application.

### Background of the Disclosure

User interaction with electronic devices has increased significantly in recent years. These devices can be devices such as computers, tablet computers, televisions, multimedia devices, or mobile devices. In some circumstances, users may wish to poll one or more users participating in a messaging conversation associated with a messaging application. The user may therefore desire efficient ways of generating and transmitting polls to a messaging conversation.

### Summary of the Disclosure

Providing efficient ways of generating polls and transmitting polls to a messaging conversation enhances user interactions with the electronic device by reducing the time and inputs needed to generate and transmit polls to the electronic device. Providing efficient ways of requesting information from a group of users within a messaging conversation enhances user interactions with the electronic device by reducing time and inputs needed to poll participants in a messaging conversation in order to reach a group consensus. Displaying a selectable option, based on one or more messages associated with the messaging conversation that, when selected, causes the electronic to generate a prepopulated poll based on the content of the one or more messages enhances user interactions with the electronic device by reducing the inputs needed to create and transmit a poll to the messaging conversation. Updating the visual representation of a poll based on the user, time, user participation in the poll, and/or manner of modification to the poll, reduces inputs, and reduces errors when polling multiple users within a messaging conversation, and increases clarity in relation to efforts to reach a group consensus. Providing a system for an artificial intelligence/machine learning (AI/ML) model to detect one or more criteria for automatically recommending a poll for a messaging interface enhances user interactions with the electronic device by reducing the inputs needed to create and transmit a poll to the messaging conversation.

The full descriptions of the embodiments are provided in the Drawings and the Detailed Description, and it is understood that the Summary provided above does not limit the scope of the disclosure in any way.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

### Brief Description of the Drawings

For a better understanding of the various described embodiments, reference should be made to the Detailed Description below, in conjunction with the following drawings in which like reference numerals refer to corresponding parts throughout the figures.
Fig. 1A is a block diagram illustrating a portable multifunction device with a touch-sensitive display in accordance with some embodiments.
Fig. 1B is a block diagram illustrating exemplary components for event handling in accordance with some embodiments.
Fig. 2 illustrates a portable multifunction device having a touch screen in accordance with some embodiments.
Figs. 3A-3G are block diagrams of an exemplary multifunction device with a display and a touch-sensitive surface in accordance with some embodiments.
Fig. 4A illustrates an exemplary user interface for a menu of applications on a portable multifunction device in accordance with some embodiments.
Fig. 4B illustrates an exemplary user interface for a multifunction device with a touch-sensitive surface that is separate from the display in accordance with some embodiments.
Fig. 5A illustrates a personal electronic device in accordance with some embodiments.
Fig. 5B is a block diagram illustrating a personal electronic device in accordance with some embodiments.
Figs. 5C-5D illustrate exemplary components of a personal electronic device having a touch-sensitive display and intensity sensors in accordance with some embodiments.
Figs. 5E-5H illustrate exemplary components and user interfaces of a personal electronic device in accordance with some embodiments.
Figs. 6A-6U illustrate exemplary ways in which an electronic device suggests and/or generates content for a poll to be sent to a messaging conversation.
Fig. 7 illustrates a flow diagram illustrating a method in which an electronic device displays a selectable user interface element that is selectable to initiate one or more operations corresponding to generating a poll based on content of one or more messages associated with the messaging conversation.
Figs. 8A-8Q illustrate exemplary ways in which an electronic device displays one or more visual representations of a poll sent to a messaging conversation based on detecting events.
Fig. 9 illustrates a flow diagram illustrating a method in which an electronic device displays a poll in a location based on which user has modified the poll.
Fig. 10 illustrates a block diagram of a system for training an artificial intelligence/machine learning (AI/ML) model to detect one or more criteria for automatically recommending a poll for a messaging interface.

### Detailed Description

In the following description of embodiments, reference is made to the accompanying drawings which form a part hereof, and in which it is shown by way of illustration specific embodiments that are optionally practiced. It is to be understood that other embodiments are optionally used, and structural changes are optionally made without departing from the scope of the disclosed embodiments.

Providing efficient ways of generating polls and transmitting polls to a messaging conversation enhances user interactions with the electronic device by reducing the time and inputs needed to generate and transmit polls to the electronic device. Providing efficient ways of requesting information from a group of users within a messaging conversation enhances user interactions with the electronic device by reducing time and inputs needed to poll participants in a messaging conversation in order to reach a group consensus. Displaying a selectable option, based on one or more messages associated with the messaging conversation that, when selected, causes the electronic to generate a prepopulated poll based on the content of the one or more messages enhances user interactions with the electronic device by reducing the inputs needed to create and transmit a poll to the messaging conversation. Updating the visual representation of a poll based on the user, time, user participation in the poll, and/or manner of modification to the poll, reduces inputs, and reduces errors when polling multiple users within a messaging conversation, and increases clarity in relation to efforts to reach a group consensus. Providing a system for an artificial intelligence/machine learning (AI/ML) model to detect one or more criteria for automatically recommending a poll for a messaging interface enhances user interactions with the electronic device by reducing the inputs needed to create and transmit a poll to the messaging conversation.

Although the following description uses terms "first," "second," etc. to describe various elements, these elements should not be limited by the terms. These terms are only used to distinguish one element from another. For example, a first touch could be termed a second touch, and, similarly, a second touch could be termed a first touch, without departing from the scope of the various described embodiments. The first touch and the second touch are both touches, but they are not the same touch.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

### EXEMPLARY DEVICES

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touch pads), are, optionally, used. It should also be understood that, in some embodiments, the device is not a portable communications device, but is a desktop computer or a television with a touch-sensitive surface (e.g., a touch screen display and/or a touch pad). In some embodiments, the device does not have a touch screen display and/or a touch pad, but rather is capable of outputting display information (such as the user interfaces of the disclosure) for display on a separate display device, and capable of receiving input information from a separate input device having one or more input mechanisms (such as one or more buttons, a touch screen display and/or a touch pad). In some embodiments, the device has a display, but is capable of receiving input information from a separate input device having one or more input mechanisms (such as one or more buttons, a touch screen display and/or a touch pad). In some embodiments, the electronic device is a computer system that is in communication (e.g., via wireless communication, via wired communication) with a display generation component (e.g., a display device such as a head-mounted device (HMD), a display, a projector, a touch-sensitive display, or other device or component that presents visual content to a user, for example, on or in the display generation component itself or produced from the display generation component and visible elsewhere). The display generation component is configured to provide visual output, such as display via a CRT display, display via an LED display, or display via image projection. In some embodiments, the display generation component is integrated with the computer system. In some embodiments, the display generation component is separate from the computer system. As used herein, "displaying" content includes causing to display the content (e.g., video data rendered or decoded by display controller 156) by transmitting, via a wired or wireless connection, data (e.g., image data or video data) to an integrated or external display generation component to visually produce the content.

In the discussion that follows, an electronic device that includes a display and a touch-sensitive surface is described. It should be understood, however, that the electronic device optionally includes one or more other physical user-interface devices, such as a physical keyboard, a mouse and/or a joystick. Further, as described above, it should be understood that the described electronic device, display and touch-sensitive surface are optionally distributed amongst two or more devices. Therefore, as used in this disclosure, information displayed on the electronic device or by the electronic device is optionally used to describe information outputted by the electronic device for display on a separate display device (touch-sensitive or not). Similarly, as used in this disclosure, input received on the electronic device (e.g., touch input received on a touch-sensitive surface of the electronic device) is optionally used to describe input received on a separate input device, from which the electronic device receives input information.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, a television channel browsing application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

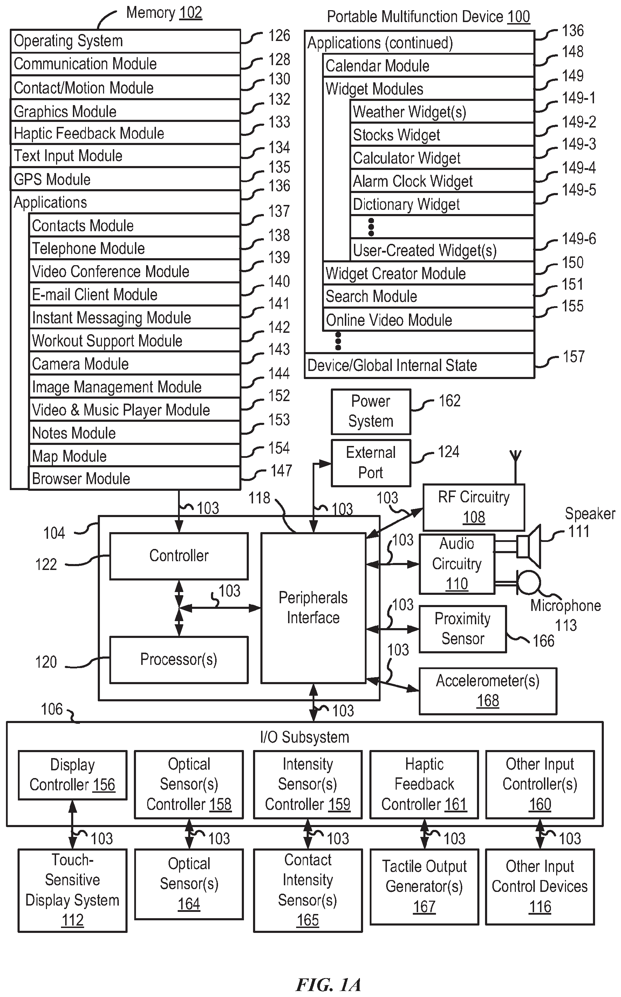

Attention is now directed toward embodiments of portable or non-portable devices with touch-sensitive displays, though the devices need not include touch-sensitive displays or displays in general, as described above. Fig. 1A is a block diagram illustrating portable or non-portable multifunction device 100 with touch-sensitive displays 112 in accordance with some embodiments. Touch-sensitive display 112 is sometimes called a "touch screen" for convenience, and is sometimes known as or called a touch-sensitive display system. Device 100 includes memory 102 (which optionally includes one or more computer readable storage mediums), memory controller 122, one or more processing units (CPU's) 120, peripherals interface 118, RF circuitry 108, audio circuitry 110, speaker 111, microphone 113, input/output (I/O) subsystem 106, other input or control devices 116, and external port 124. Device 100 optionally includes one or more optical sensors 164. Device 100 optionally includes one or more contact intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or touchpad 355 of device 300). These components optionally communicate over one or more communication buses or signal lines 103.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as a "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable or non-portable multifunction device, and that device 100 optionally has more or fewer components than shown, optionally combines two or more components, or optionally has a different configuration or arrangement of the components. The various components shown in Fig. 1A are implemented in hardware, software, or a combination of both hardware and software, including one or more signal processing and/or application specific integrated circuits. Further, the various components shown in Fig. 1A are optionally implemented across two or more devices; for example, a display and audio circuitry on a display device, a touch-sensitive surface on an input device, and remaining components on device 100. In such an embodiment, device 100 optionally communicates with the display device and/or the input device to facilitate operation of the system, as described in the disclosure, and the various components described herein that relate to display and/or input remain in device 100, or are optionally included in the display and/or input device, as appropriate.

Memory 102 optionally includes high-speed random access memory and optionally also includes non-volatile memory, such as one or more magnetic disk storage devices, flash memory devices, or other non-volatile solid-state memory devices. Memory controller 122 optionally controls access to memory 102 by other components of device 100.

Peripherals interface 118 can be used to couple input and output peripherals of the device to CPU 120 and memory 102. The one or more processors 120 run or execute various software programs and/or sets of instructions stored in memory 102 to perform various functions for device 100 and to process data.

In some embodiments, peripherals interface 118, CPU 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 108 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.11ac), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

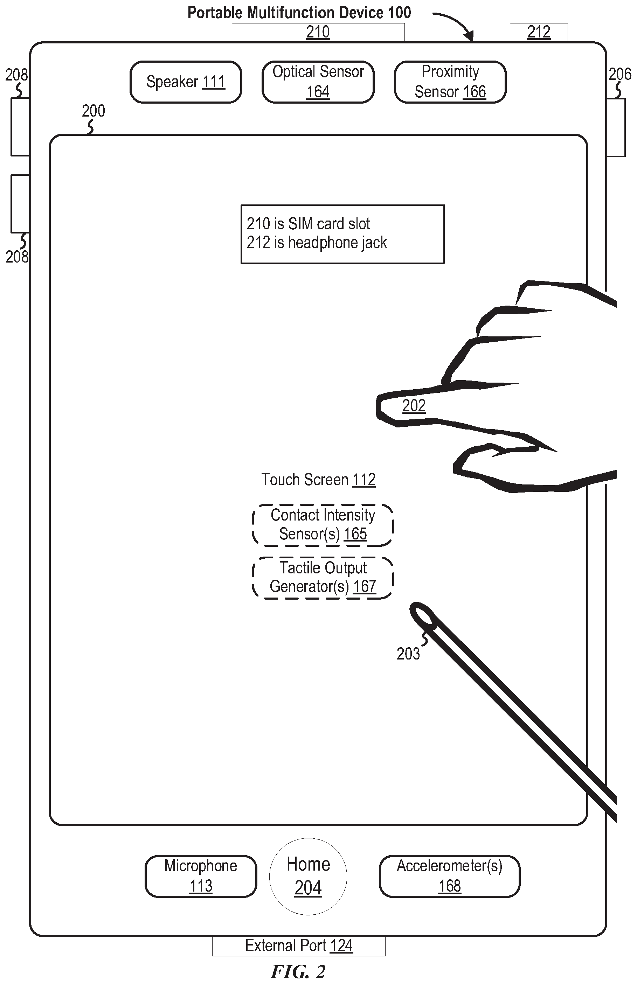

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack (e.g., 212, Fig. 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 optionally includes display controller 156, optical sensor controller 158, intensity sensor controller 159, haptic feedback controller 161 and one or more input controllers 160 for other input or control devices. The one or more input controllers 160 receive/send electrical signals from/to other input or control devices 116. The other input control devices 116 optionally include physical buttons (e.g., push buttons, rocker buttons, etc.), dials, slider switches, joysticks, click wheels, and so forth. In some alternate embodiments, input controller(s) 160 are, optionally, coupled to any (or none) of the following: a keyboard, infrared port, USB port, and a pointer device such as a mouse. The one or more buttons (e.g., 208, Fig. 2) optionally include an up/down button for volume control of speaker 111 and/or microphone 113. The one or more buttons optionally include a push button (e.g., 206, Fig. 2).

A quick press of the push button optionally disengages a lock of touch screen 112 or optionally begins a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849, which is hereby incorporated by reference in its entirety. A longer press of the push button (e.g., 206) optionally turns power to device 100 on or off. The functionality of one or more of the buttons are, optionally, user-customizable. Touch screen 112 is used to implement virtual or soft buttons and one or more soft keyboards.

Touch-sensitive display 112 provides an input interface and an output interface between the device and a user. As described above, the touch-sensitive operation and the display operation of touch-sensitive display 112 are optionally separated from each other, such that a display device is used for display purposes and a touch-sensitive surface (whether display or not) is used for input detection purposes, and the described components and functions are modified accordingly. However, for simplicity, the following description is provided with reference to a touch-sensitive display. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output corresponds to user-interface objects.

Touch screen 112 has a touch-sensitive surface, sensor or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and convert the detected contact into interaction with user-interface objects (e.g., one or more soft keys, icons, web pages or images) that are displayed on touch screen 112. In an exemplary embodiment, a point of contact between touch screen 112 and the user corresponds to a finger of the user.

Touch screen 112 optionally uses LCD (liquid crystal display) technology, LPD (light emitting polymer display) technology, or LED (light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone^{®}, iPod Touch^{®}, and iPad^{®} from Apple Inc. of Cupertino, California.

A touch-sensitive display in some embodiments of touch screen 112 is, optionally, analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1, each of which is hereby incorporated by reference in its entirety. However, touch screen 112 displays visual output from device 100, whereas touch-sensitive touchpads do not provide visual output.

A touch-sensitive display in some embodiments of touch screen 112 is described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006. All of these applications are incorporated by reference herein in their entirety.

Touch screen 112 optionally has a video resolution in excess of 100 dpi. In some embodiments, the touch screen has a video resolution of approximately 160 dpi. The user optionally makes contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad (not shown) for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable or non-portable devices.

Device 100 optionally also includes one or more optical sensors 164. Fig. 1A shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lenses, and converts the light to data representing an image. In conjunction with imaging module 143 (also called a camera module), optical sensor 164 optionally captures still images or video. In some embodiments, an optical sensor is located on the back of device 100, opposite touch screen display 112 on the front of the device so that the touch screen display is enabled for use as a viewfinder for still and/or video image acquisition. In some embodiments, an optical sensor is located on the front of the device so that the user's image is, optionally, obtained for video conferencing while the user views the other video conference participants on the touch screen display. In some embodiments, the position of optical sensor 164 can be changed by the user (e.g., by rotating the lens and the sensor in the device housing) so that a single optical sensor 164 is used along with the touch screen display for both video conferencing and still and/or video image acquisition.

Device 100 optionally also includes one or more contact intensity sensors 165. Fig. 1A shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen display 112 which is located on the front of device 100.

Device 100 optionally also includes one or more proximity sensors 166. Fig. 1A shows proximity sensor 166 coupled to peripherals interface 118. Alternately, proximity sensor 166 is, optionally, coupled to input controller 160 in I/O subsystem 106. Proximity sensor 166 optionally performs as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals," which are hereby incorporated by reference in their entirety. In some embodiments, the proximity sensor turns off and disables touch screen 112 when the multifunction device is placed near the user's ear (e.g., when the user is making a phone call).

Device 100 optionally also includes one or more tactile output generators 167. Fig. 1A shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch screen display 112 which is located on the front of device 100.

Device 100 optionally also includes one or more accelerometers 168. Fig. 1A shows accelerometer 168 coupled to peripherals interface 118. Alternately, accelerometer 168 is, optionally, coupled to an input controller 160 in I/O subsystem 106. Accelerometer 168 optionally performs as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer," both of which are incorporated by reference herein in their entirety. In some embodiments, information is displayed on the touch screen display in a portrait view or a landscape view based on an analysis of data received from the one or more accelerometers. Device 100 optionally includes, in addition to accelerometer(s) 168, a magnetometer (not shown) and a GPS (or GLONASS or other global navigation system) receiver (not shown) for obtaining information concerning the location and orientation (e.g., portrait or landscape) of device 100.

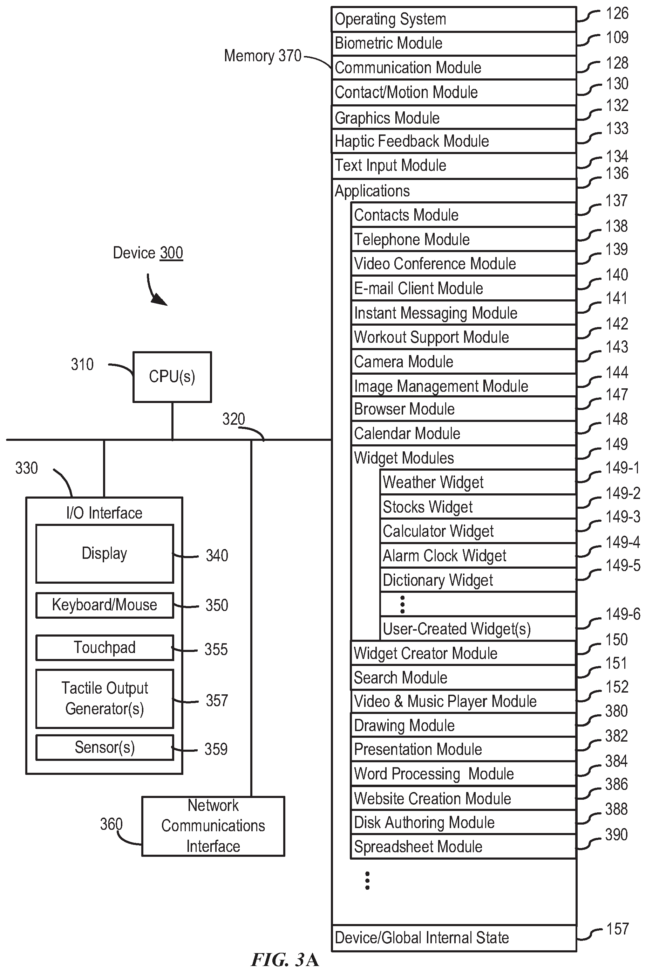

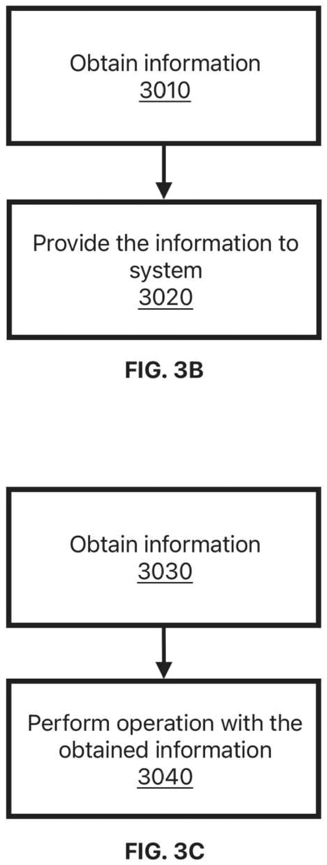

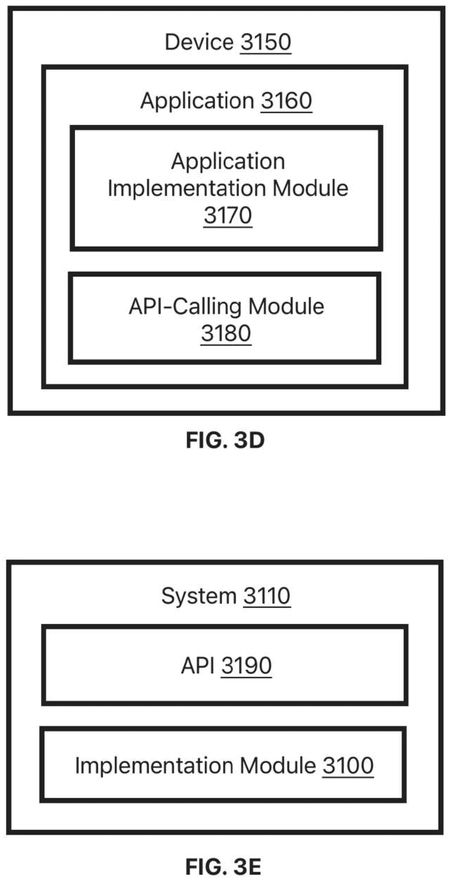

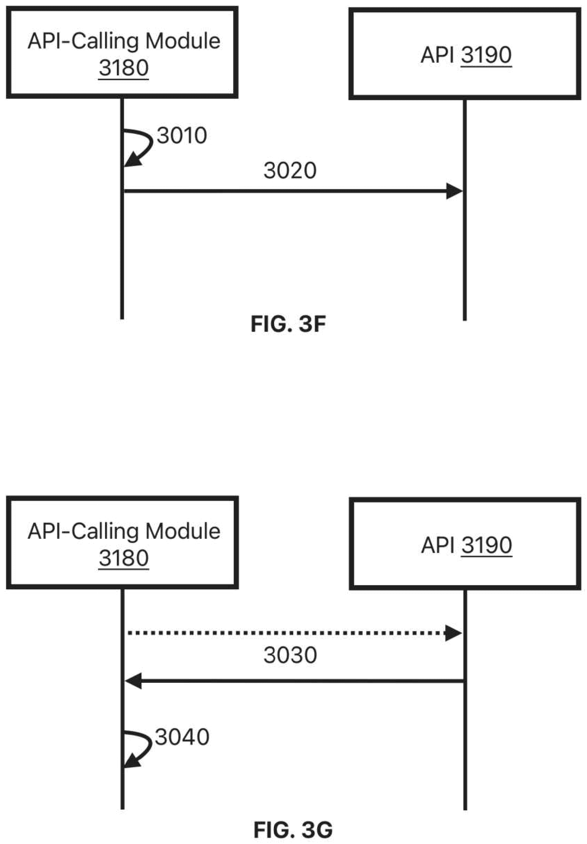

In some embodiments, the software components stored in memory 102 include operating system 126, communication module (or set of instructions) 128, contact/motion module (or set of instructions) 130, graphics module (or set of instructions) 132, text input module (or set of instructions) 134, Global Positioning System (GPS) module (or set of instructions) 135, and applications (or sets of instructions) 136. Furthermore, in some embodiments, memory 102 (Fig. 1A) or 370 (Fig. 3A) stores device/global internal state 157, as shown in Figs. 1A and 3. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with the 30-pin connector used on iPod (trademark of Apple Inc.) devices.

Contact/motion module 130 optionally detects contact with touch screen 112 (in conjunction with display controller 156) and other touch-sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact) determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has "clicked" on an icon). In some embodiments at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined threshold values without changing the trackpad or touch screen display hardware. Additionally, in some implementations a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 132 includes various known software components for rendering and displaying graphics on touch screen 112 or other display, including components for changing the visual impact (e.g., brightness, transparency, saturation, contrast or other visual property) of graphics that are displayed. As used herein, the term "graphics" includes any object that can be displayed to a user, including without limitation text, web pages, icons (such as user-interface objects including soft keys), digital images, videos, animations and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts 137, e-mail 140, IM 141, browser 147, and any other application that needs text input).

GPS module 135 determines the location of the device and provides this information for use in various applications (e.g., to telephone 138 for use in location-based dialing, to camera 143 as picture/video metadata, and to applications that provide location-based services such as weather widgets, local yellow page widgets, and map/navigation widgets).

Applications 136 optionally include the following modules (or sets of instructions), or a subset or superset thereof:
- contacts module 137 (sometimes called an address book or contact list);
- telephone module 138;
- video conferencing module 139;
- e-mail client module 140;
- instant messaging (IM) module 141;
- workout support module 142;
- camera module 143 for still and/or video images;
- image management module 144;
- video player module;
- music player module;
- browser module 147;
- calendar module 148;
- widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- widget creator module 150 for making user-created widgets 149-6;
- search module 151;
- video and music player module 152, which merges video player module and music player module;
- notes module 153;
- map module 154; and/or
- online video module 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact/motion module 130, graphics module 132, and text input module 134, contacts module 137 are, optionally, used to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone 138, video conference module 139, e-mail 140, or IM 141; and so forth.

In conjunction with RF circuitry 108, audio circuitry 110, speaker 111, microphone 113, touch screen 112, display controller 156, contact/motion module 130, graphics module 132, and text input module 134, telephone module 138 are optionally, used to enter a sequence of characters corresponding to a telephone number, access one or more telephone numbers in contacts module 137, modify a telephone number that has been entered, dial a respective telephone number, conduct a conversation, and disconnect or hang up when the conversation is completed. As noted above, the wireless communication optionally uses any of a plurality of communications standards, protocols, and technologies.

In conjunction with RF circuitry 108, audio circuitry 110, speaker 111, microphone 113, touch screen 112, display controller 156, optical sensor 164, optical sensor controller 158, contact/motion module 130, graphics module 132, text input module 134, contacts module 137, and telephone module 138, video conference module 139 includes executable instructions to initiate, conduct, and terminate a video conference between a user and one or more other participants in accordance with user instructions.

In conjunction with RF circuitry 108, touch screen 112, display controller 156, contact/motion module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact/motion module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages optionally include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact/motion module 130, graphics module 132, text input module 134, GPS module 135, map module 154, and music player module, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 112, display controller 156, optical sensor(s) 164, optical sensor controller 158, contact/motion module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact/motion module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch screen 112, display controller 156, contact/motion module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display controller 156, contact/motion module 130, graphics module 132, text input module 134, e-mail client module 140, and browser module 147, calendar module 148 includes executable instructions to create, display, modify, and store calendars and data associated with calendars (e.g., calendar entries, to -do lists, etc.) in accordance with user instructions.

In conjunction with RF circuitry 108, touch screen 112, display controller 156, contact/motion module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 108, touch screen 112, display controller 156, contact/motion module 130, graphics module 132, text input module 134, and browser module 147, the widget creator module 150 are, optionally, used by a user to create widgets (e.g., turning a user-specified portion of a web page into a widget).

In conjunction with touch screen 112, display controller 156, contact/motion module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display controller 156, contact/motion module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present, or otherwise play back videos (e.g., on touch screen 112 or on an external, connected display via external port 124). In some embodiments, device 100 optionally includes the functionality of an MP3 player, such as an iPod (trademark of Apple Inc.).

In conjunction with touch screen 112, display controller 156, contact/motion module 130, graphics module 132, and text input module 134, notes module 153 includes executable instructions to create and manage notes, to -do lists, and the like in accordance with user instructions.

In conjunction with RF circuitry 108, touch screen 112, display controller 156, contact/motion module 130, graphics module 132, text input module 134, GPS module 135, and browser module 147, map module 154 are, optionally, used to receive, display, modify, and store maps and data associated with maps (e.g., driving directions, data on stores and other points of interest at or near a particular location, and other location-based data) in accordance with user instructions.

In conjunction with touch screen 112, display controller 156, contact/motion module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007, the contents of which are hereby incorporated by reference in their entirety.

Each of the above -identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs, procedures, or modules, and thus various subsets of these modules are, optionally, combined or otherwise rearranged in various embodiments. For example, video player module is, optionally, combined with music player module into a single module (e.g., video and music player module 152, Fig. 1A). In some embodiments, memory 102 optionally stores a subset of the modules and data structures identified above. Furthermore, memory 102 optionally stores additional modules and data structures not described above.

In some embodiments, device 100 is a device where operation of a predefined set of functions on the device is performed exclusively through a touch screen and/or a touchpad. By using a touch screen and/or a touchpad as the primary input control device for operation of device 100, the number of physical input control devices (such as push buttons, dials, and the like) on device 100 is, optionally, reduced.

The predefined set of functions that are performed exclusively through a touch screen and/or a touchpad optionally include navigation between user interfaces. In some embodiments, the touchpad, when touched by the user, navigates device 100 to a main, home, or root menu from any user interface that is displayed on device 100. In such embodiments, a "menu button" is implemented using a touchpad. In some other embodiments, the menu button is a physical push button or other physical input control device instead of a touchpad.

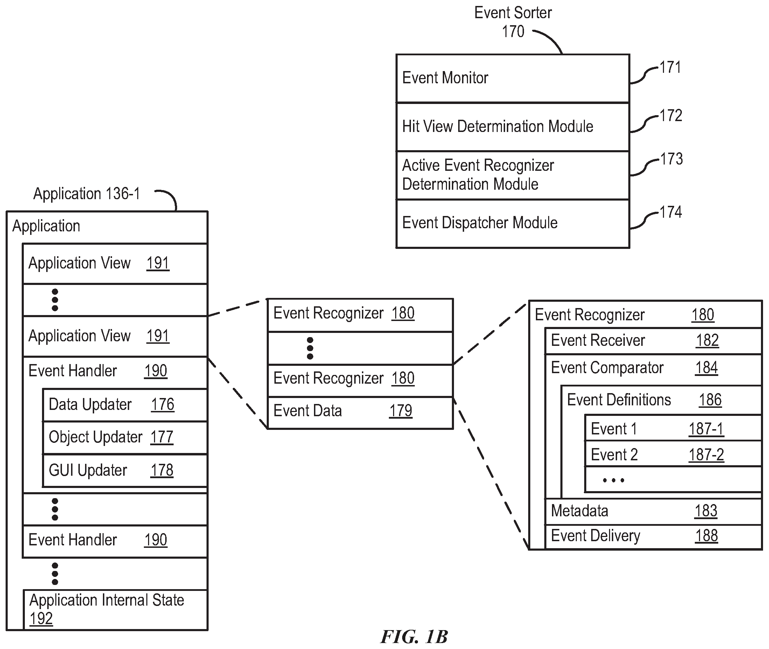

Fig. 1B is a block diagram illustrating exemplary components for event handling in accordance with some embodiments. In some embodiments, memory 102 (Fig. 1A) or 370 (Fig. 3A) includes event sorter 170 (e.g., in operating system 126) and a respective application 136-1 (e.g., any of the aforementioned applications 137-151, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch-sensitive display 112 when the application is active or executing. In some embodiments, device/global internal state 157 is used by event sorter 170 to determine which application(s) is (are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripherals interface 118 transmits event information only when there is a significant event (e.g., receiving an input above a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views when touch-sensitive display 112 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 172, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit (not shown) or a higher level object from which application 136-1 inherits methods and other properties. In some embodiments, a respective event handler 190 includes one or more of: data updater 176, object updater 177, GUI updater 178, and/or event data 179 received from event sorter 170. Event handler 190 optionally utilizes or calls data updater 176, object updater 177, or GUI updater 178 to update the application internal state 192. Alternatively, one or more of the application views 191 include one or more respective event handlers 190. Also, in some embodiments, one or more of data updater 176, object updater 177, and GUI updater 178 are included in a respective application view 191.

A respective event recognizer 180 receives event information (e.g., event data 179) from event sorter 170 and identifies an event from the event information. Event recognizer 180 includes event receiver 182 and event comparator 184. In some embodiments, event recognizer 180 also includes at least a subset of: metadata 183, and event delivery instructions 188 (which optionally include sub-event delivery instructions).

Event receiver 182 receives event information from event sorter 170. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event (187) include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and liftoff of the touch (touch end). In some embodiments, the event also includes information for one or more associated event handlers 190.

In some embodiments, event definition 187 includes a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event (187) also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers interact, or are enabled to interact, with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module. In some embodiments, object updater 177 creates and updates objects used in application 136-1. For example, object updater 177 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

Fig. 2 illustrates a portable or non-portable multifunction device 100 having a touch screen 112 in accordance with some embodiments. As stated above, multifunction device 100 is described as having the various illustrated structures (such as touch screen 112, speaker 111, accelerometer 168, microphone 113, etc.); however, it is understood that these structures optionally reside on separate devices. For example, display-related structures (e.g., display, speaker, etc.) and/or functions optionally reside on a separate display device, input-related structures (e.g., touch-sensitive surface, microphone, accelerometer, etc.) and/or functions optionally reside on a separate input device, and remaining structures and/or functions optionally reside on multifunction device 100.

The touch screen 112 optionally displays one or more graphics within user interface (UI) 200. In this embodiment, as well as others described below, a user is enabled to select one or more of the graphics by making a gesture on the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward) and/or a rolling of a finger (from right to left, left to right, upward and/or downward) that has made contact with device 100. In some implementations or circumstances, inadvertent contact with a graphic does not select the graphic. For example, a swipe gesture that sweeps over an application icon optionally does not select the corresponding application when the gesture corresponding to selection is a tap.

Device 100 optionally also includes one or more physical buttons, such as "home" or menu button 204. As previously described, menu button 204 is, optionally, used to navigate to any application 136 in a set of applications that are, optionally executed on device 100. Alternatively, in some embodiments, the menu button is implemented as a soft key in a GUI displayed on touch screen 112.

In one embodiment, device 100 includes touch screen 112, menu button 204, push button 206 for powering the device on/off and locking the device, volume adjustment button(s) 208, Subscriber Identity Module (SIM) card slot 210, head set jack 212, and docking/charging external port 124. Push button 206 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 100 also accepts verbal input for activation or deactivation of some functions through microphone 113. Device 100 also, optionally, includes one or more contact intensity sensors 165 for detecting intensity of contacts on touch screen 112 and/or one or more tactile output generators 167 for generating tactile outputs for a user of device 100.

Fig. 3A is a block diagram of an exemplary multifunction device with a display and a touch-sensitive surface in accordance with some embodiments. Device 300 need not include the display and the touch-sensitive surface, as described above, but rather, in some embodiments, optionally communicates with the display and the touch-sensitive surface on other devices. Additionally, device 300 need not be portable. In some embodiments, device 300 is a laptop computer, a desktop computer, a tablet computer, a multimedia player device (such as a television or a set-top box), a navigation device, an educational device (such as a child's learning toy), a gaming system, or a control device (e.g., a home or industrial controller). Device 300 typically includes one or more processing units (CPU's) 310, one or more network or other communications interfaces 360, memory 370, and one or more communication buses 320 for interconnecting these components. Communication buses 320 optionally include circuitry (sometimes called a chipset) that interconnects and controls communications between system components. Device 300 includes input/output (I/O) interface 330 comprising display 340, which is typically a touch screen display. I/O interface 330 also optionally includes a keyboard and/or mouse (or other pointing device) 350 and touchpad 355, tactile output generator 357 for generating tactile outputs on device 300 (e.g., similar to tactile output generator(s) 167 described above with reference to Fig. 1A), sensors 359 (e.g., optical, acceleration, proximity, touch-sensitive, and/or contact intensity sensors similar to contact intensity sensor(s) 165 described above with reference to Fig. 1A). Memory 370 includes high-speed random access memory, such as DRAM, SRAM, DDR RAM or other random access solid state memory devices; and optionally includes non-volatile memory, such as one or more magnetic disk storage devices, optical disk storage devices, flash memory devices, or other non-volatile solid state storage devices. Memory 370 optionally includes one or more storage devices remotely located from CPU(s) 310. In some embodiments, memory 370 stores programs, modules, and data structures analogous to the programs, modules, and data structures stored in memory 102 of portable or non-portable multifunction device 100 (Fig. 1A), or a subset thereof. Furthermore, memory 370 optionally stores additional programs, modules, and data structures not present in memory 102 of portable or non-portable multifunction device 100. For example, memory 370 of device 300 optionally stores drawing module 380, presentation module 382, word processing module 384, website creation module 386, disk authoring module 388, and/or spreadsheet module 390, while memory 102 of portable or non-portable multifunction device 100 (Fig. 1A) optionally does not store these modules.

Each of the above identified elements in Fig. 3A are, optionally, stored in one or more of the previously mentioned memory devices. Each of the above identified modules corresponds to a set of instructions for performing a function described above. The above identified modules or programs (e.g., sets of instructions) need not be implemented as separate software programs, procedures or modules, and thus various subsets of these modules are, optionally, combined or otherwise re-arranged in various embodiments. In some embodiments, memory 370 optionally stores a subset of the modules and data structures identified above. Furthermore, memory 370 optionally stores additional modules and data structures not described above.

Implementations within the scope of the present disclosure can be partially or entirely realized using a tangible computer-readable storage medium (or multiple tangible computer-readable storage media of one or more types) encoding one or more computer-readable instructions. It should be recognized that computer-readable instructions can be organized in any format, including applications, widgets, processes, software, and/or components.

Implementations within the scope of the present disclosure include a computer-readable storage medium that encodes instructions organized as an application (e.g., application 3160) that, when executed by one or more processing units, control an electronic device (e.g., device 3150) to perform the method of FIG. 3B, the method of FIG. 3C, and/or one or more other processes and/or methods described herein.

It should be recognized that application 3160 (shown in FIG. 3D) can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application. In some embodiments, application 3160 is an application that is pre-installed on device 3150 at purchase (e.g., a first-party application). In some embodiments, application 3160 is an application that is provided to device 3150 via an operating system update file (e.g., a first-party application or a second-party application). In some embodiments, application 3160 is an application that is provided via an application store. In some embodiments, the application store can be an application store that is pre-installed on device 3150 at purchase (e.g., a first-party application store). In some embodiments, the application store is a third-party application store (e.g., an application store that is provided by another application store, downloaded via a network, and/or read from a storage device).

Referring to FIG. 3B and FIG. 3F, application 3160 obtains information (e.g., 3010). In some embodiments, at 3010, information is obtained from at least one hardware component of device 3150. In some embodiments, at 3010, information is obtained from at least one software module of device 3150. In some embodiments, at 3010, information is obtained from at least one hardware component external to device 3150 (e.g., a peripheral device, an accessory device, and/or a server). In some embodiments, the information obtained at 3010 includes positional information, time information, notification information, user information, environment information, electronic device state information, weather information, media information, historical information, event information, hardware information, and/or motion information. In some embodiments, in response to and/or after obtaining the information at 3010, application 3160 provides the information to a system (e.g., 3020).

In some embodiments, the system (e.g., 3110 shown in FIG. 3E) is an operating system hosted on device 3150. In some embodiments, the system (e.g., 3110 shown in FIG. 3E) is an external device (e.g., a server, a peripheral device, an accessory, and/or a personal computing device) that includes an operating system.

Referring to FIG. 3C and FIG. 3G, application 3160 obtains information (e.g., 3030). In some embodiments, the information obtained at 3030 includes positional information, time information, notification information, user information, environment information electronic device state information, weather information, media information, historical information, event information, hardware information, and/or motion information. In response to and/or after obtaining the information at 3030, application 3160 performs an operation with the information (e.g., 3040). In some embodiments, the operation performed at 3040 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of system 3110 based on the information.

In some embodiments, one or more steps of the method of FIG. 3B and/or the method of FIG. 3C is performed in response to a trigger. In some embodiments, the trigger includes detection of an event, a notification received from system 3110, a user input, and/or a response to a call to an API provided by system 3110.

In some embodiments, the instructions of application 3160, when executed, control device 3150 to perform the method of FIG. 3B and/or the method of FIG. 3C by calling an application programming interface (API) (e.g., API 3190) provided by system 3110. In some embodiments, application 3160 performs at least a portion of the method of FIG. 3B and/or the method of FIG. 3C without calling API 3190.

In some embodiments, one or more steps of the method of FIG. 3B and/or the method of FIG. 3C includes calling an API (e.g., API 3190) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

Referring to FIG. 3D, device 3150 is illustrated. In some embodiments, device 3150 is a personal computing device, a smart phone, a smart watch, a fitness tracker, a head mounted display (HMD) device, a media device, a communal device, a speaker, a television, and/or a tablet. As illustrated in FIG. 3D, device 3150 includes application 3160 and an operating system (e.g., system 3110 shown in FIG. 3E). Application 3160 includes application implementation module 3170 and API-calling module 3180. System 3110 includes API 3190 and implementation module 3100. It should be recognized that device 3150, application 3160, and/or system 3110 can include more, fewer, and/or different components than illustrated in FIGS. 3D and 3E.

In some embodiments, application implementation module 3170 includes a set of one or more instructions corresponding to one or more operations performed by application 3160. For example, when application 3160 is a messaging application, application implementation module 3170 can include operations to receive and send messages. In some embodiments, application implementation module 3170 communicates with API-calling module 3180 to communicate with system 3110 via API 3190 (shown in FIG. 3E).

In some embodiments, API 3190 is a software module (e.g., a collection of computer-readable instructions) that provides an interface that allows a different module (e.g., API-calling module 3180) to access and/or use one or more functions, methods, procedures, data structures, classes, and/or other services provided by implementation module 3100 of system 3110. For example, API-calling module 3180 can access a feature of implementation module 3100 through one or more API calls or invocations (e.g., embodied by a function or a method call) exposed by API 3190 (e.g., a software and/or hardware module that can receive API calls, respond to API calls, and/or send API calls) and can pass data and/or control information using one or more parameters via the API calls or invocations. In some embodiments, API 3190 allows application 3160 to use a service provided by a Software Development Kit (SDK) library. In some embodiments, application 3160 incorporates a call to a function or method provided by the SDK library and provided by API 3190 or uses data types or objects defined in the SDK library and provided by API 3190. In some embodiments, API-calling module 3180 makes an API call via API 3190 to access and use a feature of implementation module 3100 that is specified by API 3190. In such embodiments, implementation module 3100 can return a value via API 3190 to API-calling module 3180 in response to the API call. The value can report to application 3160 the capabilities or state of a hardware component of device 3150, including those related to aspects such as input capabilities and state, output capabilities and state, processing capability, power state, storage capacity and state, and/or communications capability. In some embodiments, API 3190 is implemented in part by firmware, microcode, or other low level logic that executes in part on the hardware component.

In some embodiments, API 3190 allows a developer of API-calling module 3180 (which can be a third-party developer) to leverage a feature provided by implementation module 3100. In such embodiments, there can be one or more API-calling modules (e.g., including API-calling module 3180) that communicate with implementation module 3100. In some embodiments, API 3190 allows multiple API-calling modules written in different programming languages to communicate with implementation module 3100 (e.g., API 3190 can include features for translating calls and returns between implementation module 3100 and API-calling module 3180) while API 3190 is implemented in terms of a specific programming language. In some embodiments, API-calling module 3180 calls APIs from different providers such as a set of APIs from an OS provider, another set of APIs from a plug-in provider, and/or another set of APIs from another provider (e.g., the provider of a software library) or creator of the another set of APIs.

Examples of API 3190 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, photos API, camera API, and/or image processing API. In some embodiments, the sensor API is an API for accessing data associated with a sensor of device 3150. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor, and/or biometric sensor.

In some embodiments, implementation module 3100 is a system (e.g., operating system and/or server system) software module (e.g., a collection of computer-readable instructions) that is constructed to perform an operation in response to receiving an API call via API 3190. In some embodiments, implementation module 3100 is constructed to provide an API response (via API 3190) as a result of processing an API call. By way of example, implementation module 3100 and API-calling module 3180 can each be any one of an operating system, a library, a device driver, an API, an application program, or other module. It should be understood that implementation module 3100 and API-calling module 3180 can be the same or different type of module from each other. In some embodiments, implementation module 3100 is embodied at least in part in firmware, microcode, or hardware logic.

In some embodiments, implementation module 3100 returns a value through API 3190 in response to an API call from API-calling module 3180. While API 3190 defines the syntax and result of an API call (e.g., how to invoke the API call and what the API call does), API 3190 might not reveal how implementation module 3100 accomplishes the function specified by the API call. Various API calls are transferred via the one or more application programming interfaces between API-calling module 3180 and implementation module 3100. Transferring the API calls can include issuing, initiating, invoking, calling, receiving, returning, and/or responding to the function calls or messages. In other words, transferring can describe actions by either of API-calling module 3180 or implementation module 3100. In some embodiments, a function call or other invocation of API 3190 sends and/or receives one or more parameters through a parameter list or other structure.

In some embodiments, implementation module 3100 provides more than one API, each providing a different view of or with different aspects of functionality implemented by implementation module 3100. For example, one API of implementation module 3100 can provide a first set of functions and can be exposed to third-party developers, and another API of implementation module 3100 can be hidden (e.g., not exposed) and provide a subset of the first set of functions and also provide another set of functions, such as testing or debugging functions which are not in the first set of functions. In some embodiments, implementation module 3100 calls one or more other components via an underlying API and thus is both an API-calling module and an implementation module. It should be recognized that implementation module 3100 can include additional functions, methods, classes, data structures, and/or other features that are not specified through API 3190 and are not available to API-calling module 3180. It should also be recognized that API-calling module 3180 can be on the same system as implementation module 3100 or can be located remotely and access implementation module 3100 using API 3190 over a network. In some embodiments, implementation module 3100, API 3190, and/or API-calling module 3180 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

An application programming interface (API) is an interface between a first software process and a second software process that specifies a format for communication between the first software process and the second software process. Limited APIs (e.g., private APIs or partner APIs) are APIs that are accessible to a limited set of software processes (e.g., only software processes within an operating system or only software processes that are approved to access the limited APIs). Public APIs that are accessible to a wider set of software processes. Some APIs enable software processes to communicate about or set a state of one or more input devices (e.g., one or more touch sensors, proximity sensors, visual sensors, motion/orientation sensors, pressure sensors, intensity sensors, sound sensors, wireless proximity sensors, biometric sensors, buttons, switches, rotatable elements, and/or external controllers). Some APIs enable software processes to communicate about and/or set a state of one or more output generation components (e.g., one or more audio output generation components, one or more display generation components, and/or one or more tactile output generation components). Some APIs enable particular capabilities (e.g., scrolling, handwriting, text entry, image editing, and/or image creation) to be accessed, performed, and/or used by a software process (e.g., generating outputs for use by a software process based on input from the software process). Some APIs enable content from a software process to be inserted into a template and displayed in a user interface that has a layout and/or behaviors that are specified by the template.

Many software platforms include a set of frameworks that provides the core objects and core behaviors that a software developer needs to build software applications that can be used on the software platform. Software developers use these objects to display content onscreen, to interact with that content, and to manage interactions with the software platform. Software applications rely on the set of frameworks for their basic behavior, and the set of frameworks provides many ways for the software developer to customize the behavior of the application to match the specific needs of the software application. Many of these core objects and core behaviors are accessed via an API. An API will typically specify a format for communication between software processes, including specifying and grouping available variables, functions, and protocols. An API call (sometimes referred to as an API request) will typically be sent from a sending software process to a receiving software process as a way to accomplish one or more of the following: the sending software process requesting information from the receiving software process (e.g., for the sending software process to take action on), the sending software process providing information to the receiving software process (e.g., for the receiving software process to take action on), the sending software process requesting action by the receiving software process, or the sending software process providing information to the receiving software process about action taken by the sending software process. Interaction with a device (e.g., using a user interface) will in some circumstances include the transfer and/or receipt of one or more API calls (e.g., multiple API calls) between multiple different software processes (e.g., different portions of an operating system, an application and an operating system, or different applications) via one or more APIs (e.g., via multiple different APIs). For example, when an input is detected the direct sensor data is frequently processed into one or more input events that are provided (e.g., via an API) to a receiving software process that makes some determination based on the input events, and then sends (e.g., via an API) information to a software process to perform an operation (e.g., change a device state and/or user interface) based on the determination. While a determination and an operation performed in response could be made by the same software process, alternatively the determination could be made in a first software process and relayed (e.g., via an API) to a second software process, that is different from the first software process, that causes the operation to be performed by the second software process. Alternatively, the second software process could relay instructions (e.g., via an API) to a third software process that is different from the first software process and/or the second software process to perform the operation. It should be understood that some or all user interactions with a computer system could involve one or more API calls within a step of interacting with the computer system (e.g., between different software components of the computer system or between a software component of the computer system and a software component of one or more remote computer systems). It should be understood that some or all user interactions with a computer system could involve one or more API calls between steps of interacting with the computer system (e.g., between different software components of the computer system or between a software component of the computer system and a software component of one or more remote computer systems).

In some embodiments, the application can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application.

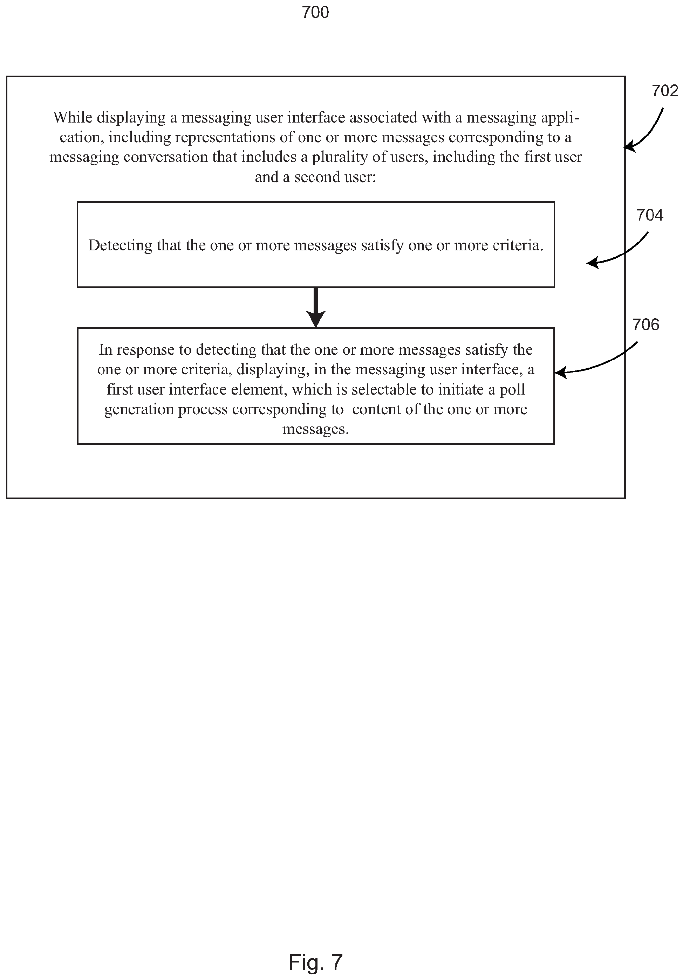

In some embodiments, the application is an application that is pre-installed on the first computer system at purchase (e.g., a first-party application). In some embodiments, the application is an application that is provided to the first computer system via an operating system update file (e.g., a first-party application). In some embodiments, the application is an application that is provided via an application store. In some embodiments, the application store is pre-installed on the first computer system at purchase (e.g., a first-party application store) and allows download of one or more applications. In some embodiments, the application store is a third-party application store (e.g., an application store that is provided by another device, downloaded via a network, and/or read from a storage device). In some embodiments, the application is a third-party application (e.g., an app that is provided by an application store, downloaded via a network, and/or read from a storage device). In some embodiments, the application controls the first computer system to perform method 700 (FIG. 7), and/or method 900, by calling an application programming interface (API) provided by the system process using one or more parameters.

In some embodiments, exemplary APIs provided by the system process include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, a photos API, a camera API, and/or an image processing API.

In some embodiments, at least one API is a software module (e.g., a collection of computer-readable instructions) that provides an interface that allows a different module (e.g., API-calling module) to access and use one or more functions, methods, procedures, data structures, classes, and/or other services provided by an implementation module of the system process. The API can define one or more parameters that are passed between the API-calling module and the implementation module. In some embodiments, API 3190 defines a first API call that can be provided by API-calling module 3180. The implementation module is a system software module (e.g., a collection of computer-readable instructions) that is constructed to perform an operation in response to receiving an API call via the API. In some embodiments, the implementation module is constructed to provide an API response (via the API) as a result of processing an API call. In some embodiments, the implementation module is included in the device (e.g., 3150) that runs the application. In some embodiments, the implementation module is included in an electronic device that is separate from the device that runs the application.

Attention is now directed towards embodiments of user interfaces that are, optionally, implemented on, for example, portable multifunction device 100.

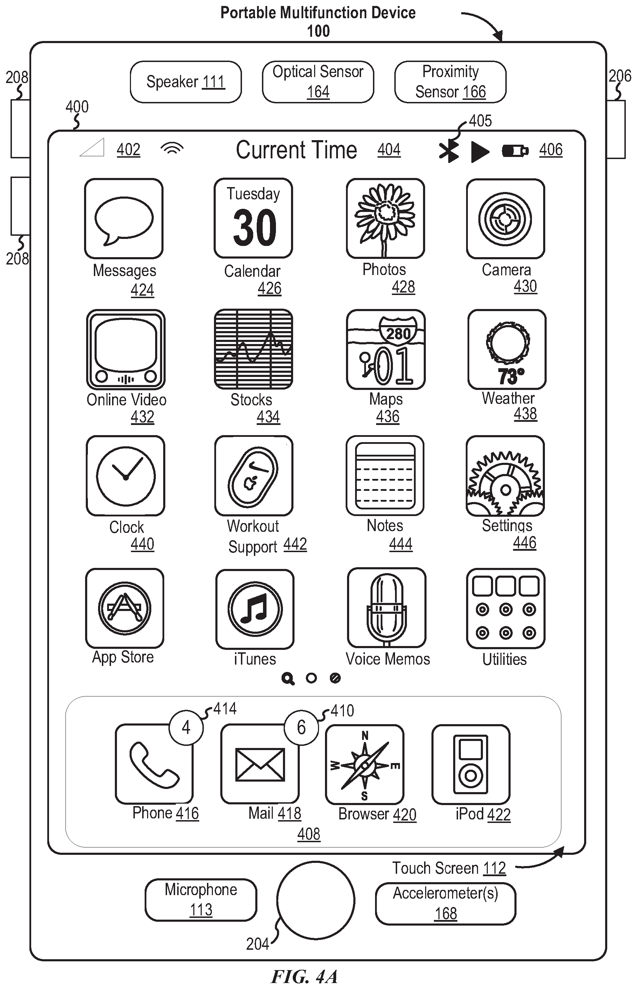

Fig. 4A illustrates an exemplary user interface for a menu of applications on portable multifunction device 100 in accordance with some embodiments. Similar user interfaces are, optionally, implemented on device 300. In some embodiments, user interface 400 includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   - Icon 416 for telephone module 138, labeled "Phone," which optionally includes an indicator 414 of the number of missed calls or voicemail messages;
   - Icon 418 for e-mail client module 140, labeled "Mail," which optionally includes an indicator 410 of the number of unread e-mails;
   - Icon 420 for browser module 147, labeled "Browser;" and
   - Icon 422 for video and music player module 152, also referred to as iPod (trademark of Apple Inc.) module 152, labeled "iPod;" and
- Icons for other applications, such as:
   - Icon 424 for IM module 141, labeled "Messages;"
   - Icon 426 for calendar module 148, labeled "Calendar;"
   - Icon 428 for image management module 144, labeled "Photos;"
   - Icon 430 for camera module 143, labeled "Camera;"
   - Icon 432 for online video module 155, labeled "Online Video;"
   - Icon 434 for stocks widget 149-2, labeled "Stocks;"
   - Icon 436 for map module 154, labeled "Maps;"
   - Icon 438 for weather widget 149-1, labeled "Weather;"
   - Icon 440 for alarm clock widget 149-4, labeled "Clock;"
   - Icon 442 for workout support module 142, labeled "Workout Support;"
   - Icon 444 for notes module 153, labeled "Notes;" and
   - Icon 446 for a settings application or module, labeled "Settings," which provides access to settings for device 100 and its various applications 136.

It should be noted that the icon labels illustrated in Fig. 4A are merely exemplary. For example, icon 422 for video and music player module 152 is labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

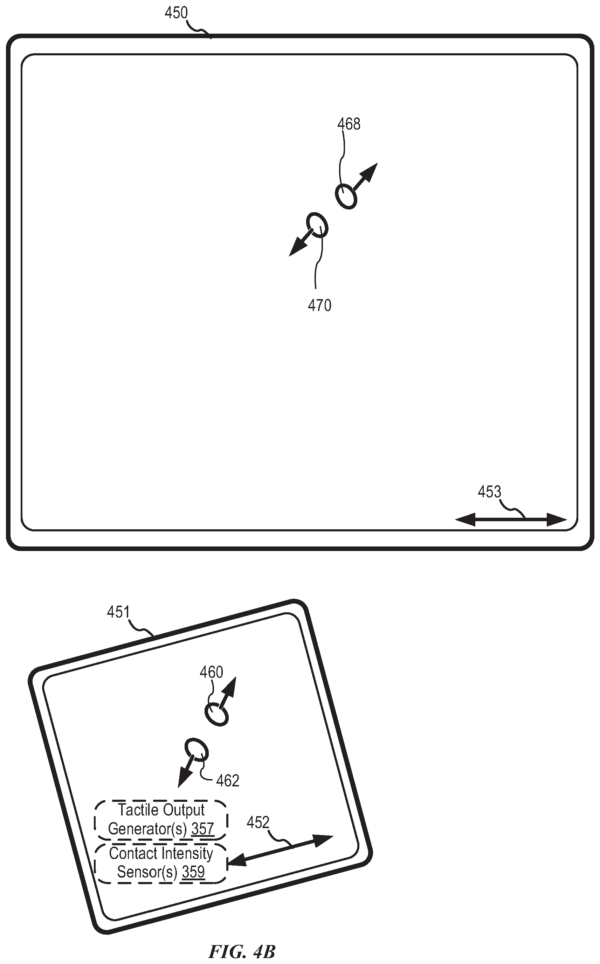

Fig. 4B illustrates an exemplary user interface on a device (e.g., device 300, Fig. 3A) with a touch-sensitive surface 451 (e.g., a tablet or touchpad 355, Fig. 3A) that is separate from the display 450 (e.g., touch screen display 112). Device 300 also, optionally, includes one or more contact intensity sensors (e.g., one or more of sensors 359) for detecting intensity of contacts on touch-sensitive surface 451 and/or one or more tactile output generators 357 for generating tactile outputs for a user of device 300.

Although some of the examples that follow will be given with reference to inputs on touch screen display 112 (where the touch-sensitive surface and the display are combined), in some embodiments, the device detects inputs on a touch-sensitive surface that is separate from the display, as shown in Fig. 4B. In some embodiments, the touch-sensitive surface (e.g., 451 in Fig. 4B) has a primary axis (e.g., 452 in Fig. 4B) that corresponds to a primary axis (e.g., 453 in Fig. 4B) on the display (e.g., 450). In accordance with these embodiments, the device detects contacts (e.g., 460 and 462 in Fig. 4B) with the touch-sensitive surface 451 at locations that correspond to respective locations on the display (e.g., in Fig. 4B, 460 corresponds to 468 and 462 corresponds to 470). In this way, user inputs (e.g., contacts 460 and 462, and movements thereof) detected by the device on the touch-sensitive surface (e.g., 451 in Fig. 4B) are used by the device to manipulate the user interface on the display (e.g., 450 in Fig. 4B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

As used herein, the term "focus selector" refers to an input element that indicates a current part of a user interface with which a user is interacting. In some implementations that include a cursor or other location marker, the cursor acts as a "focus selector," so that when an input (e.g., a press input) is detected on a touch-sensitive surface (e.g., touchpad 355 in Fig. 3A or touch-sensitive surface 451 in Fig. 4B) while the cursor is over a particular user interface element (e.g., a button, window, slider or other user interface element), the particular user interface element is adjusted in accordance with the detected input. In some implementations that include a touch-screen display (e.g., touch-sensitive display system 112 in Fig. 1A) that enables direct interaction with user interface elements on the touch-screen display, a detected contact on the touch-screen acts as a "focus selector," so that when an input (e.g., a press input by the contact) is detected on the touch-screen display at a location of a particular user interface element (e.g., a button, window, slider or other user interface element), the particular user interface element is adjusted in accordance with the detected input. In some implementations focus is moved from one region of a user interface to another region of the user interface without corresponding movement of a cursor or movement of a contact on a touch-screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch-screen display) that is controlled by the user so as to communicate the user's intended interaction with the user interface (e.g., by indicating, to the device, the element of the user interface with which the user is intending to interact). For example, the location of a focus selector (e.g., a cursor, a contact or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally, based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds optionally includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation), rather than being used to determine whether to perform a first operation or a second operation.

In some embodiments described herein, one or more operations are performed in response to detecting a gesture that includes a respective press input or in response to detecting the respective press input performed with a respective contact (or a plurality of contacts), where the respective press input is detected based at least in part on detecting an increase in intensity of the contact (or plurality of contacts) above a press-input intensity threshold. In some embodiments, the respective operation is performed in response to detecting the increase in intensity of the respective contact above the press-input intensity threshold (e.g., a "down stroke" of the respective press input). In some embodiments, the press input includes an increase in intensity of the respective contact above the press-input intensity threshold and a subsequent decrease in intensity of the contact below the press-input intensity threshold, and the respective operation is performed in response to detecting the subsequent decrease in intensity of the respective contact below the press-input threshold (e.g., an "up stroke" of the respective press input).

In some embodiments, the device employs intensity hysteresis to avoid accidental inputs sometimes termed "jitter," where the device defines or selects a hysteresis intensity threshold with a predefined relationship to the press-input intensity threshold (e.g., the hysteresis intensity threshold is X intensity units lower than the press-input intensity threshold or the hysteresis intensity threshold is 75%, 90% or some reasonable proportion of the press-input intensity threshold). Thus, in some embodiments, the press input includes an increase in intensity of the respective contact above the press-input intensity threshold and a subsequent decrease in intensity of the contact below the hysteresis intensity threshold that corresponds to the press-input intensity threshold, and the respective operation is performed in response to detecting the subsequent decrease in intensity of the respective contact below the hysteresis intensity threshold (e.g., an "up stroke" of the respective press input). Similarly, in some embodiments, the press input is detected only when the device detects an increase in intensity of the contact from an intensity at or below the hysteresis intensity threshold to an intensity at or above the press-input intensity threshold and, optionally, a subsequent decrease in intensity of the contact to an intensity at or below the hysteresis intensity, and the respective operation is performed in response to detecting the press input (e.g., the increase in intensity of the contact or the decrease in intensity of the contact, depending on the circumstances).

For ease of explanation, the description of operations performed in response to a press input associated with a press-input intensity threshold or in response to a gesture including the press input are, optionally, triggered in response to detecting either: an increase in intensity of a contact above the press-input intensity threshold, an increase in intensity of a contact from an intensity below the hysteresis intensity threshold to an intensity above the press-input intensity threshold, a decrease in intensity of the contact below the press-input intensity threshold, and/or a decrease in intensity of the contact below the hysteresis intensity threshold corresponding to the press-input intensity threshold. Additionally, in examples where an operation is described as being performed in response to detecting a decrease in intensity of a contact below the press-input intensity threshold, the operation is, optionally, performed in response to detecting a decrease in intensity of the contact below a hysteresis intensity threshold corresponding to, and lower than, the press-input intensity threshold.

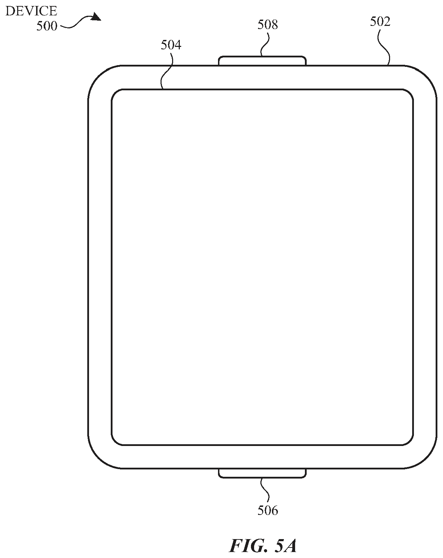

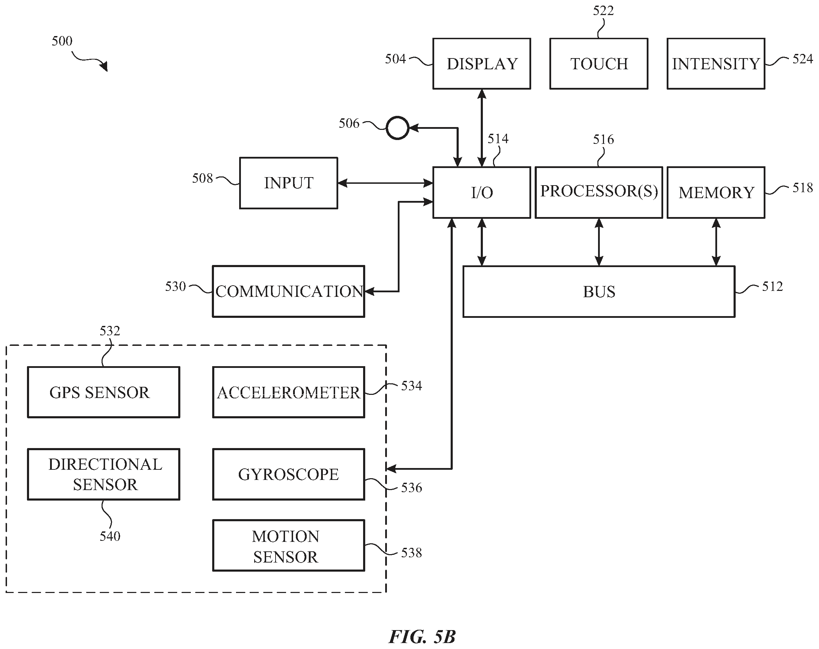

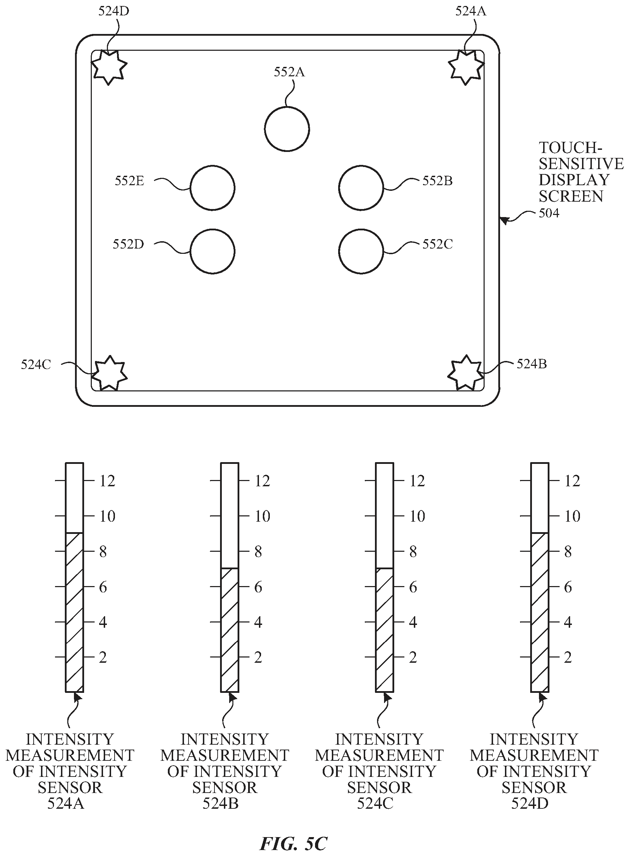

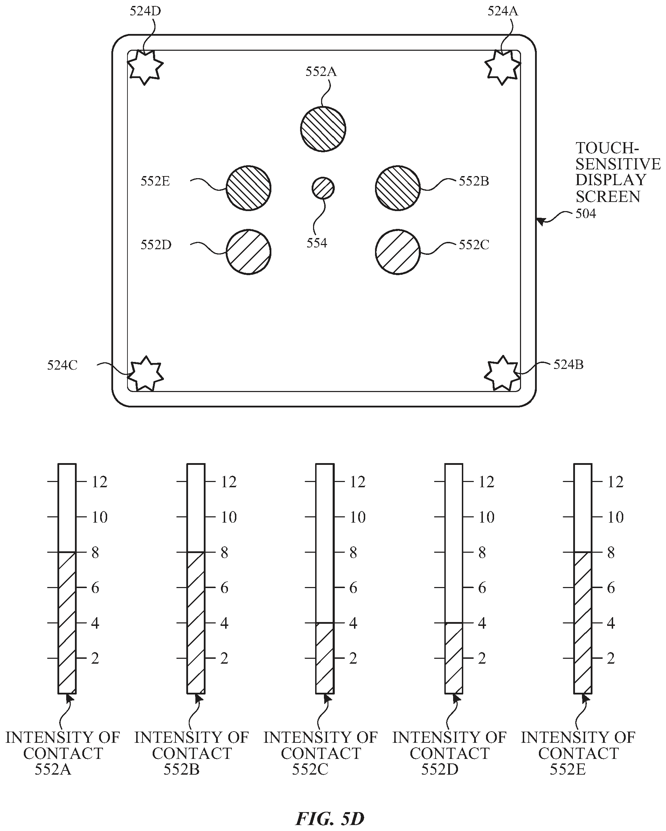

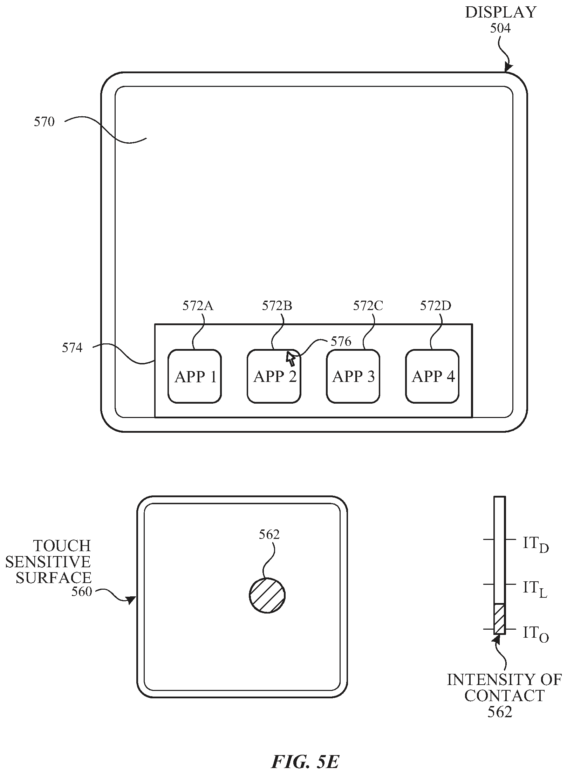

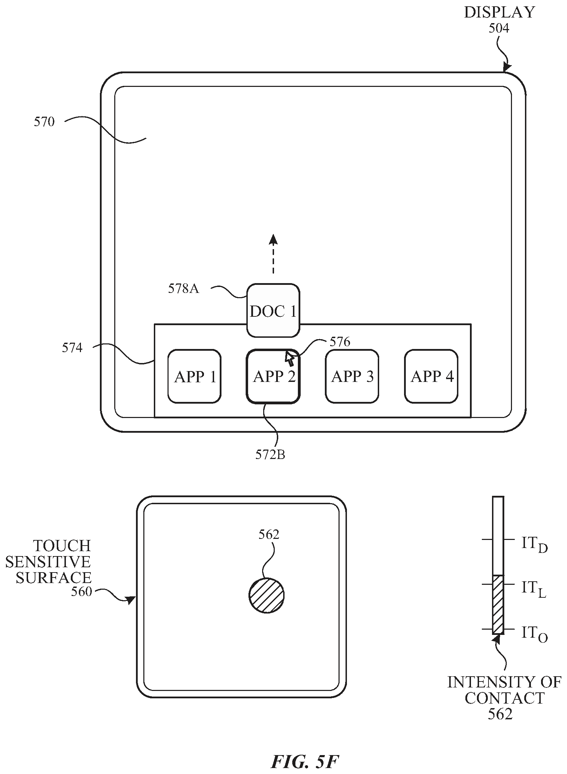

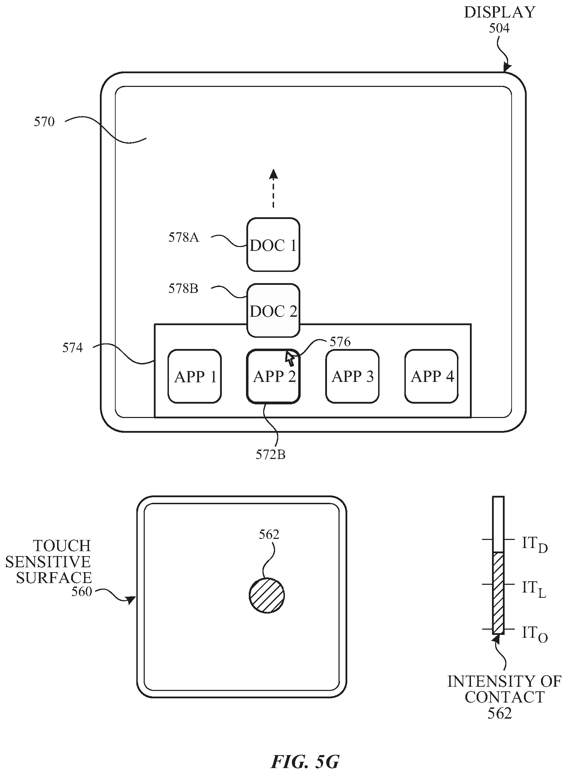

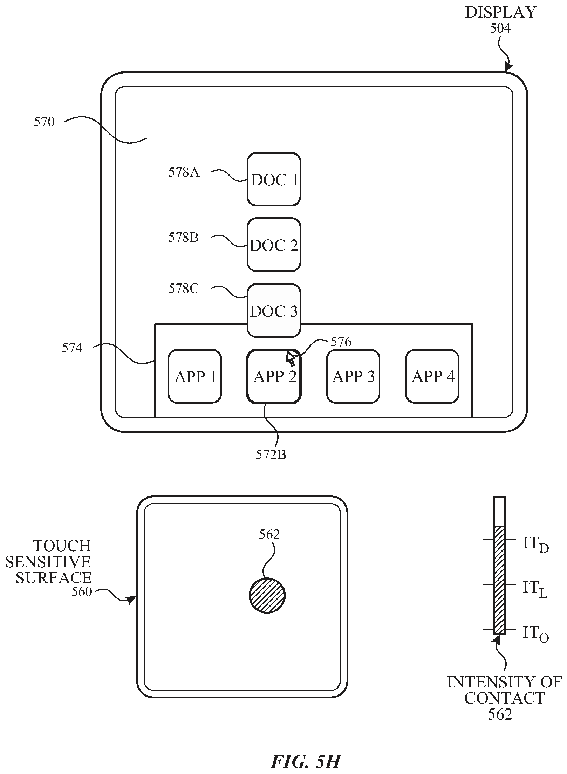

Fig. 5A illustrates a block diagram of an exemplary architecture for the device 500 according to some embodiments of the disclosure. In the embodiment of Fig. 5A, media or other content is optionally received by device 500 via network interface 502, which is optionally a wireless or wired connection. The one or more processors 516 optionally execute any number of programs stored in memory 506 or storage, which optionally includes instructions to perform one or more of the methods and/or processes described herein (e.g., methods 700, and/or 900). A computer-readable storage medium can be any medium that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on CD, DVD, or Blu-ray technologies, as well as persistent solid-state memory such as flash, solid-state drives, and the like. Personal electronic device 500 is not limited to the components and configuration of Figs. 5, but can include other or additional components in multiple configurations.

In addition, in methods described herein where one or more steps are contingent upon one or more conditions having been met, it should be understood that the described method can be repeated in multiple repetitions so that over the course of the repetitions all of the conditions upon which steps in the method are contingent have been met in different repetitions of the method. For example, if a method requires performing a first step if a condition is satisfied, and a second step if the condition is not satisfied, then a person of ordinary skill would appreciate that the claimed steps are repeated until the condition has been both satisfied and not satisfied, in no particular order. Thus, a method described with one or more steps that are contingent upon one or more conditions having been met could be rewritten as a method that is repeated until each of the conditions described in the method has been met. This, however, is not required of system or computer readable medium claims where the system or computer readable medium contains instructions for performing the contingent operations based on the satisfaction of the corresponding one or more conditions and thus is capable of determining whether the contingency has or has not been satisfied without explicitly repeating steps of a method until all of the conditions upon which steps in the method are contingent have been met. A person having ordinary skill in the art would also understand that, similar to a method with contingent steps, a system or computer readable storage medium can repeat the steps of a method as many times as are needed to ensure that all of the contingent steps have been performed.

As used here, the term "affordance" refers to a user-interactive graphical user interface object that is, optionally, displayed on the display screen of devices 100, 300, and/or 500 (Figs. 1A, 3, and 5A-5B). For example, an image (e.g., icon), a button, and text (e.g., hyperlink) each optionally constitute an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 355 in Fig. 3A or touch-sensitive surface 451 in Fig. 4B) while the cursor is over a particular user interface element (e.g., a button, window, slider, or other user interface element), the particular user interface element is adjusted in accordance with the detected input. In some implementations that include a touch screen display (e.g., touch-sensitive display system 112 in Fig. 1A or touch screen 112 in Fig. 4A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally, based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds optionally includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation), rather than being used to determine whether to perform a first operation or a second operation.

Fig. 5C illustrates detecting a plurality of contacts 552A-552E on touch-sensitive display screen 504 with a plurality of intensity sensors 524A-524D. Fig. 5C additionally includes intensity diagrams that show the current intensity measurements of the intensity sensors 524A-524D relative to units of intensity. In this example, the intensity measurements of intensity sensors 524A and 524D are each 9 units of intensity, and the intensity measurements of intensity sensors 524B and 524C are each 7 units of intensity. In some implementations, an aggregate intensity is the sum of the intensity measurements of the plurality of intensity sensors 524A-524D, which in this example is 32 intensity units. In some embodiments, each contact is assigned a respective intensity that is a portion of the aggregate intensity. Fig. 5D illustrates assigning the aggregate intensity to contacts 552A-552E based on their distance from the center of force 554. In this example, each of contacts 552A, 552B, and 552E are assigned an intensity of contact of 8 intensity units of the aggregate intensity, and each of contacts 552C and 552D are assigned an intensity of contact of 4 intensity units of the aggregate intensity. More generally, in some implementations, each contact j is assigned a respective intensity Ij that is a portion of the aggregate intensity, A, in accordance with a predefined mathematical function, Ij = A·(Dj/ΣDi), where Dj is the distance of the respective contact j to the center of force, and ΣDi is the sum of the distances of all the respective contacts (e.g., i=1 to last) to the center of force. The operations described with reference to Figs. 5C-5D can be performed using an electronic device similar or identical to device 100, 300, or 500. In some embodiments, a characteristic intensity of a contact is based on one or more intensities of the contact. In some embodiments, the intensity sensors are used to determine a single characteristic intensity (e.g., a single characteristic intensity of a single contact). It should be noted that the intensity diagrams are not part of a displayed user interface, but are included in Figs. 5C-5D to aid the reader.

In some embodiments, a portion of a gesture is identified for purposes of determining a characteristic intensity. For example, a touch-sensitive surface optionally receives a continuous swipe contact transitioning from a start location and reaching an end location, at which point the intensity of the contact increases. In this example, the characteristic intensity of the contact at the end location is, optionally, based on only a portion of the continuous swipe contact, and not the entire swipe contact (e.g., only the portion of the swipe contact at the end location). In some embodiments, a smoothing algorithm is, optionally, applied to the intensities of the swipe contact prior to determining the characteristic intensity of the contact. For example, the smoothing algorithm optionally includes one or more of: an unweighted sliding-average smoothing algorithm, a triangular smoothing algorithm, a median filter smoothing algorithm, and/or an exponential smoothing algorithm. In some circumstances, these smoothing algorithms eliminate narrow spikes or dips in the intensities of the swipe contact for purposes of determining a characteristic intensity.

The intensity of a contact on the touch-sensitive surface is, optionally, characterized relative to one or more intensity thresholds, such as a contact-detection intensity threshold, a light press intensity threshold, a deep press intensity threshold, and/or one or more other intensity thresholds. In some embodiments, the light press intensity threshold corresponds to an intensity at which the device will perform operations typically associated with clicking a button of a physical mouse or a trackpad. In some embodiments, the deep press intensity threshold corresponds to an intensity at which the device will perform operations that are different from operations typically associated with clicking a button of a physical mouse or a trackpad. In some embodiments, when a contact is detected with a characteristic intensity below the light press intensity threshold (e.g., and above a nominal contact-detection intensity threshold below which the contact is no longer detected), the device will move a focus selector in accordance with movement of the contact on the touch-sensitive surface without performing an operation associated with the light press intensity threshold or the deep press intensity threshold. Generally, unless otherwise stated, these intensity thresholds are consistent between different sets of user interface figures.

An increase of characteristic intensity of the contact from an intensity below the light press intensity threshold to an intensity between the light press intensity threshold and the deep press intensity threshold is sometimes referred to as a "light press" input. An increase of characteristic intensity of the contact from an intensity below the deep press intensity threshold to an intensity above the deep press intensity threshold is sometimes referred to as a "deep press" input. An increase of characteristic intensity of the contact from an intensity below the contact-detection intensity threshold to an intensity between the contact-detection intensity threshold and the light press intensity threshold is sometimes referred to as detecting the contact on the touch-surface. A decrease of characteristic intensity of the contact from an intensity above the contact-detection intensity threshold to an intensity below the contact-detection intensity threshold is sometimes referred to as detecting liftoff of the contact from the touch-surface. In some embodiments, the contact-detection intensity threshold is zero. In some embodiments, the contact-detection intensity threshold is greater than zero.

In some embodiments described herein, one or more operations are performed in response to detecting a gesture that includes a respective press input or in response to detecting the respective press input performed with a respective contact (or a plurality of contacts), where the respective press input is detected based at least in part on detecting an increase in intensity of the contact (or plurality of contacts) above a press-input intensity threshold. In some embodiments, the respective operation is performed in response to detecting the increase in intensity of the respective contact above the press-input intensity threshold (e.g., a "down stroke" of the respective press input). In some embodiments, the press input includes an increase in intensity of the respective contact above the press-input intensity threshold and a subsequent decrease in intensity of the contact below the press-input intensity threshold, and the respective operation is performed in response to detecting the subsequent decrease in intensity of the respective contact below the press-input threshold (e.g., an "up stroke" of the respective press input).

Figs. 5E-5H illustrate detection of a gesture that includes a press input that corresponds to an increase in intensity of a contact 562 from an intensity below a light press intensity threshold (e.g., "ITL") in Fig. 5E, to an intensity above a deep press intensity threshold (e.g., "ITD") in Fig. 5H. The gesture performed with contact 562 is detected on touch-sensitive surface 560 while cursor 576 is displayed over application icon 572B corresponding to App 2, on a displayed user interface 570 that includes application icons 572A-572D displayed in predefined region 574. In some embodiments, the gesture is detected on touch-sensitive display 504. The intensity sensors detect the intensity of contacts on touch-sensitive surface 560. The device determines that the intensity of contact 562 peaked above the deep press intensity threshold (e.g., "ITD"). Contact 562 is maintained on touch-sensitive surface 560. In response to the detection of the gesture, and in accordance with contact 562 having an intensity that goes above the deep press intensity threshold (e.g., "ITD") during the gesture, reduced-scale representations 578A-578C (e.g., thumbnails) of recently opened documents for App 2 are displayed, as shown in Figs. 5F-5H. In some embodiments, the intensity, which is compared to the one or more intensity thresholds, is the characteristic intensity of a contact. It should be noted that the intensity diagram for contact 562 is not part of a displayed user interface, but is included in Figs. 5E-5H to aid the reader.

In some embodiments, the display of representations 578A-578C includes an animation. For example, representation 578A is initially displayed in proximity of application icon 572B, as shown in Fig. 5F. As the animation proceeds, representation 578A moves upward and representation 578B is displayed in proximity of application icon 572B, as shown in Fig. 5G. Then, representations 578A moves upward, 578B moves upward toward representation 578A, and representation 578C is displayed in proximity of application icon 572B, as shown in Fig. 5H. Representations 578A-578C form an array above icon 572B. In some embodiments, the animation progresses in accordance with an intensity of contact 562, as shown in Figs. 5F-5G, where the representations 578A-578C appear and move upwards as the intensity of contact 562 increases toward the deep press intensity threshold (e.g., "ITD"). In some embodiments, the intensity, on which the progress of the animation is based, is the characteristic intensity of the contact. The operations described with reference to Figs. 5E-5H can be performed using an electronic device similar or identical to device 100, 300, or 500.

In some embodiments, the device employs intensity hysteresis to avoid accidental inputs sometimes termed "jitter," where the device defines or selects a hysteresis intensity threshold with a predefined relationship to the press-input intensity threshold (e.g., the hysteresis intensity threshold is X intensity units lower than the press-input intensity threshold or the hysteresis intensity threshold is 75%, 90%, or some reasonable proportion of the press-input intensity threshold). Thus, in some embodiments, the press input includes an increase in intensity of the respective contact above the press-input intensity threshold and a subsequent decrease in intensity of the contact below the hysteresis intensity threshold that corresponds to the press-input intensity threshold, and the respective operation is performed in response to detecting the subsequent decrease in intensity of the respective contact below the hysteresis intensity threshold (e.g., an "up stroke" of the respective press input). Similarly, in some embodiments, the press input is detected only when the device detects an increase in intensity of the contact from an intensity at or below the hysteresis intensity threshold to an intensity at or above the press-input intensity threshold and, optionally, a subsequent decrease in intensity of the contact to an intensity at or below the hysteresis intensity, and the respective operation is performed in response to detecting the press input (e.g., the increase in intensity of the contact or the decrease in intensity of the contact, depending on the circumstances).

For ease of explanation, the descriptions of operations performed in response to a press input associated with a press-input intensity threshold or in response to a gesture including the press input are, optionally, triggered in response to detecting either: an increase in intensity of a contact above the press-input intensity threshold, an increase in intensity of a contact from an intensity below the hysteresis intensity threshold to an intensity above the press-input intensity threshold, a decrease in intensity of the contact below the press-input intensity threshold, and/or a decrease in intensity of the contact below the hysteresis intensity threshold corresponding to the press-input intensity threshold. Additionally, in examples where an operation is described as being performed in response to detecting a decrease in intensity of a contact below the press-input intensity threshold, the operation is, optionally, performed in response to detecting a decrease in intensity of the contact below a hysteresis intensity threshold corresponding to, and lower than, the press-input intensity threshold.

As used herein, an "installed application" refers to a software application that has been downloaded onto an electronic device (e.g., devices 100, 300, and/or 500) and is ready to be launched (e.g., become opened) on the device. In some embodiments, a downloaded application becomes an installed application by way of an installation program that extracts program portions from a downloaded package and integrates the extracted portions with the operating system of the computer system.

As used herein, the terms "open application" or "executing application" refer to a software application with retained state information (e.g., as part of device/global internal state 157 and/or application internal state 192). An open or executing application is, optionally, any one of the following types of applications:
- an active application, which is currently displayed on a display screen of the device that the application is being used on;
- a background application (or background processes), which is not currently displayed, but one or more processes for the application are being processed by one or more processors; and
- a suspended or hibernated application, which is not running, but has state information that is stored in memory (volatile and non-volatile, respectively) and that can be used to resume execution of the application.

As used herein, the term "closed application" refers to software applications without retained state information (e.g., state information for closed applications is not stored in a memory of the device). Accordingly, closing an application includes stopping and/or removing application processes for the application and removing state information for the application from the memory of the device. Generally, opening a second application while in a first application does not close the first application. When the second application is displayed and the first application ceases to be displayed, the first application becomes a background application.

Attention is now directed towards embodiments of user interfaces ("UI") and associated processes that are implemented on an electronic device, such as device 100, device 300, or device 500.

In some embodiments, the content (e.g., poll-related content) generation processes described below ("content generation process") can be deployed as one or more generative models, where content is automatically generated by one or more computers in response to a request to generate the content. The automatically-generated content is optionally generated on-device (e.g., generated at least in part by a computer system at which a request to generate the content is received) and/or generated off-device (e.g., generated at least in part by one or more nearby computers that are available via a local network or one or more computers that are available via the internet). This automatically-generated content optionally includes visual content (e.g., images, graphics, and/or video), audio content, and/or text content. Automatically-generated content optionally includes deterministically generated content that is generated by one or more computer systems and/or non-deterministically generated content that is generated automatically by one or more computer systems.

In some embodiments, automatically-generated content that is generated using a non-deterministic process is referred to as generative content (e.g., generative images, generative graphics, generative video, generative audio, and/or generative text). Generative content is typically generated by an automated process based on a prompt that is provided to the automated process. In some embodiments, the automated process is a Machine Learning (ML) process. An ML process typically uses one or more ML models to generate an output based on an input. An ML process optionally includes one or more pre-processing steps to adjust the input before it is used by the ML model to generate an output (e.g., adjustment to a user-provided prompt, creation of a system-generated prompt, and/or ML model selection). Generative content can, in some embodiments, be generated using a non-deterministic process that generates content using one or more automatic steps that include specific rules and steps for processing a prompt including one or more non-deterministic steps that introduce novel generative elements into the content that is generated. An ML process optionally includes one or more post-processing steps to adjust the output by the ML model (e.g., passing ML model output to a different ML model, upscaling, downscaling, cropping, formatting, and/or adding or removing metadata) before the output of the ML model used for other purposes such as being provided to a different software process for further processing or being presented (e.g., visually or audibly) to a user. An ML process that generates generative content is sometimes referred to as a generative ML process.

A prompt for generating generative content can include one or more of: one or more words (e.g., a natural language prompt that is written or spoken), one or more images, one or more drawings, and/or one or more videos. ML processes can include neural networks, linear regression, decision trees, support vector machines (SVMs), Naive Bayes, and k-nearest neighbors. Neural networks can include transformer-based deep neural networks such as large language models (LLMs) that are trained using supervised, unsupervised, reinforcement, and/or other learning techniques. Generative pre-trained transformer models are a type of LLM that can be effective at generating novel generative content based on a prompt. Some ML processes use a prompt that includes text to generate either different generative text, generative audio content, and/or generative visual content. Some ML processes use a prompt that includes visual content and/or an audio content to generate generative text (e.g., a transcription of audio and/or a description of the visual content). Some multi-modal ML processes use a prompt that includes multiple types of content (e.g., text, images, audio, video, and/or other sensor data) to generate generative content. A prompt sometimes also includes values for one or more parameters indicating an importance of various parts of the prompt. Some prompts include a structured set of instructions that can be understood by an ML process that include phrasing, a specified style, relevant context (e.g., starting point content and/or one or more examples), and/or a role for the ML process.

Generative content is generally based on the prompt but is not deterministically selected from pre-generated content and is, instead, generated using the prompt as a starting point. In some embodiments, pre-existing content (e.g., audio, text, and/or visual content) is used as part of the prompt for creating generative content (e.g., the pre-existing content is used as a starting point for creating the generative content). For example, a prompt could request that a block of text be summarized or rewritten in a different tone, and the output would be generative text that is summarized or written in the different tone. Similarly a prompt could request that visual content be modified to include or exclude content specified by a prompt (e.g., removing an identified feature in the visual content, adding a feature to the visual content that is described in a prompt, changing a visual style of the visual content, and/or creating additional visual elements outside of a spatial or temporal boundary of the visual content that are based on the visual content). In some embodiments, a random or pseudo-random seed is used as part of the prompt for creating generative content (e.g., the random or pseudo-random seed content is used as a starting point for creating the generative content). For example when generating an image from a diffusion model, a random noise pattern is iteratively denoised based on the prompt to generate an image that is based on the prompt. While specific types of ML processes have been described herein, it should be understood that a variety of different ML processes could be used to generate generative content based on a prompt.

Communicating via messaging applications has become an important mode via which users communicate between each other individually, as well as in group conversations which include three or more users. In some circumstances, while participating in a group conversation, a decision, often based on a query, is posed to the group in order to determine a consensus, wherein the decision is deferred to the group rather than the decision being made by a single user. However, such decisions posed to a group conversation can be fraught with indecision and/or a lack of clarity as far as a general consensus of the users participating in the messaging conversation. Accordingly, the use of a poll provides clarity via clear tracking of the selections detected and/or received from each of the users included in the conversation.

The use of polls commonly corresponds to one or more users providing bulletized lists which are manually input using traditional text based inputs (e.g., via keyboard, and/or voice based input) wherein the selections made by the multiple users are provided in a text based format. Additionally or alternatively, a poll is generated via a user initiated process which is initiated via an application installed on the electronic device. However, the above solutions require the user to identify the need for a poll, generate the poll through multiple inputs, and and/or track the responses provided by the users included in the conversation. The embodiments described below are directed toward efficient recognition of the need of a poll, generation of a poll, and/or tracking the responses received from the respective users included in the conversation.

The embodiments described below are directed toward efficiently suggesting and/or generating a poll, at one or more electronic devices, based on content within the messaging user interface based on the content of one or more messages corresponding to the conversation between a first user and one or more second users.

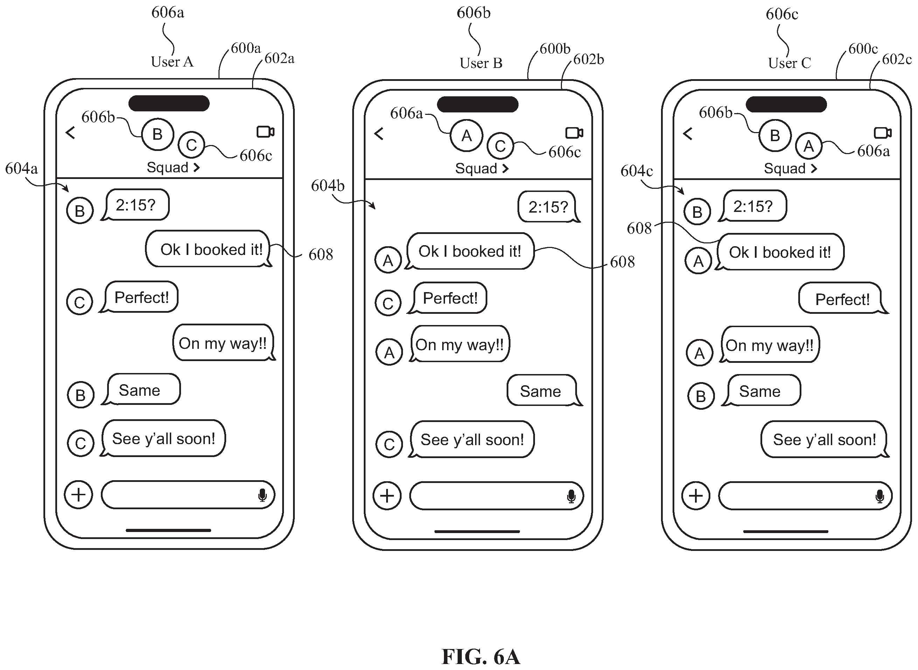

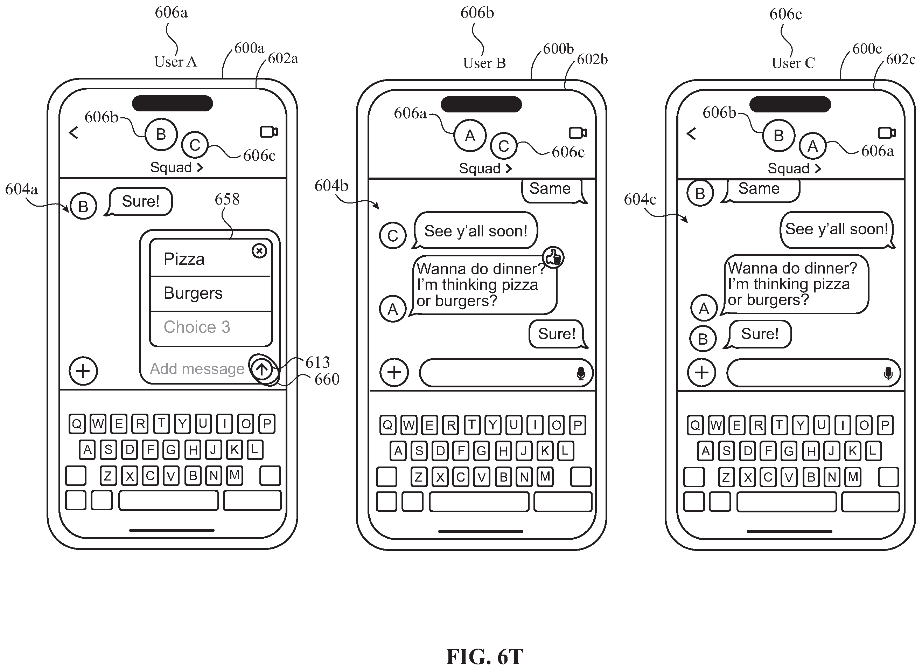

Fig. 6A-Fig. 6U illustrate exemplary ways, based on one or more criteria, in which one or more electronic devices which correspond to a group conversation which is displayed on one or more devices. The embodiments in these figures are used to illustrate the processes described below, including the processes described in Fig. 7 of how an electronic device displays a suggestion and/or one or more visual representations of a poll while generating the poll, editing the poll, and/or after the poll has been sent to the conversation. Although Figs. 6A-6U illustrate various examples of ways an electronic device is able to perform the processes described below with respect to Fig. 7, it should be understood that these examples are not meant to be limiting, and the electronic device is able to perform one or more processes described below with reference to Fig. 7 in ways not expressly described with reference to Figs. 6A-6U. In some embodiments, while the methods for displaying visual representations of polls are described in the context of user interface corresponding to a single messaging conversation, the context should be seen as exemplary, and should not be viewed as limiting to the disclosure. In some embodiments, the methods and processes described herein can be applied in multiple contexts where the display of one or more polls, one or more user interface element that are selectable to generate a poll based on the content of the one or more messages, and/or one information corresponding to one or more polls as desired.

Fig. 6A illustrates three exemplary electronic devices 600a-600c, displaying via respective display generation components 602a-602c, a view of a user interface 604a-604c of a messaging application which shows a messaging conversation between User A 606a corresponding to the first electronic device 600a, a User B 606b corresponding to the second electronic device 600b, and User C 606c corresponding to the third electronic device 600c. As illustrated, the side of the user interface (e.g., left or right) corresponds with who sent a message. When a message is sent by from a respective electronic device corresponding to a respective user, the message is displayed on the right side of the messaging user interface on the respective electronic device, and the message is displayed on the left side of the messaging user interface on the other electronic devices. For instance, a previous message 608, corresponding to User A 606a is displayed on the right side of the messaging user interface on the first electronic device 600a, and on the left side of the messaging user interface on the second electronic device 600b, and the third electronic device 600c. Furthermore, each message in the messaging user interface includes an identifier 610a-610c corresponding to User A, User B, and User C respectively.

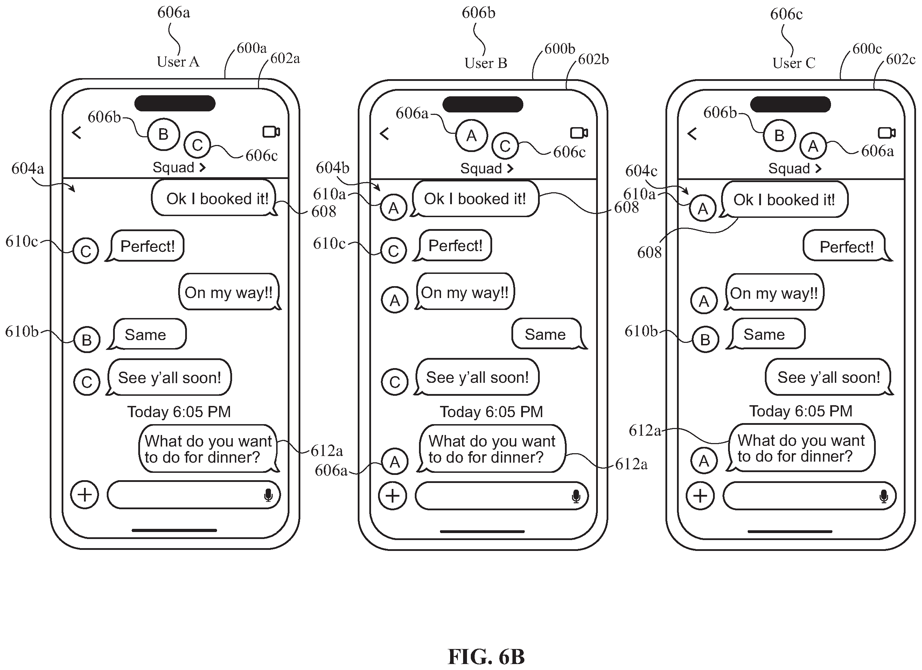

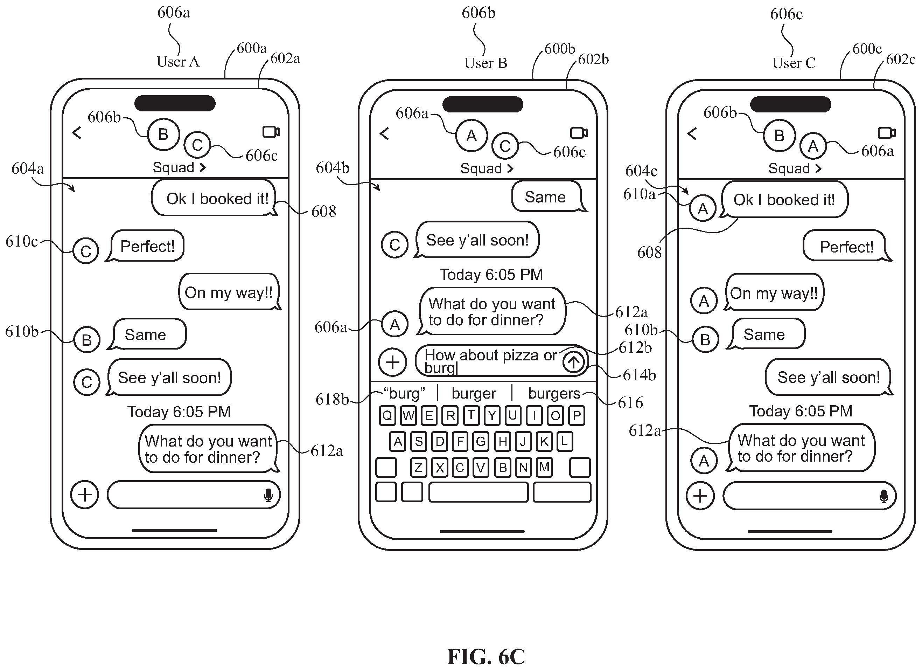

In Fig. 6B, the second electronic device 600b and the third electronic device 600c receive a first message 612a sent from the first electronic device 600a, which includes a query of "What do you want to do for dinner?" which is sent to User B 606b and User C 606c via the messaging conversation. As shown in Fig. 6C, the second electronic device 600b detects the composing of a second message 612b in response to the first message, in a first portion 614b of the messaging user interface that corresponds to user input for composing a message. While the second electronic device 600b detects the composing of the second message 612b, the second electronic device 600b provides selectable suggestions 616 which are displayed in a second portion 618b of the messaging user interface at the second electronic device 600b.

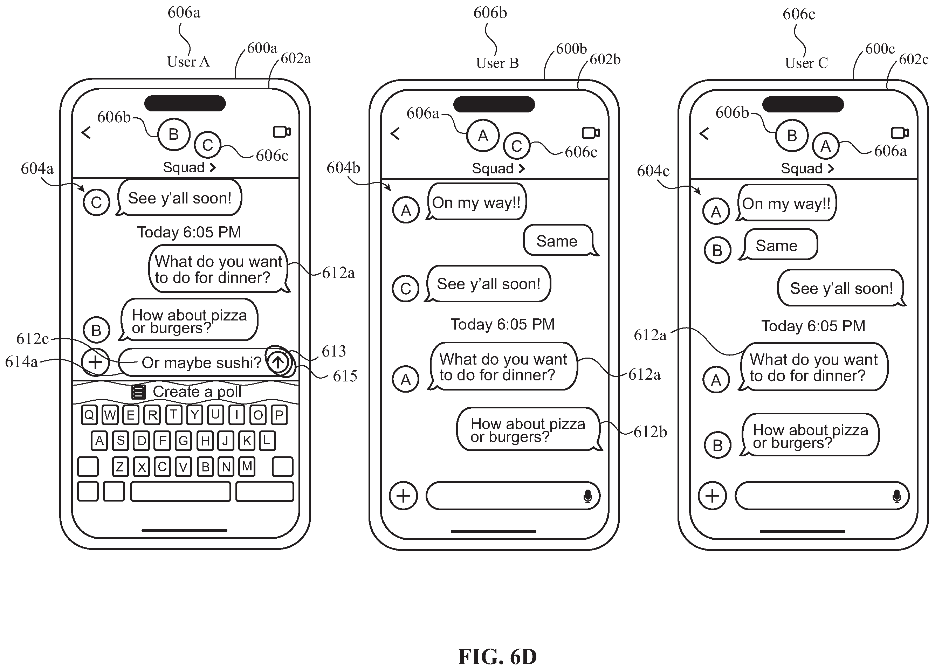

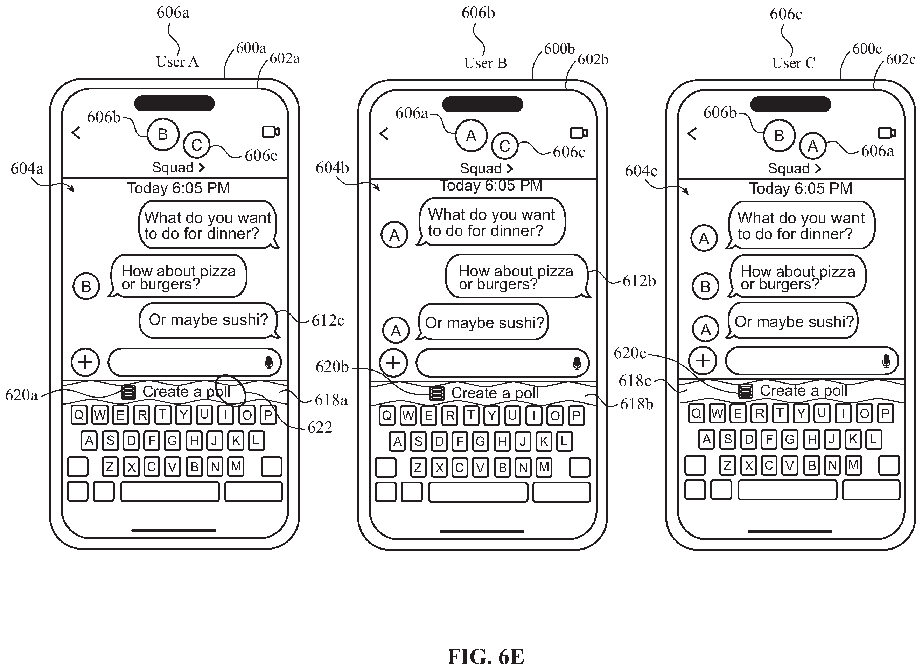

Fig. 6D illustrates that the first electronic device 600a detects the composing of a third message 612c, in the first portion 614a in the messaging user interface at the first electronic device, for transmission to the conversation which includes a response to the first message 612a, including "or maybe sushi?" in response. Following the composing of the third message, the first electronic device 600a detects a user input 615 corresponding to the selection of an affordance 613 which when selected initiates transmitting the third message 612c to the messaging conversation and is displayed at each of the electronic devices 600a-600c (see Fig. 6E).

As shown in Fig. 6E, based on the second message 612b and third message 612c responding to the query of the first message 612a, and the second message including two suggestions (e.g., pizza, and burgers) in response to the query, and the third message including one suggestion (e.g., sushi) as shown in Fig. 6D, the electronic device detects that a set of one or more first criteria have been satisfied. The one or more first criteria require a query (e.g., "what do you want to do for dinner?") which is followed by at least three suggestions (e.g., "pizza," "burgers," and "sushi") in response to the query. After detecting multiple messages 612b-612c in response to the first message 612a including a query and at least three suggestions in response to the query, the satisfaction of the criteria triggers each electronic device to display (see Fig. 6E) a selectable affordance 620a-620c, in the second portion 618a-618c of the messaging user interface. An input corresponding to a selection of any one of the selectable affordances initiates one or more operations for generating a poll corresponding to the content of the messages which resulted in the satisfaction of the one or more first criteria discussed above. As shown in Fig. 6E, a user input 622 to the selectable affordance 620a at the first electronic device is detected.

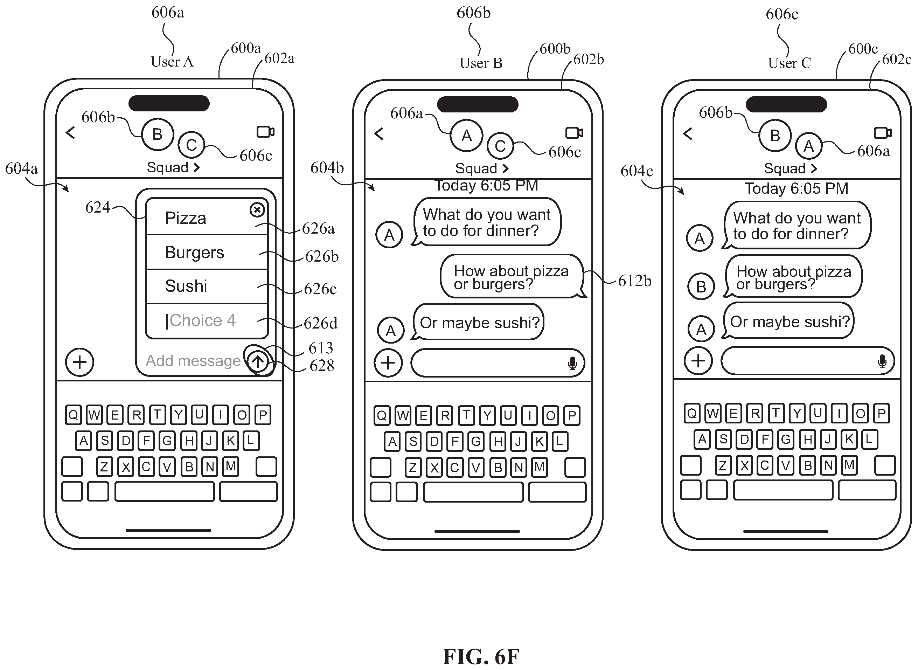

As further shown in Fig. 6F, in response to detecting the user input 622 to the selectable affordance 620a at the first electronic device 600a (at Fig. 6E), the first electronic device displays a poll editing user interface 624 to display a first visual representation of the poll 625a including suggested poll items 626a-626c based on the content of the messages which resulted in the satisfying of the one or more criteria. For instance, due to the second message 612b and the third message 612c including "pizza," "burgers," and "sushi," the first electronic device generates a first visual representation of a poll 625a which includes "Pizza," "Burgers, and "Sushi." Each of the listed suggested poll items 626a-626c are selectable to allow the first user 606a to modify, replace, and/or delete the respective poll item. In addition to the suggested poll items, the poll editing user interface includes a blank corresponding to a fourth poll item 626d to allow the user to add a poll item. When the first electronic device detects that a fourth poll item is added, the first electronic device updates the first visual representation of the poll 625a in the editing user interface to include a blank corresponding to a fifth option (not shown) to allow the User Add an additional poll item, and so on and so forth. Furthermore, in response to detecting the user input 622 and/or the initiation of generating a poll at the first electronic device 600a, the second electronic device 600b and the third electronic device 600c cease displaying their respective selectable affordances 620b-620c. As further shown in Fig. 6F, the first electronic device 600a detects a user input 628 directed to the affordance 613 which when selected corresponds to a request to transmit the poll to the messaging conversation.

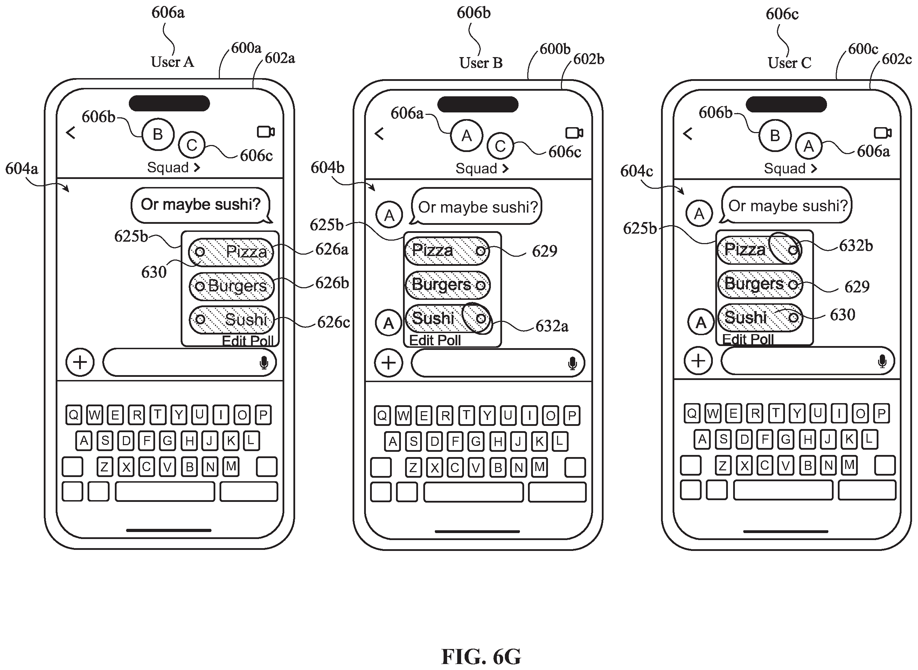

As shown in Fig. 6G, based on the input to the affordance 613, the first user sent the poll, via the first electronic device 600a, to the messaging conversation. In the messaging user interface of the first electronic device, a second visual representation 625b of the poll is displayed on the right side of messaging user interface, which corresponds to content (e.g., polls, messages, media, etc.) sent to the messaging conversation by the first user via the first electronic device. Additionally or alternatively, the second visual representation 625b of the poll is displayed on the left side of the respective messaging user interface corresponding to content sent to the messaging conversation by users which do not correspond to the respective electronic devices. When the second visual representation of the poll is displayed in the messaging user interface, one or more visual characteristics of the poll items are different between the second visual representation of the poll and the first visual representation of the first poll, such as shown in Fig, 6F. For instance, as shown in Fig. 6F, each poll item (626a-626c) is displayed without the first level 630a of shading which is shown with respect to the second visual representation of the poll shown in Fig. 6G. Furthermore, the relative length of each poll item starts at a first length, indicating that no selections to the poll items have been recorded within the messaging conversation. While the second visual representation of the poll is displayed at the electronic devices, the second electronic device 600b detects a user input 632a to "sushi" corresponding to a selection, and the third electronic device detects a user input 632b to "pizza" corresponding to a selection. Furthermore, each poll item includes an icon placeholder 629 which indicates that the user local to a respective electronic device has not voted for the poll item for which the icon placeholder corresponds to. When a user local to a respective electronic device has voted for a poll item, the respective electronic device ceases displaying the icon placeholder for the corresponding poll item as shown in the following figures.

As shown in Fig, 6H, each of the respective electronic devices 600a-600c, each display an updated second visual representation of the poll wherein "Pizza" has received one selection and "Sushi" has received one selection. Accordingly, each of the selected poll items have increased in length, to a second length which is greater than the first length, based on the selection inputs. Furthermore, at each of the respective electronic devices where the selection inputs were received, the poll items which received the selection inputs include a second level 630b of shading. Accordingly, "Sushi" at the second electronic device 600b, and "Pizza" at the third electronic device 600c each are displayed with the second level 630b of shading corresponding to the selections at the respective electronic devices. Furthermore, each poll item which received a selection input includes one or more user icons to indicate which users selected each respective poll item. For instance "sushi" is displayed with a second user icon 636b, and "Pizza" is displayed with a third user icon 636c. While the updated second visual representation of the first poll is displayed, the first electronic device 600a detects user inputs corresponding to selections 632c and 632d to "Burgers" and "Sushi" respectively.

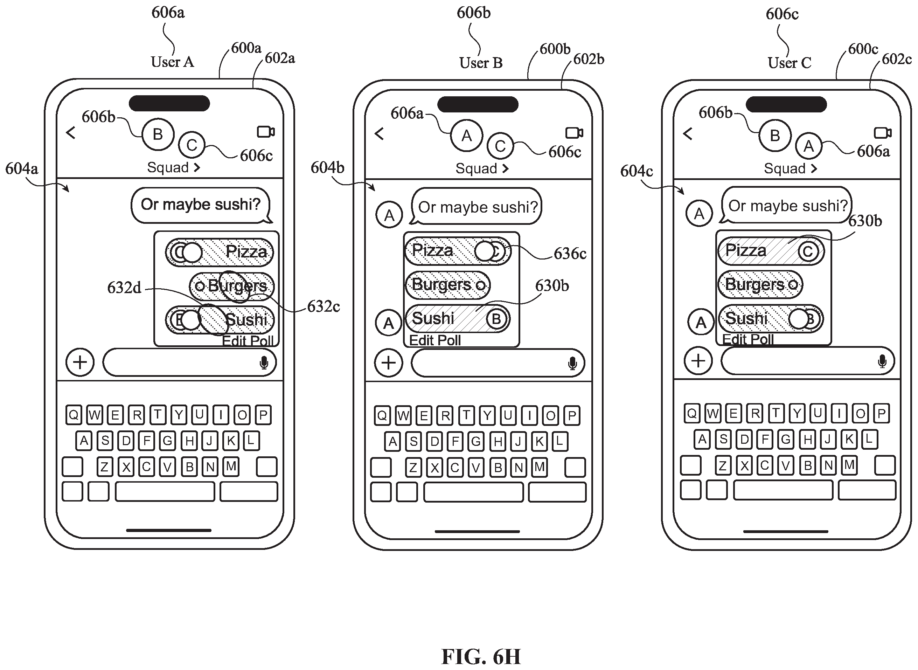

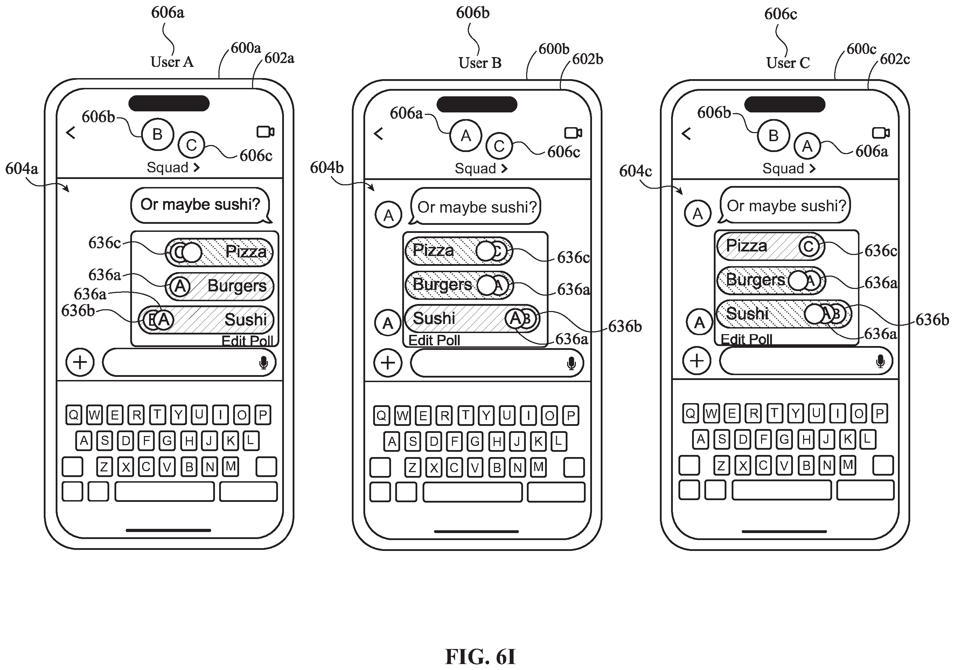

Due to the additional selections made in Fig. 6H, Fig. 6I illustrates the updating of the second visual representation of the poll at each respective electronic device to include additional selections to "Burgers" and "Sushi" which are now displayed with a first user icon 636a. As each additional user icon is added to each respective poll item, the user icons are shown in a visual sequence (e.g., right to left) based on the chronological order in which the selection inputs were received. Further due to the additional selections to "Burgers" and "Sushi" at the first electronic device 600a, each of the respective poll items are displayed at the first electronic device with the second level 630b of shading based on the selections detected at the first electronic device. Further due to the additional selections to "Burgers" and "Sushi" at the first electronic device 600a, each of the respective poll items are displayed at each of the electronic devices with a relative length corresponding to the number of selections received to each poll item such that "Burgers" and "Pizza," each with one selection, are displayed with the second length, and "Sushi," having two selections, is displayed with a third length which is longer that the second length.

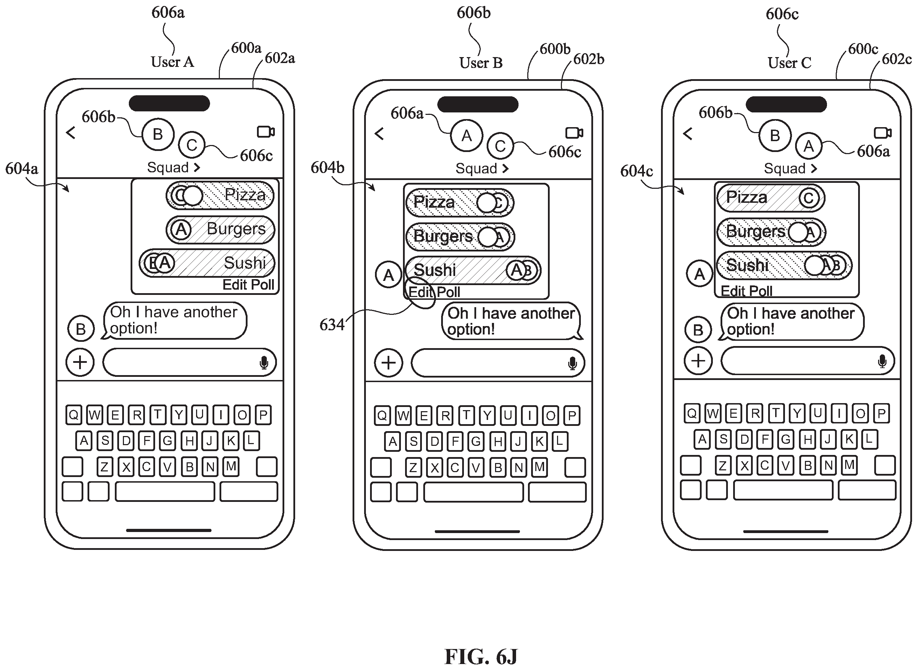

As shown in Fig. 6J, the second user, via the second electronic device 600b, sends a message to the messaging conversation that they will add an additional poll item to the first poll. Subsequent to sending the message to the messaging conversation, the second electronic device 600b detects a user input 634 corresponding to a request to edit the second visual representation of the poll as displayed in the messaging conversation.

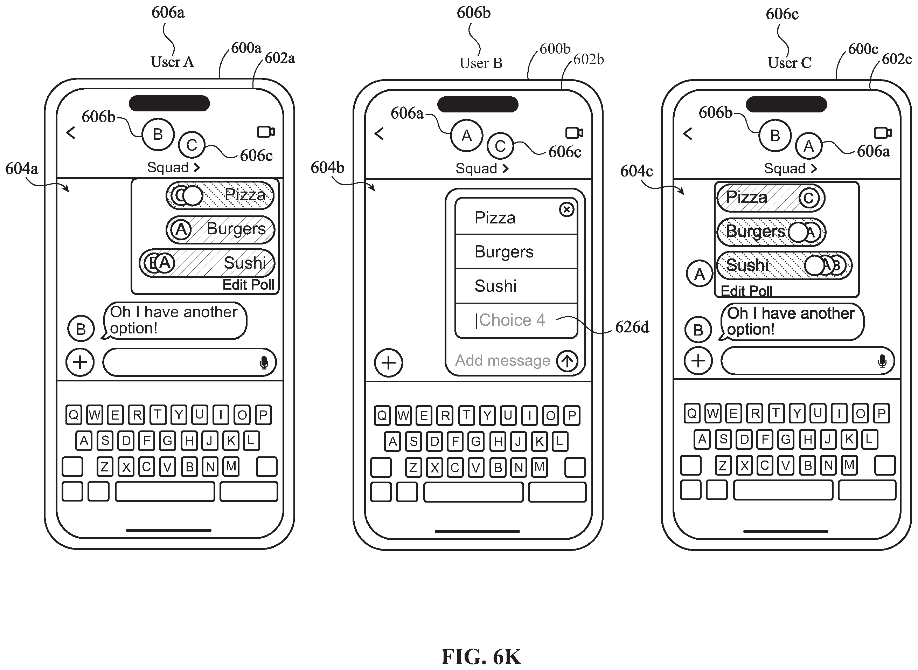

In response to the user input detected in Fig. 6J at the second electronic device 600b, as shown in Fig. 6K, the second electronic device 600b displays the editing user interface 624 including the first visual representation of the poll. The first visual representation of the poll displayed at the second electronic device 600b within the editing user interface 624 includes each of the poll items 626a-626c previously added to the poll, as well as the fourth poll item 626d which allows the user to add an additional poll item.

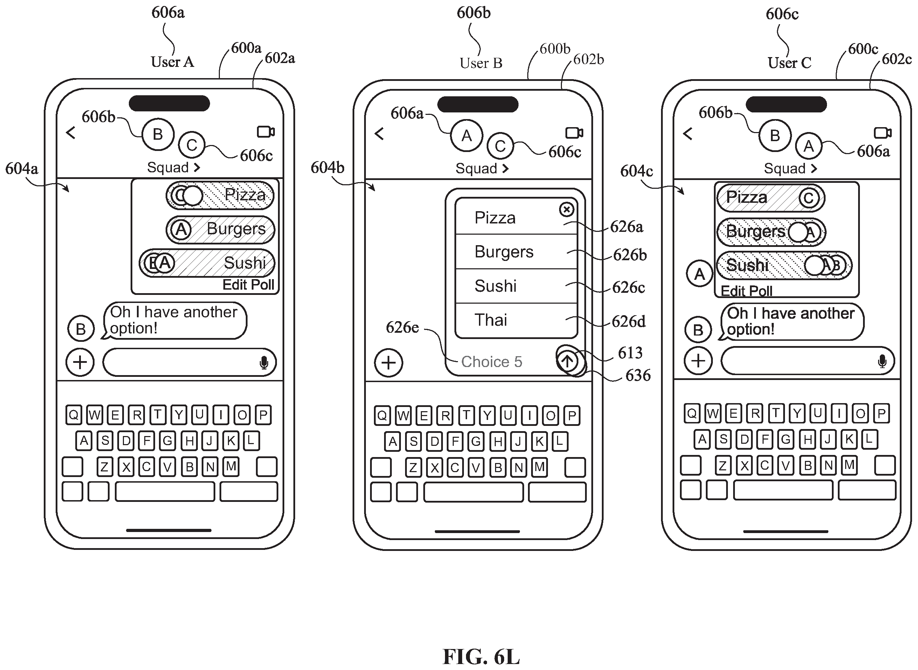

As shown in Fig. 6L, the second electronic device 600b has detected one or more inputs from the second user which results in the user input of "Thai" for the fourth poll item 626d. Due to the fourth poll item being populated, the second electronic device further displays a fifth poll item 626e which allows the second user to input a fifth poll item. Following receiving the input of "Thai" corresponding to the fourth poll item, the second electronic device receives a user input 636 directed to the affordance 613 which when selected corresponds to a request to transmit the poll to the messaging conversation.

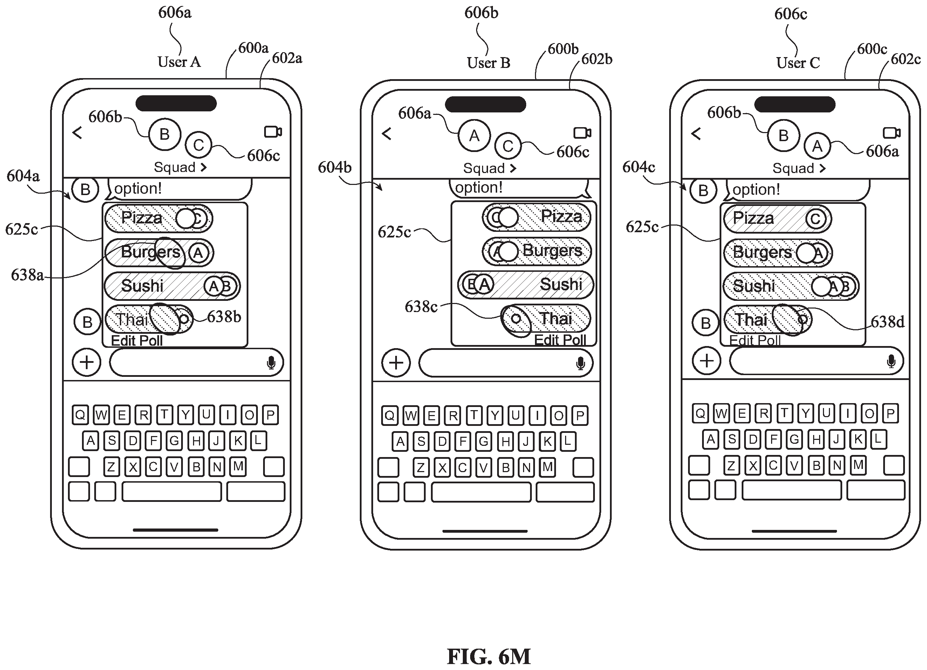

As shown in Fig. 6M, the second electronic device 600b transmits the updated poll, including the fourth poll option of "Thai" to messaging conversation. When the poll is sent to the messaging conversation, a third visual representation 625c of the poll is shown in the messaging user interface. While displayed at the second electronic device, the third visual representation 625c of the poll is displayed on the right side of the messaging conversation at the second electronic device 600b, which corresponds to messages sent to the messaging conversation by the second user. While displayed at the first electronic device 600a and the third electronic device 600c, the third visual representation 625c of the poll is displayed at the left side of the messaging conversation which corresponds to messages sent to the messaging conversation by other users at each of the respective electronic devices. While the third visual representation 625c of the poll is displayed at each of the respective electronic devices, the first electronic device 600a detects user inputs 638a-638b to "Burgers" and "Thai" respectively, wherein the input 638a to "Burgers" corresponds to a deselection event, and the input 638b to "Sushi" corresponds to a selection event. After the inputs are detected at the first electronic device 600a, the second electronic device 600b detects a user input 638c to "Thai," corresponding to a selection event. Following detection of the inputs at the second electronic device 600b, the third electronic device detects user input 638d to "Thai," corresponding to a selection event.

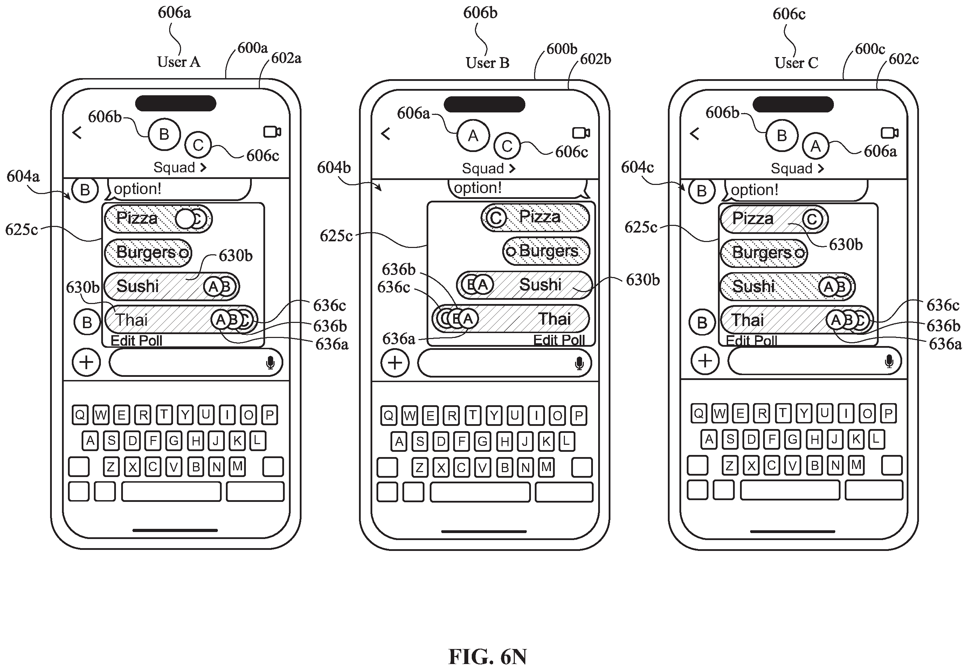

As shown in Fig. 6N, the respective electronic devices updates the third visual representation 625c of the poll to reflect the selections and deselections made in view of Fig. 6M. Due to the user inputs detected as shown in Fig. 6M, Fig. 6N now shows "Pizza" with a single selection from User C (indicated by the associated third user icon 636c), no selections to "Burgers" as a result of the deselection input 638a (shown in Fig. 6M), "Sushi" reflects a total of two selections from User A, and User B (indicated by the first user icon 636a and second user icon 636b respectively), and "Thai" reflects a total of three selections from each of User A, User B, and User C. Furthermore, each of the respective poll items have been updated show a first level 630a of shading for poll items not selected via the local electronic device (such as "Pizza" at the first electronic device 600a and the second electronic device 600b), and a second level 630b of shading for poll items selected via the local electronic device (such as "Thai" and "Pizza" at the third electronic device 600c).

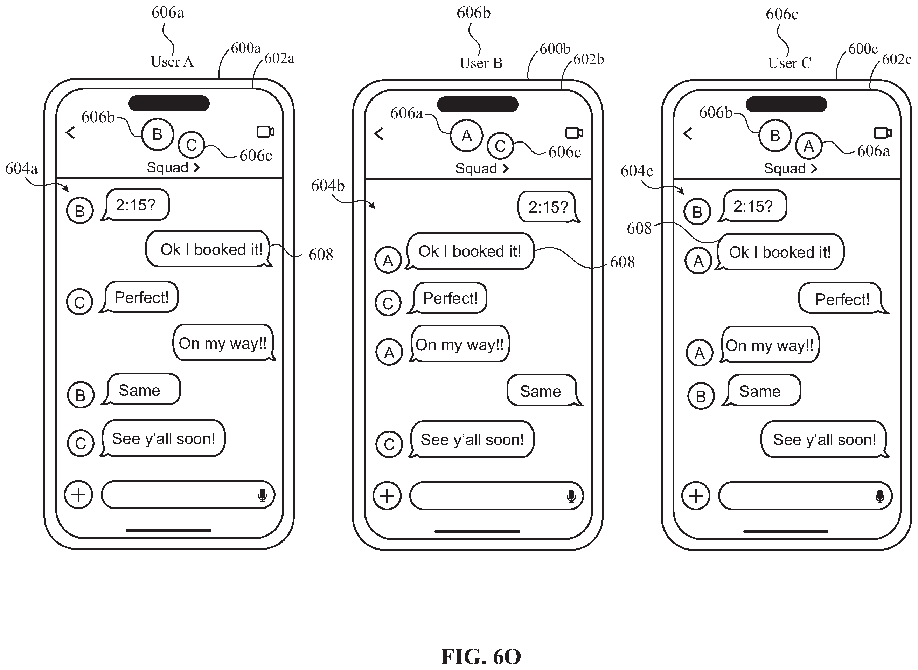

Additionally or alternatively, in a second exemplary scenario, Fig. 6O illustrates three exemplary electronic devices 600a-600c, displaying via respective display generation components 602a-602c, a view of a user interface 604a-604c of a messaging application which shows a messaging conversation between User A 606a corresponding to the first electronic device 600a, a User B 606b corresponding to the second electronic device 600b, and User C 606c corresponding to the third electronic device 600c. As illustrated, the side of the user interface (e.g., left or right) corresponds with who sent a message. When a message is sent from a respective electronic device corresponding to a respective user, the message is displayed on the right side of the messaging user interface on the respective electronic device, and the message is displayed on the left side of the messaging user interface on the other electronic devices. For instance, a previous message 608, corresponding to User A 606a is displayed on the right side of the messaging user interface on the first electronic device 600a, and on the left side of the messaging user interface on the second electronic device 600b, and the third electronic device 600c. Furthermore, each message in the messaging user interface includes an identifier 610a-610c corresponding to User A, User B, and User C respectively.

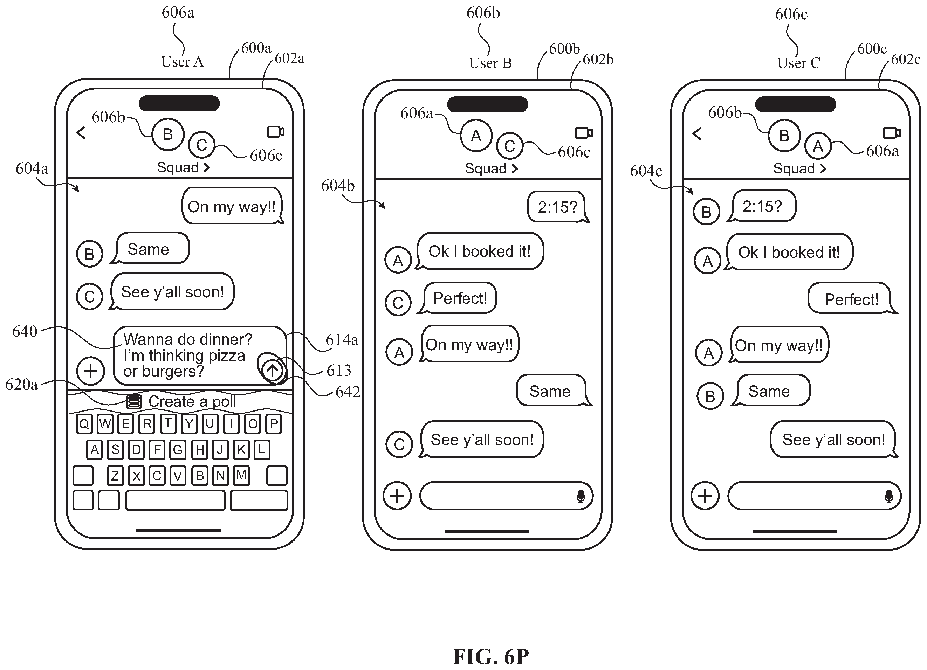

As shown in Fig. 6P, the first electronic device 600a has received one or more inputs from the first user which includes composing of a query message 640 in the first portion 614a of the messaging user interface which corresponds to a query and multiple options associated with the query. Prior to receiving the user input 642 corresponding to the request to send the composed query message to the electronic device displays a selectable affordance 620a at the first electronic device, the selection of which corresponds to a request to generate a poll corresponding to the content of the composed query message. However, the electronic device detects the user input 642 directed to the affordance 613 to send the query message 640 to the messaging conversation without detecting selection to the selectable affordance 620a.

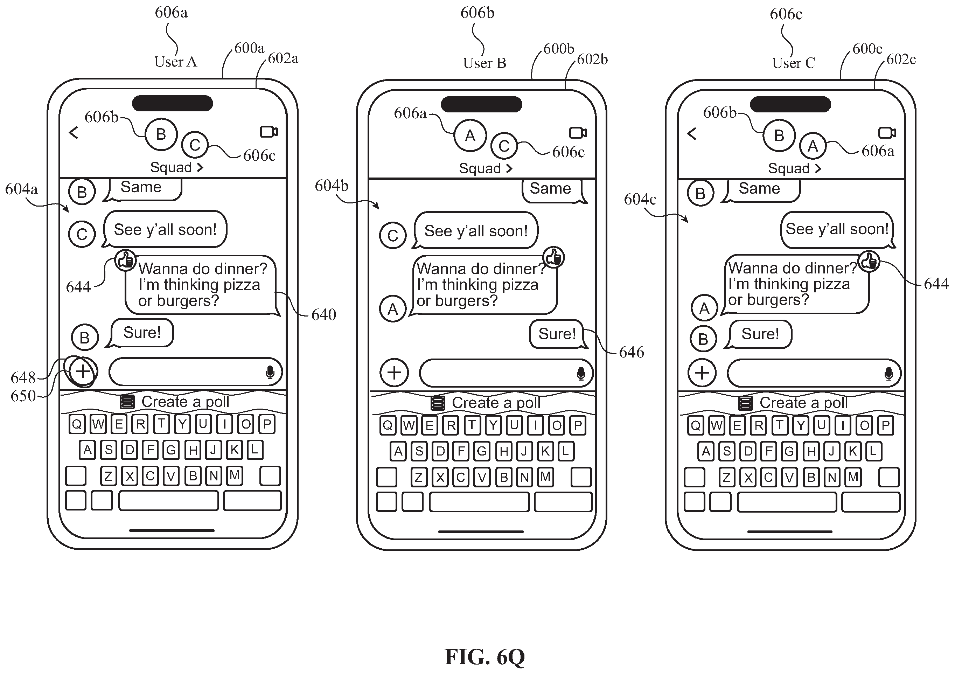

As shown in Fig. 6Q, after sending the query message 640 to the messaging conversation, each of the respective electronic devices display the selectable affordance 620a-620c, the selection of which corresponds to a request to generate a poll based on the content of the query message 640. However, a selection directed to one or more of the respective selectable affordances 620a-620c is not detected by any of the electronic devices. As shown, User B provides a message response 646, and User C provides a reaction 644, to the query message 640. Following the response and reaction provided by the other users, the first electronic device 600a detects an input 648 from User A corresponding to a selection of an affordance 650, the selection of an affordance 650 which corresponds to a request to add content, other than a text based message, to the messaging conversation.

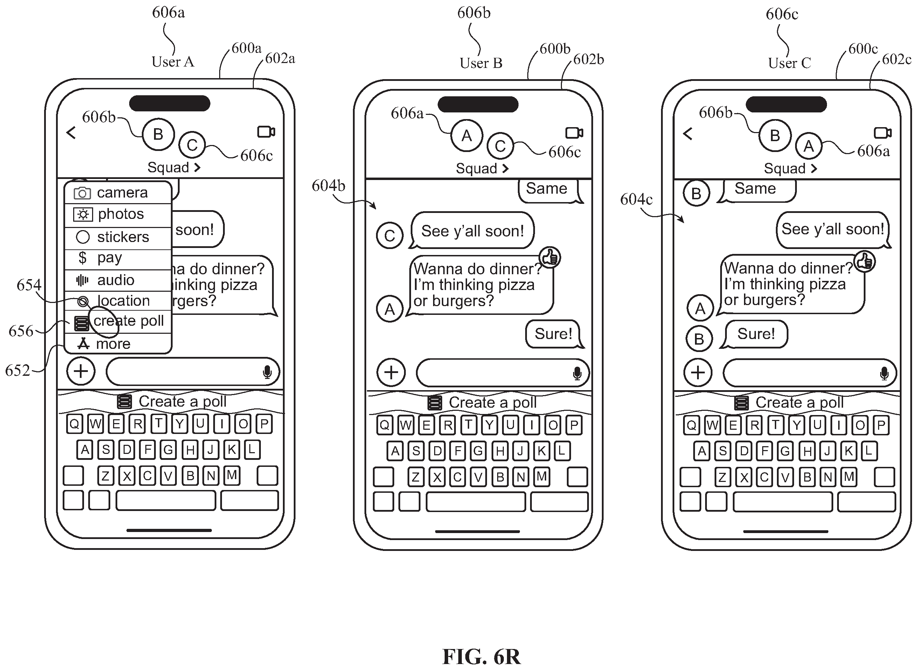

As shown in Fig. 6R, in response to receiving the input 648 to the affordance 650 in Fig. 6Q, the first electronic device displays a user interface menu 652 which includes multiple options for adding content to the messaging conversation. While displaying the user interface menu 652, the first electronic device 600a detects an input 654 directed to a menu element 656 that is selectable to add a poll to the messaging conversation.

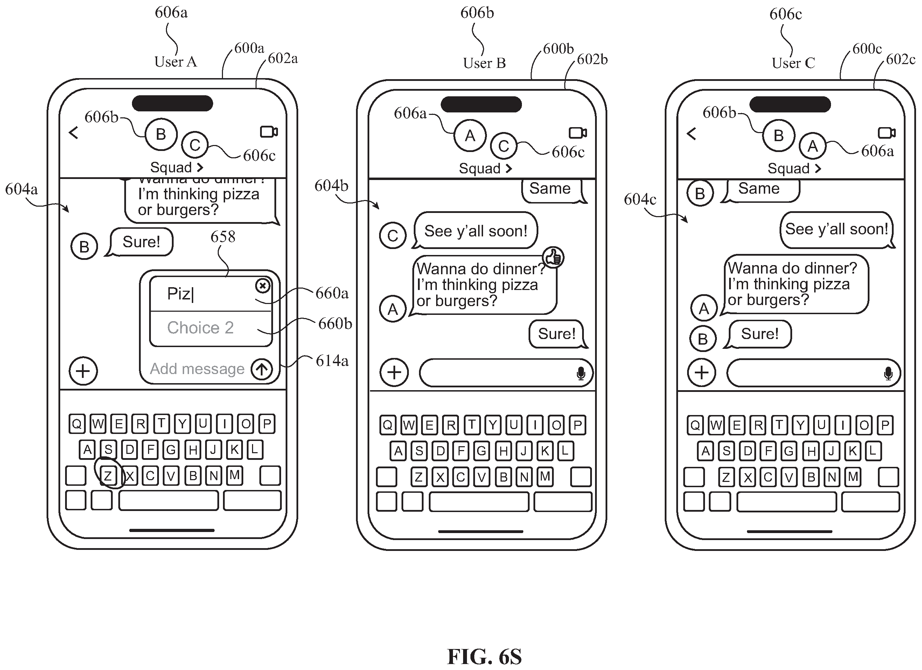

As shown in Fig. 6S, the first electronic device displays a first visual representation 658 of a poll in the first portion 614a of the messaging user interface that corresponds to composing a message. The first visual representation of the poll includes editable fields 660a-660b that are selectable to populate the respective field with poll items. As shown in Fig. 6S-6T, the first electronic device 600a detects inputs from the first user resulting in populating the first visual representation 658 of the poll with poll items corresponding to "Pizza" and "Burgers" prior to detecting an input 660 to the affordance 613 which is selectable to send the poll to the messaging conversation.

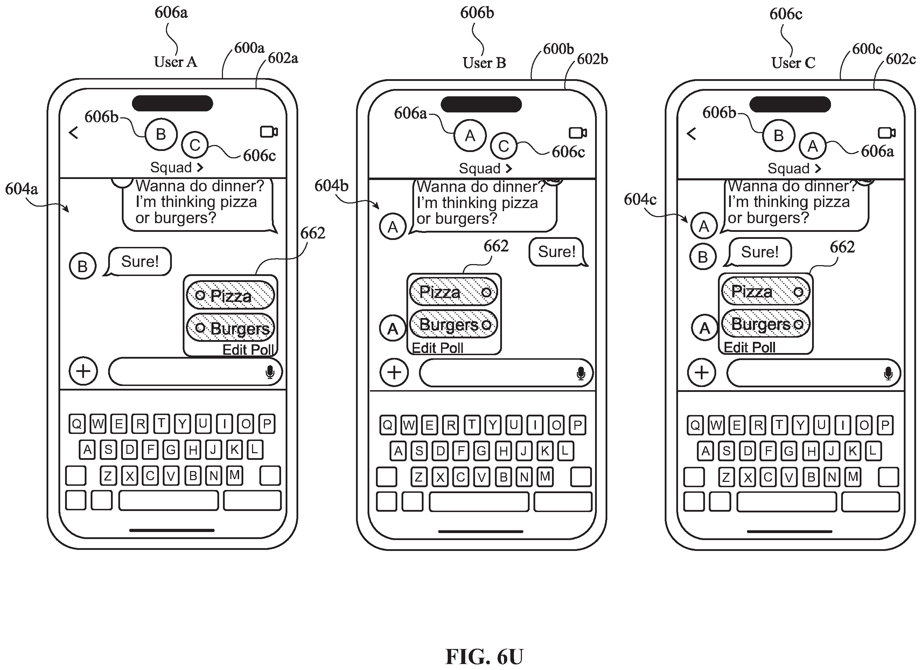

As shown in Fig. 6U, the first electronic device has sent the poll to the messaging conversation and a second visual representation 662 of the poll is accordingly displayed in the messaging conversation at each of the respective electronic devices.

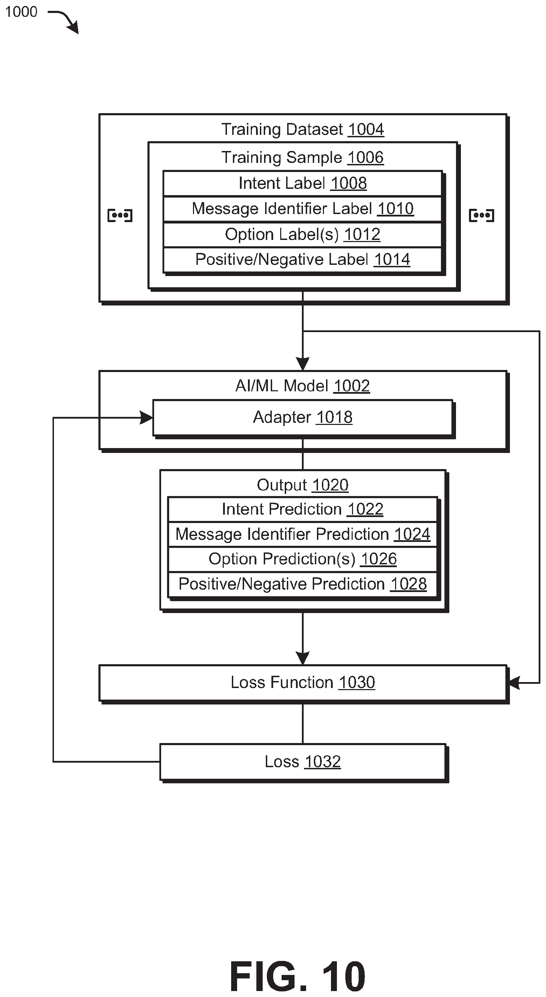

Fig. 7 illustrates a flow diagram illustrating a method in which an electronic device displays a selectable user interface element based on content of one or more messages associated with a messaging conversation according to some embodiments. The method 700 is optionally performed at first electronic device and/or electronic devices such as device 100, device 300, or device 500 as described above with reference to Figs. 1A-1B, 2-3, 4A-4B and 5A-5H. Additionally or alternatively, method 700 is optionally performed using a system, such as system 1000 as described in relation to Fig. 10 herein. Some operations in method 700 are, optionally combined and/or order of some operations is, optionally, changed.

In some embodiments, method 700 is performed at a first electronic device (e.g., 600a), corresponding to a first user, in communication with a display generation component (e.g., display 602a) and one or more input devices (e.g., microphone 113, proximity sensor 166, touch-sensitive display system 112, optical sensor(s) 164, depth camera sensor(s) 175, contact intensity sensor(s) 165, and/or other input control device(s) 116 at Fig. 1). For example, the first electronic device is a mobile device (e.g., a tablet, a smartphone, a media player, or a wearable device) including wireless communication circuitry, optionally in communication with one or more of a mouse (e.g., external), trackpad (optionally integrated or external), touchpad (optionally integrated or external), remote control device (e.g., external), another mobile device (e.g., separate from the first electronic device), a handheld device (e.g., external), and/or a controller (e.g., external), etc.). In some embodiments, the display generation component is a display integrated with the first electronic device (optionally a touch screen display), external display such as a monitor, projector, television, or a hardware component (optionally integrated or external) for projecting a user interface or causing a user interface to be visible to one or more users, etc. In some embodiments, the first electronic device to a first user wherein inputs received at the first electronic device are associated with the first user.

In some embodiments, while displaying (e.g., method step 702 at Fig. 7) a messaging user interface (e.g., 604a), such as shown in Fig, 6E, associated with a messaging application, such as shown in Fig. 6A-Fig. 6E, including representations of one or more messages corresponding to a messaging conversation that includes a plurality of users, including the first user (e.g., 606a) and a second user (e.g., 606b), the first electronic device detects (e.g., method step 704 at Fig. 7) that the one or more messages satisfy one or more criteria, (e.g., criteria which corresponds to the content of the one or messages corresponding to communications with the second user). In some embodiments, the messaging user interface includes representations of messaging activity (e.g., text-based messages, voice-recorded messages, and/or messages with graphical and/or image content between the first user and a second user). In some embodiments, a messaging application refers to an application running on the first electronic device that displays and/or facilitates messaging activity (e.g., representations of text messages, images, web-links, etc.) which are sent to and received from other users and/or other electronic devices. In some embodiments, the representations of messages displayed via the messaging user interface include representations of messages between the first user and a second user. In some embodiments, the representations of messages displayed via the messaging user interface includes representations of messages between the first user and one or more second users (e.g., second user, third user, fourth user, etc.) within the same conversation, wherein one or more or any messages sent or received by each of the first user and/or the one or more second users, are received by one or more or each of the users within the conversation.

Detecting that the one or more messages satisfy one or more criteria optionally includes determining when the textual content, graphical content, video content, and/or audio content included within the message satisfy the one or more criteria. The one or more criteria are described in more detail below.

In some embodiments, such as shown in Fig. 6E, in response to detecting that the one or more messages satisfy the one or more criteria, the first electronic device displays (e.g., method step 706 at Fig. 7), in the messaging user interface (e.g., 604a), a first user interface element (e.g., 620a) (e.g., an icon or other selectable option), which is selectable to initiate a poll generation process corresponding to (e.g., including) content of the one or more messages. In some embodiments, the first electronic device detects that the messaging conversation includes content which satisfies the criteria for suggesting a poll when the first electronic device detects that content of the one or more messages include textual content which surround a query posed by a user in the messaging conversation, and which the users who are part of the messaging conversation (e.g., first user and second user) are attempting to answer. In some embodiments the query is associated with a particular topic (e.g., dining options, dates, times, etc.) for which a finite number of options have been posed by users participating in the messaging conversation. The poll generation process optionally includes composing a poll, via user input and/or automated input (e.g., via one or more AI/ML models), which includes a representation of a first query sent via a message by at least one of the users within the messaging conversation. In some embodiments, the poll generation process optionally includes composing a plurality of poll options, via user input and/or automated input (e.g., via one or more AI/ML models), which are selectable by each of the users within the messaging conversation to visually identify their selected poll options without requiring further textual input. After generating the representation of the first query, and generation of the plurality of poll options, the poll is optionally sent to all users within the messaging conversation when the first electronic device detects selection of a second user interface element which is selectable to transmit the poll to the messaging conversation. In some embodiments, when the first electronic device detects that the one or more messages satisfy the one or more criteria, the first electronic device displays, in the messaging user interface, a selectable first user interface element (e.g., poll icon) which, when selected, initiates a poll generation process corresponding to content of the one or more messages. In some embodiments, the poll icon is displayed concurrently with the display of the messaging conversation with the second user. For instance, when the one or more criteria are satisfied, the first electronic device optionally displays the poll icon in a location of the messaging user interface associated with a message that was previously sent to, or received from the second user. In some embodiments, when the one or more criteria are satisfied, the first electronic device displays the poll icon in a location of the messaging user interface corresponding to a message drafting portion of the user interface. In some embodiments, when the one or more criteria are satisfied, the poll icon is displayed in a location of the messaging user interface corresponding to a keyboard user interface and/or within a portion of the user interface between the keyboard user interface and the message drafting portion of the user interface. In some embodiments, the poll icon is displayed in a location of the messaging user interface corresponding to predictive and/or suggested content. Providing a selectable first user interface element to generate a poll when one or more criteria are satisfied provides an efficient manner to generate a poll within the conversation with the one or more second users which reduces keystrokes and reduces power consumption.

In some embodiments, such as shown in Fig. 6E, the one or more messages (e.g., 612a-612c) were included in the messaging conversation prior to the one or more criteria being satisfied. In some embodiments, the first electronic device electronic device displays the first user interface element based on one or more messages that were included in the messaging conversation prior to the one or more criteria being satisfied. The one or more messages that included in the messaging conversation prior to satisfying the one or more criteria optionally correspond to messages sent and/or received by one or more users that are part of the messaging conversation (e.g., the first user and/or one or more second users). In some embodiments, the first electronic device bases the display of the first user interface element on messages that were sent within a recent time threshold from the current time at the first electronic device (e.g., within 10 seconds, within 30 seconds, within 2 minutes, within 15 minutes, within 30 minutes, within an hour, within 3 hours, within 24 hours, within 3 days, within 7 days, or within 30 days). By basing the display of the first user interface element on one or more messages which include messages that were previously sent within the conversation, the first electronic device reduces user inputs to recapitulate relevant poll options and reduces inadvertent omission of relevant poll options.

In some embodiments, such as shown in Fig. 6D, the first electronic device (e.g., 600a) detects a user input, via the one or more input devices, from the first user corresponding to composing a first message (e.g., 612c) of the one or more messages. A user input, as referred to herein, optionally includes touch input, input via a device in digital communication with the electronic device (e.g., keyboard, mouse, stylus, etc.), voice input, gaze, and/or user movement of the electronic device. In some embodiments the user input corresponding to composing a message is detected as directed to a portion of the user interface is configured to receive user inputs for composing messages for transmission to the messaging conversation.

In some embodiments, while detecting the user input and prior to detecting an input (e.g., user input 615) to a second user interface element (e.g., 613) which is selectable to initiate transmitting the first message to the messaging conversation, the first electronic device detects that a first portion of the first message (e.g., 612c) satisfies the one or more criteria. In some embodiments, while the first electronic device detects user input corresponding to the drafting of a message prior to detecting a user input corresponding to initiating transmitting the message to the second user, the first electronic device determines that the content of the draft message prior to detecting the user input corresponding to transmitting the draft message to one or more other users. The input from the first user corresponding to composing the first message optionally includes touch input, voice input, gaze-based input, and/or input received via devices which are in digital communication with the first electronic device (e.g., mouse, keyboard, stylus, etc.).

In some embodiments, the first electronic device determines that a message draft, prior to being transmitted, satisfies one or more criteria. For instance, when the draft message includes a query, one or more options which correspond to the query, and/or one or more options that correspond to a predetermined type of option (e.g., food related, time, location, date, etc.), the first electronic device optionally determines that the draft message satisfies the one or more criteria based on the drafted message.

In some embodiments, in response to detecting that the first portion of the first message satisfies the one or more criteria, the first electronic device displays the first user interface element (e.g., 620a) that is selectable to initiate the poll generation process corresponding to the content of the one or more messages, wherein the content of the one or more messages includes content corresponding to the first portion of the first message. When the first electronic device determines that the draft message satisfies the one or more criteria, the first electronic device optionally displays the first user interface element, which when selected initiates the generation of a poll. In some embodiments, when the first electronic device determines that the one or more criteria are satisfied by a first portion of the draft message (e.g., the portion that has been input by the user), the first electronic device populates one or more poll options with content corresponding to the first portion of the draft message. For instance, if the draft message includes or follows a transmitted query such as "When do you want to hang out?", and a first portion of the draft message includes "4/1/25, 4/18/25, or 4/21/25?" the first electronic device optionally displays the first user interface element upon detecting the first portion of the draft message. In some embodiments, the one or more messages satisfy the one or more first criteria while the one or more first messages are being composed, prior to be transmitted to the messaging conversation. By displaying the first user interface element based on a draft message, prior to transmission of the message, the first electronic device prevents requiring multiple messages and/or multiple transmissions to generate suggest the generation of a poll, and thus requires less user input and power associated with transmitting a message.

In some embodiments, such as shown in Fig. 6D, the first electronic device detects, via the one or more input devices, the input (e.g., user input 615) to the second user interface element (e.g., 613). In some embodiments the first electronic device detects user input to the second user interface element which is selectable to initiate transmitting the first message to the second user.

In some embodiments, in response to detecting the input to the second user interface element, the first electronic device transmits the first message (e.g., message 612c) to the messaging conversation.

In some embodiments, in response to detecting the input to the second user interface element corresponding to initiating transmitting the first message, the first electronic device transmits the first message to the messaging conversation which includes one or more second users.

In some embodiments, such as shown in Fig. 6E, after transmitting the first message (e.g., 612c) to the messaging conversation and in accordance with a determination that the first message satisfies the one or more criteria, the first electronic device displays the first user interface (e.g., 620a) element that is selectable to initiate the poll generation process. After sending the first message to the messaging conversation, the first electronic device optionally determines that the first message satisfies the one or more criteria. When the electronic device determines that the one or more criteria are satisfied the first electronic device displays the first user interface element which is selectable to generate a poll based on content within the first message. In some embodiments, when the first user interface element is already displayed as a result of detecting that the one or more criteria were satisfied prior to detecting the selection of the second user interface element, the first electronic device continues to display the first user interface element after transmission of the message. In some embodiments, the first user interface element is displayed for a first time period (e.g., 10 seconds, 20 seconds, 60 seconds, 120 seconds, or more than 120 seconds) which is measured from the time of initiating transmission of the first message to the second user. Additionally or alternatively the first time period is optionally measured from the time at which the first electronic device receives confirmation that the first message has been successfully transmitted to the second user. By displaying the first user interface element based after initiating transmission of the first message to the second user, the first electronic device allows the user to initiate generating a poll after the first message is sent, and allows other users (e.g., the second user) to provide feedback prior to generating the poll.

In some embodiments, such as shown in Fig. 6E, while displaying the first user interface element (e.g., 620a), the first electronic device (e.g., 600a) detects, via the one or more input devices, an input (e.g., user input 622) to the first user interface element which is selectable to initiate the poll generation process corresponding to content of the one or more messages. In some embodiments, while the first electronic device is displaying the first user interface element, the first electronic device detects a user input (e.g., from the first user) directed to the first user interface element. The input to the first user interface element optionally shares one or more characteristics with user inputs described herein in relation to methods 700 and 900. A user input, as referred to herein, optionally includes touch input, input via a device in digital communication with the electronic device (e.g., keyboard, mouse, stylus, etc.), voice input, gaze, and/or user movement of the electronic device.

In some embodiments, such as shown in Fig. 6F, in response to detecting the input to the first user interface element, the first electronic device displays, in the messaging user interface, a first editing user interface (e.g., 624) for a first poll corresponding to the content of the one or more messages. When the first electronic device detects the user input directed to the first user interface element, the first electronic device displays an editing user interface for the first poll corresponding to the content of the one or more messages. In some embodiments the editing user interface corresponds to one or more editing functions (e.g., adding a poll item, modifying an existing poll item, deleting an existing poll item, etc.) When the first electronic device displays the editing user interface, the first electronic device optionally displays a visual representation of the poll based on the content of the one or more messages. For instance, when the messaging conversation includes a query such as "What time do you want to head out?", and multiple proposed times (e.g., "8pm," "8:30pm," and/or "8:45pm"), the first electronic device optionally displays a visual representation of a poll wherein the poll options are prepopulated to correspond to the proposed times, and wherein the proposed times are optionally selectable to allow the first user to edit the poll options. By prepopulating the poll options in the editing user interface based on the one or more messages of the messaging conversation, the first electronic device reduces the number of user inputs required to generate a poll, and reduces the time which is required to generate the respective poll.

In some embodiments, such as shown in Fig. 6F, the first editing user interface (e.g., 624) for the first poll includes one or more poll fields (e.g., 626a-626c) populated with one or more poll items corresponding to the content of the one or more messages (e.g., messages 612a-612c shown in Fig. 6A-6E). When the first electronic device generates the first visual representation of the poll, the first editing user interface includes one or more fields that are prepopulated by the first electronic device based on the content of the one or more messages. For instance, when the one or more messages are identified to include six independent potential poll options, the first electronic device optionally generates a first editing user interface with six respective poll options corresponding to each of the portions of the message content identified as independent poll options. When presenting the first visual representation, each of the prepopulated poll options are selectable wherein the selection of a poll option allows the user to edit and/or delete the poll option prior to transmitting the poll to the messaging conversation. By prepopulating the first visual representation of the poll with poll options, the first electronic device reduces user inputs required to generate a poll, and by allowing the user to edit respective poll options, the first electronic device allows the user to verify and error-check the poll, thereby reducing editing of the poll after transmitting to other users.

In some embodiments, such as shown in Fig. 6F, the first editing user interface (e.g., 624) for the first poll includes one or more poll fields (e.g., 626a-626d), including a first poll field (e.g., 626d) which is selectable to add an additional poll item to the poll (that optionally does not correspond to the content of the one or more messages). In some embodiments, when the first electronic device generates and displays the first editing user interface of the poll, the first editing user interface of the poll includes a selectable field which allows the user to add an additional poll item. In some embodiments the selectable field shares one or more characteristics (e.g., shape, size, color, etc.) with the prepopulated poll fields. Additionally or alternatively, the user optionally selects a user interface element which when selected, initiates adding an additional poll item. For instance, the user optionally selects a user interface element which indicates "add poll item" to display a editable field to add an additional poll item. When the user selects the selectable field, the user is able to provide user input (e.g., via keyboard, voice input, etc.) to populate the additional poll item within the selectable field. After the user adds a first additional poll item, the first electronic device optionally displays the selectable field and/or the user interface element which is selectable to display the editable field to allow the user to add more additional poll items (e.g., second additional poll item, third additional poll item, etc.) to the poll. By including a poll field that is selectable to add an additional poll item to the poll, the first electronic device allows the user to modify the poll prior to sending the poll to reduce the need to edit and/or retransmit the poll after initial transmission to the second user.

In some embodiments, such as shown in Fig. 6F, the first editing user interface (e.g., 624) for the first poll is displayed in a first portion (e.g., first portion 614a corresponding to composing a message for transmission to the messaging conversation) of the messaging user interface configured to receive (e.g., via keyboard input, voice input, etc.) user input, (e.g., text input, graphical input, AI/ML model generated input, etc.) corresponding to message drafting, to transmit to the messaging conversation. In some embodiments the first editing user interface of the poll is displayed in a portion of the messaging user interface which corresponds to where a user drafts a message via user input (e.g., via keyboard, voice input, etc.). Accordingly, the user inputs to the first editing user interface of the poll (e.g., adding additional poll items, editing poll items, etc.) optionally shares one or more characteristics with user inputs corresponding to drafting message content. Additionally or alternatively, when the first user is ready to transmit the poll to the messaging conversation, the user optionally transmits the poll via selection to a second user interface element which also corresponds to sending a message (e.g., text based, with media, etc.) to the messaging conversation. By displaying the first visual representation of the poll in the portion of the user interface that corresponds to drafting message content, the first electronic device reduces the need to display an additional user interface, and maintains consistency of functionality with the drafting of a message, which reduces the number of operations required to generate a poll as related to message drafting.

In some embodiments, such as shown in Fig. 6F, displaying the first editing user interface (e.g., 624) for the first poll includes displaying a first visual representation (e.g., 625a) of the first poll with a first visual characteristic (e.g., shading of the poll items 626a-626c) (e.g., color, outline, glow, visual characteristic corresponding to AI/ML model generated content, etc.) at a first level (e.g., without shading) . For instance, when the first electronic device displays the first editing user interface of the poll, a first visual representation of the poll it is displayed in the messaging user interface. In some embodiments, the editing user interface of the first poll is displayed including a first visual representation of the first poll having a visual characteristic (e.g., a first color, a first shade of a first color, a first fill pattern, first border or a first visual effect (e.g., specular highlight, animation, etc.)).

In some embodiments, such as shown in Fig. 6F, while displaying the messaging user interface (e.g., 604a) and the first visual representation (e.g., 625a) of the first poll with the first visual characteristic at the first level, displaying, in the messaging user interface, a second user interface element (e.g., 613), which is selectable to initiate transmitting the first poll to the messaging conversation (e.g., as shown in Fig. 6F-6G). In some embodiments, while displaying the first user interface of the poll, including the first visual representation of the poll, the first electronic device displays a second user interface element which, when selected, initiates sending the first poll to the second user. In some embodiments, the second user interface element is the same user interface element which a user selects to send a message to another user. The second user interface element optionally shares one or more characteristics with the second user interface element that is selectable to initiate transmitting the first pill to the messaging conversation as described herein in relation to method 700 and/or method 900. By displaying the first visual representation of the poll, included in the first editing user interface of the poll, with a visual characteristic at a first level, the first electronic device provides visual indication that the first poll is in the editing process and has not been sent and/or updated with regard to the other users included in the messaging conversation.

In some embodiments, such as shown in Fig. 6F, while displaying the messaging user interface (e.g., 604a) including the first visual representation (e.g., 625a) of the first poll with the first visual characteristic at the first level and the second user interface element, detecting, via the one or more input devices, a user input (e.g., 628) corresponding to selection of the second user interface element (e.g., 613) which is selectable to initiate transmitting the first poll to the messaging conversation. In some embodiments, while the first electronic device displays the first editing user interface of the first poll, the first electronic device detects an input which corresponds to a request to initiate transmitting the poll to the messaging conversation. The input corresponding to a request to initiate transmitting the poll optionally shares one or more characteristics with one or user inputs as described herein in relation to methods 700 and/or 900. A user input, as referred to herein, optionally includes touch input, input via a device in digital communication with the electronic device (e.g., keyboard, mouse, stylus, etc.), voice input, gaze, and/or user movement of the electronic device.

In some embodiments, such as shown in Fig. 6F, in response to detecting the input (e.g., 628) corresponding to selection of the second user interface element (e.g., 613), the first electronic device (e.g., 600a)transmits the first poll to the messaging conversation; In some embodiments, in response to detecting the user input to the second user interface element corresponding to a request to initiate transmitting the first poll to the messaging conversation, the first electronic device transmits the first poll to the messaging conversation wherein it is viewable by the one or more users in the messaging conversation.

In some embodiments, such as shown in Fig. 6G, in response to detecting the input (e.g., 628) corresponding to selection of the second user interface element (e.g., 613), the first electronic device displays a second visual representation (e.g., 625b) of the first poll , different from the first visual representation of the first poll, in a first portion of the messaging user interface. In some embodiments, in response to detecting the user input to the second user interface element corresponding to a request to initiate transmitting the first poll to the messaging conversation,, after initiating transmitting the first poll to the messaging conversation and/or after the first poll is successfully transmitted to the messaging conversation (e.g., received by a central server, and/or received by one or more other electronic devices), the first electronic device displays a second visual representation of the first poll, in a first portion of the messaging conversation. In some embodiments, the first portion of the messaging conversation corresponds to a portion of the messaging user interface where messages from the first user and/or one or more second users are displayed. The second visual representation of the first poll is optionally visually different from the second visual representation of the first poll.

In some embodiments, such as shown in Fig. 6F-Fig. 6G, in response to detecting the input (e.g., 628) corresponding to selection of the second user interface element (e.g., 613), the first electronic device (e.g., 600a) ceases to display the first visual representation (e.g., 625a) of the first poll. In some embodiments, in response to detecting the user input to the second user interface element corresponding to a request to initiate transmitting the first poll to the messaging conversation, the electronic device optionally ceases displaying the first visual representation of the first poll. Ceasing the displaying of the first visual representation of the first poll is optionally performed in response to detecting the input to the second user interface element corresponding to a request to initiate transmitting the first poll to the messaging conversation, and/or in response to displaying the second visual representation of the first poll. By displaying second visual representation of the first poll, different from the first visual representation of the first poll, the first electronic device provides a visual indication that the first poll is not in the editing user interface, the first poll is not currently editable, and/or the first poll is active in the messaging conversation.

In some embodiments, such as shown in Fig. 6G, displaying the second visual representation (e.g., 625b) of the first poll includes displaying second visual representation of the first poll with the first visual characteristic (e.g., fill of the poll items 626a-626c)at a second level (e.g., 630a), different than the first level (e.g., fill of the poll items as shown in Fig. 6F without shading). In some embodiments, displaying the second visual representation of the first poll includes displaying the first poll in the messaging conversation the first visual characteristic at a second level. The first visual characteristic optionally corresponds color, tone, contrast, brightness, opacity, shading, blur, three-dimensional effect, two-dimensional effect, font, and/or font effect (e.g., bold, italic, size, etc.). By displaying the second visual representation of the first poll with the first visual characteristic at a second level, different from first level, the first electronic device provides a visual indication that the first poll is not in the editing user interface, the first poll is not currently editable, and/or the first poll is active in the messaging conversation.

In some embodiments, such as shown in Fig. 6G,displaying the second visual representation of the first poll in the messaging user interface includes displaying a first poll item (e.g., poll item 626c at electronic device 600b) with a second visual characteristic at a first level (e.g., horizontal length, see poll item 626c), and displaying a second poll item (e.g., poll item 626b at electronic device 600b) with the second visual characteristic at the first level (e.g., same length in relation to poll item 626b).. In some embodiments while the second visual representation of the first poll is displayed in the messaging conversation, the poll items, prior to user input directed to their selection and/or deselection, each of the poll items share a second visual characteristic. The second visual characteristic optionally corresponds to a dimensional aspect (e.g., length, width, area, volume, color, font, font effect, etc.), and/or one or more visual indications of selections and/or deselections directed to the pill items provided from the users included in the messaging conversation. For instance, a first poll item corresponding to "Baja" and a second poll item corresponding to "Belize" are each displayed with the second visual characteristic at the same level when the second visual representation of the poll is displayed int messaging conversation. In some embodiments, the second visual characteristic corresponds to the color which the first poll item is displayed wherein the color of the first poll item changes according to the selection of the first poll item of the first user and/or the second user.

In some embodiments, the first electronic device detects an event corresponding to receiving an input (e.g., 632a) from the first user or the second user corresponding to selection of the first poll item. In some embodiments, the electronic device detects a user input from one or more users included in the messaging conversation which corresponds to the respective user's selection of the first poll item. The input corresponding to the selection of the first poll item optionally shares one or more characteristics with the one or more user inputs described herein in relation to methods 700 and/or 900. For instance, the first electronic device optionally detects an event corresponding to a selection, by the second user, directed to "Belize." A user input, as referred to herein, optionally includes touch input, input via a device in digital communication with the electronic device (e.g., keyboard, mouse, stylus, etc.), voice input, gaze, and/or user movement of the electronic device. In some embodiments, prior to detecting a selection to the first poll item, the first electronic device displays the first poll item with a first color.

In some embodiments, such as shown in Fig. 6G, in response to detecting the event, the first electronic device updates the second visual representation (e.g., 625b) of the first poll. In some embodiments, in response to detecting the first event, the first electronic device optionally updates the second visual representation of the first poll to visually modify the first poll item (e.g., "Belize") to visually indicate the detected event corresponding to the first poll item. In some embodiments, in response to detecting that the first poll item has been selected, the first electronic device displays the first poll item with a second color. In some embodiments, when the first electronic device detects that a selection to the first poll item has been made by the first user, the first electronic device displays the first poll item with the second color, additionally or alternatively when the first electronic device detects a selection has been made to the first poll item by the second user, the first electronic device optionally forgoes changing the second visual characteristic of the first poll item from the first color to the second color.

In some embodiments, such as shown in Fig. 6G, when updating the second visual representation of the first poll, the first electronic device displays the first poll item (e.g., 626c) with the second visual characteristic (e.g., length) at a second level (e.g., see length of poll item 626c in relation to poll item 626b), greater than the first level (e.g., as shown in relation to poll item 626b). In some embodiments, when updating the second visual characteristic to modify the. the second visual characteristic of the poll item, the first poll item is displayed with the second visual characteristic at a second level, which is greater than the first level. Additionally or alternatively, displaying the first poll item with the second visual characteristic at the second level optionally includes displaying the first poll item with an identifier that corresponds with the user that provided the selection of the first poll item. Accordingly, adding a user identifier corresponding to a selection optionally corresponds to increasing the level of the second visual characteristic of the first poll item. In some embodiments, each further selection of the first poll item, or other poll item, results in the display of the respective poll item with the second visual characteristic at a further increased level. Accordingly, detection of two selection events to the first poll item optionally results in displaying the first poll item at a third level, greater than the second level, and so on and so forth. Displaying the first poll item with the second visual characteristic the second level in response to detecting the event corresponding to the selection of the first poll item, provides a visual indication of the selection of the first poll item.

In some embodiments, the second visual characteristic of the first poll item corresponds to a dimension along a first axis (e.g., lateral length) of the first poll item in the messaging user interface. In some embodiments, the second visual characteristic corresponds to the length of the first poll (e.g., aligned with the text content of the poll item). Accordingly, when the user input corresponding to the selection of the first poll is detected, each additional selection input results in the increase of the level of the length of the first poll item. For instance, when there are 3 user selections from users included in the messaging conversation, the first poll item is displayed with the length increased by three levels from the first level to a fourth level. By increasing the length of a poll item incrementally based on the selection and/or the number of selections detected to the first poll item, the electronic device provides visual indication of selections to the first poll item.

In some embodiments, such as shown in Fig. 6M, after detecting the event corresponding to selection of the first poll item (e.g., see selection 632c at the first electronic device directed to poll item 626b) and while displaying the second visual representation (e.g., third visual representation 626c) of the first poll, including displaying the first poll item with the second visual characteristic at the second level (e.g., length of the second poll item 626b in relation to length of the fourth poll item 626d), the first electronic device detects a second event corresponding to receiving an input (e.g., 638a) corresponding to deselection of the first poll item. In some embodiments, after detecting the first event corresponding to the selection of the first poll item and displaying the first poll item with an increased level and/or different level of visual characteristic (e.g., increased length, color change etc.), the electronic device detects a second event which corresponds to the deselection of the first poll item. For instance, after detecting that the second user selected the first poll item thus increasing the level of the second visual characteristic, the first electronic device detects that the second user deselected the first poll item. A user input, as referred to herein, optionally includes touch input, input via a device in digital communication with the electronic device (e.g., keyboard, mouse, stylus, etc.), voice input, gaze, and/or user movement of the electronic device.

In some embodiments, such as shown in Fig. 6N, in response to detecting the second event, the first electronic device displays the first poll item (e.g., 626b) with the second visual characteristic (e.g., length) at the first level (e.g., see length of poll item 626b at first length, in relation to the first poll item 626a at a second length) . In response to detecting the second event corresponding to the deselection of the first poll item, the electronic device optionally displays the first poll item with the second visual characteristic of the first poll item at the first level. Additionally or alternatively, in the event that multiple users provide selection inputs, the second event corresponding to the deselection of the first poll item optionally reduces the second visual characteristic of the first poll by one level. For instance, after detecting selection events from the first user directed to the first poll item, the first electronic device detects a selection event from the second user corresponding to the selection of the first poll item. Accordingly, based on the two selection events, the first electronic device optionally displays the second visual representation of the poll with the second visual characteristic at a second level corresponding to two selection events. Following the two selection events, the first electronic device detects a deselection event from the first user, and accordingly the first electronic device displays the second visual representation of the first poll with the second visual characteristic at a third level which is less than the second level, and greater than the first level. In some embodiments a deselection to the first poll item can only be performed by a user who had previously been recorded as providing a first selection event. Additionally or alternatively, in some embodiments a deselection event optionally corresponds to a "downvote" and does not require a previously recorded selection event by the user performing the deselection of the first poll item. In some embodiments, when the first electronic device is displaying the first poll item with the second visual characteristic at the second level, and the first electronic device detects the second event corresponding to a deselection of the first poll item from the second user, the first electronic device optionally forgoes displaying the first poll item with the second visual characteristic at the first level. Additionally or alternatively, when the first electronic device is displaying the first poll item with the second visual characteristic at the second level, and the first electronic device detects the second event corresponding to a deselection of the first poll item from the first user, the first electronic device optionally displays the first poll item with the second visual characteristic at the first level. By reducing the level of the second visual characteristic based on a deselection event, the electronic device provides a net visual representation of the number of selections received to the first poll item.

In some embodiments, the one or more criteria include a criterion that is satisfied when a first message of the one or more messages includes a query, such as shown in relation to Fig. 6A-6D wherein the messages (e.g., 612a-612c) include multiple queries. In some embodiments, the one or more criteria are based on the content of one or more messages that are included in the messaging conversation. In some embodiments, the one or more criteria are satisfied when the content of the one or more messages includes a query posed. In some embodiments a query is identified by the use of a question-mark punctuation. In some embodiments, a query is identified by detecting the use of one or more key words (e.g., what, where, when, how) and their location (e.g., first word, or last word) within the message within which they are found. In some embodiments, a query is identified by detecting the use of one or more key phrases (e.g., what is, where do, what time, etc.) within a message. Additionally or alternatively, a query is optionally identified using one or more AI/ML models. By basing the one or more criteria on detecting when a first message includes a query, the electronic device is able to identity the initiation of a topic of conversation within the messaging conversation and provide relevant suggestions for poll items which correspond to the detected query.

In some embodiments, the query corresponds to a predetermined content type (e.g., times, dates, locations, foods, shows, movies, etc.), such as shown in relation to Fig. 6A-6D wherein the messages (e.g., 612a-612c) include multiple queries corresponding to food. In some embodiments, the one or more criteria are satisfied when the query of the first message corresponds to a predetermined content type. The predetermined content type optionally includes content corresponding to times (e.g., date, time, date, length of time, etc.), food (e.g., cuisine, establishments, etc.), locations (e.g., residence of a user in the messaging conversation, vacation destination, cities, and/or countries), activities (e.g., breakfast, lunch, going to the movies, sporting event, etc.) and other common predetermined content types. In some embodiments, the predetermined content types are generated through recognition of common queries and topics of conversation sent or received by the first electronic device and/or with common users included in the messaging conversation. In some embodiments, the predetermined content type is determined by one or more AI/ML models. In some embodiments, when the query does not correspond to the predetermined content type, the criterion based on the content type is not satisfied. In some embodiments, when the first message does not include a query, the criterion based on the content type is not satisfied. By basing the satisfaction of the one or more criteria on predetermined content type, the electronic device is able to more precisely suggest the use of a poll, and reduces the chances of displaying the first user interface element when a poll is unnecessary.

In some embodiments, detecting that the one or more messages satisfy the one or more criteria includes using a first AI/ML model to determine whether the one or more messages satisfy the one or more criteria, such as if the determination to display the user interface elements 620a-620c at Fig. 6E was at least partially determined via one or more AI/ML models. In some embodiments, a first AI/ML model is used to help differentiate between when the one or more criteria are satisfied and when the one or more criteria are not satisfied. The first AI/ML model optionally determines the satisfaction of the one or more criteria based on: a first message which includes a query, a predetermined content type, under which circumstances the first user has manually generated a poll in other conversations, under which circumstances the first user has manually generated a poll with one or more of the users included in the messaging conversation, under which circumstances the second user has generated a poll while in a messaging conversation with the first user, and/or the location of the first electronic device. By using one or more AI/ML models to determine the satisfaction of the one or more criteria, the electronic device is able to more precisely suggest the use of a poll, and reduces the chances of displaying the first user interface element when a poll is unnecessary.

In some embodiments, such as shown in fig. 6Q,displaying the messaging user interface includes displaying a second user interface element (e.g., 650), which is selectable to display one or more options (e.g., user interface menu 652. At Fig. 6Q) corresponding to actions associated with the messaging conversation, including a third user interface element (e.g., 656), different from the first user interface element (e.g., 620a), which is selectable to initiate the poll generation process. In some embodiments, while the electronic device displays the messaging interface, the messaging user interface includes a third user interface element that is selectable to manually initiate (e.g., without electronic device suggestion) the poll generation. In some embodiments, the second user interface element is selectable to initiate a plurality of operations corresponding to the messaging user interface. In some embodiments, in response to detecting a selection of the third user interface element, the first electronic displays a user interface which includes one or more selectable options to initiate one or more options, including a user interface element that is selectable to initiate the manual poll generation process. Selection of the third user interface element optionally corresponds to the display of one or more options including transmitting media, animations, stickers, a voice recording, monetary funds, a location, and/or content corresponding to an application installed on the first electronic device, via the messaging application. By including a user interface element that is selectable to initiate the poll generation process without requiring the satisfaction of the one or more criteria, the electronic device allows the first user to generate a poll without requiring a suggestion by the electronic device to do so.

In some embodiments, such as shown in Fig. 6E, the first user interface element (e.g., 620a) is displayed in a first portion (e.g., second portion 618a wherein selectable suggestions are displayed) of the messaging user interface corresponding to display of suggested content corresponding to user input directed to a second portion (e.g., 614a) of the messaging user interface configured to receive user input when composing one or more messages to transmit to the messaging conversation. In some embodiments the second portion of the messaging user interface optionally shares one or more characteristics with the portion of the messaging user interface corresponding to message drafting as described herein in relation to methods 700 and/or 900. In some embodiments, the respective electronic device displays the first user interface element in a first portion of the messaging user interface in which text suggestions, corresponding to drafting input in a second portion of the messaging user interface. In some embodiments, the respective electronic device (e.g., first electronic device, second electronic device, third electronic device, etc.) optionally displays one or more text suggestions in the first portion of the messaging user interface, wherein the text suggestions correspond to the user input received in first portion. In some embodiments, when the respective electronic device determines that the one or more messages satisfy the one or more criteria, the respective electronic displays the first user interface element in the first portion of the messaging user interface concurrently with, instead of, and/or overlaid over the text suggestions. In some embodiments, as the user is providing input to a portion of the messaging user interface corresponding to composing a message, the electronic device optionally determines one or more suggested words based on a partial word, the electronic device displays one or more selectable options in the first portion of the messaging user interface which correspond to the partial word. For instance, when the input includes "sus" as a partial word, the electronic device optionally displays selectable user interface elements corresponding to "sushi," "suspect," and "suspense" wherein each user interface element is selectable to complete the partial word based on the respective user interface element. In some embodiments, the first portion of the messaging user interface is displayed in conjunction with or adjacent to (e.g., above, below, or beside) a portion of the messaging user interface corresponding to a keyboard user interface. By displaying the first user interface element in the first portion of the messaging user interface element, the electronic device provides a visible and convenient avenue to initiate the poll generation process, and reduces the number of inputs and/or displayed elements required when the one or more criteria are satisfied.

In some embodiments, such as shown in Fig. 6E, displaying the first user interface element (e.g., 620a) in the first portion (e.g., 618a) of the messaging user interface includes replacing display of a first selectable option for inserting first suggested content with the first user interface element. In some embodiments, when displaying the first user interface element in the first portion of the messaging user interface, the electronic device optionally ceases display of the text suggestions displayed in the first portion prior to displaying the first user interface element. By replacing the display of the text suggestions in order to display the first user interface element, rather than displaying the first user interface element concurrently with the text suggestions, the electronic device reduces the amount of power consumption required to display the first user interface element.

In some embodiments, the first user interface element (e.g., 620a) is displayed in the first portion of the messaging user interface concurrently with a first selectable option for inserting first suggested content, such as if the first user element was displayed concurrently with selectable suggestions (e.g., such as selectable suggestions 616 as shown in relation to the second electronic device 600b in Fig. 6C). In some embodiments, when displaying the first user interface element in the first portion of the messaging user interface, the electronic device optionally displays the first user interface element concurrently with the display of the text suggestions displayed in the first portion. By displaying the first user interface element concurrently with the display of the text suggestions in the first portion of the messaging user interface, the electronic device reduces additional user input corresponding with a request to cease display of the first user interface element in favor of displaying the text suggestions.

In some embodiments, such as shown in Fig. 6D, displaying the first user interface element (e.g., 620a) includes displaying the first user interface element with a first visual effect (e.g., 619a) having a first visual appearance. In some embodiments, when displaying the first user interface element such as in the first portion of the messaging user interface, the first user interface element is displayed with a first visual effect. In some embodiments the first visual effect shares one or more characteristics with a first visual effect associated with a virtual assistant, and/or content generated by one or more AI/ML models. The visual effect optionally includes an animation, colors from a first color palette (e.g., High Dynamic Range (HDR), and/or Standard Dynamic Range Colors (SDR), and/or a first font. In some embodiments the one or more visual effects are different than the visual characteristic as described herein in relation to methods 700 and/or 900.

In some embodiments, such as shown in Fig. 6C, displaying the suggested content (e.g., 616) in the first portion (e.g., 618b) of the messaging user interface includes displaying the suggested content without the first visual effect. In some embodiments, when the respective electronic device displays the text suggestion based on the user input (e.g., corresponding to drafting a message) in the second portion of the messaging user interface, the respective electronic device displays the text suggestion with a second visual effect, different than the first visual effect. In some embodiments the second visual effect does not include an animation, includes colors from a second color palette, different than the first color palette, and/or a second font, different from the first font. By displaying the first user interface element with a first visual effect, different from a second visual effect with which the text suggestions are displayed in the first portion of the messaging user interface, the electronic device visually alerts the user that a poll generation process is available with a selection of the first user interface element, and reduces the number of inputs required to generate a poll based on the content of the one or more messages in the messaging conversation.

In some embodiments, such as shown in Fig. 6E, wherein the one or more criteria includes a criterion that is satisfied when the messaging conversation includes three or more users. In some embodiments, the one or more criteria includes a criterion that is satisfied when the messaging conversation includes a predetermined number of users (e.g., two users, three users, four users, or more than four users). In some embodiments, when the conversation does not include more than the predetermined number of users, the electronic device forgoes displaying the first user interface element corresponding to initiating the poll operation process. By including a criterion that the conversation includes a predetermined number of users, such as three users, the electronic device preserves power consumption by not displaying the first user interface element and/or gating the determination of the satisfaction of the one or more criteria.

In some embodiments, , such as shown in Fig. 6E, the one or more criteria include a criterion that is satisfied when the content of the one or more messages corresponds to a first content type (e.g., types of food). In some embodiments, the one or more criteria includes a criterion that is satisfied when the one or more messages of the conversation correspond to a first content type. For instance, a first content type optionally corresponds to food types, locations (e.g., restaurants, cities, countries, etc.), and/or times (e.g., time of day, day, date, etc.). The forementioned examples of the first content type are exemplary and are not limited thereto. In some embodiments, when the one or more messages correspond a second content type, the electronic device foregoes displaying the first user interface element. For instance, when a query is sent corresponding to "How many jellybeans fit in a box having a volume of one liter?" and the subsequent messages responding the query include guesses of "775," "683," "843," the electronic device optionally forgoes displaying the first user interface element. By included a criterion that is satisfied when the content of the one or more messages corresponds to a first content type, the electronic device reduces power consumption by not displaying the first user interface element when the content of the one or more messages do not correspond to the first content type.

In some embodiments, as shown in Fig. 6E, the one or more criteria include a criterion that is satisfied when the one or more messages were composed (and/or transmitted to the messaging conversation) by the first user, such as if only the first electronic device 600a displayed the first user interface element (e.g., 620a) based on the first message (e.g., 612a) initiating the conversation about dinner options. In some embodiments, the one or more criteria include a criterion that is satisfied when the one or more messages were composed by a first user and/or an electronic device corresponding to the first user. In some embodiments, the one or more criteria are satisfied when the one or more messages are composed by a user corresponding to the respective electronic device. In some embodiments, when the one or more messages that satisfied the one or more criteria were composed and/or sent by the second user to the messaging conversation, the criterion based on the one or more messages being composed by the first user is not satisfied, the first user interface element is not displayed at the first electronic device. In some embodiments, the criterion based on the one or more messages being composed by the first user are satisfied when the first user responds to a query independent of which user composed and/or sent the query to the messaging conversation. For instance, the one or more criteria optionally include a criterion that is satisfied when the query and/or one or more responses to a query are composed and/or sent from the respective electronic device. Such that, in some embodiments the first user interface element is displayed at an electronic device corresponding to a respective user when the respective user composed the query, and not at electronic devices which do not correspond to the respective user. In some embodiments, the first user interface element is displayed at an electronic device corresponding to one or more respective users when the one or more respective users responded to the query. In some embodiments, the first user interface element is displayed at one or more first electronic devices corresponding to first respective users included in a messaging conversation, and the first user interface element is not displayed at one or more second electronic devices corresponding to second respective users who are included in the messaging conversation. By including a criterion which is based on which user drafted one or more messages (e.g., query, and/or responses to the query), the respective electronic devices which do not detect the one or more criteria being satisfied reduce power consumption by forgoing displaying the first user interface element.

In some embodiments, as shown in Fig. 6E, the one or more criteria include a criterion that is satisfied when the one or more messages were composed (and/or transmitted to the messaging conversation) by the first user and/or the second user (and/or any other user in the messaging conversation), such as if the first electronic device (e.g., 600a) and the second electronic device (e.g., 600b) displayed the first user interface element (e.g., 620a-620b), and the third electronic device (e.g., 600c) did not display the first user interface element (e.g.,620c) on the basis of the third electronic device not sending any of the one or more messages (e.g., 612a-612c) corresponding to the suggested poll. In some embodiments, when one or more electronic devices corresponding to respective users included in the messaging conversation determine that the one or more criteria have been satisfied, each electronic device displaying the messaging conversation displays the first user interface element. Accordingly, when the one or more criteria are satisfied for a first user, the one or more criteria is universally satisfied for each user included in the messaging conversation, irrespective of which user(s) in the messaging conversation composed and/or transmitted the one or more messages to the messaging conversation. By universally applying the satisfaction of the one or more criteria to each user included in the messaging conversation, the one or more respective electronic devices reduce power consumption by allowing any one of the users included in the messaging conversation to initiated the poll generation process, thus preserving power consumption at each of the one or more respective electronic devices, and/or infrastructure, by reducing the need for user inputs at each of the respective electronic devices and/or communication transmissions therebetween.

It should be understood that the particular order in which the operations in Fig. 7 have been described is merely exemplary and is not intended to indicate that the described order is the only order in which the operations could be performed. One of ordinary skill in the art would recognize various ways to reorder the operations described herein. Additionally, it should be noted that details of other processes described herein with respect to other methods described herein (e.g., method 900) are also applicable in an analogous manner to method 700 described above with respect to Fig. 7. For example, the operation of displaying a selectable user interface element based on content of one or more messages associated with a messaging conversation with reference to method 700 optionally has one or more of the characteristics of displaying certain visual representations of a poll (e.g., visual characteristics, location, content, etc.) based on the type of user input and/or which electronic device detected the user input described herein with reference to other methods described herein (e.g., method 900). For brevity, these details are not repeated here.

The operations in the information processing methods described above are, optionally, implemented by running one or more functional modules in an information processing apparatus such as general purpose processors (e.g., a as described with respect to Figs. 1A-1B, 3, 5A-5H) or application specific chips. Further, the operations described above with reference to Fig. 7 are, optionally, implemented by components depicted in Figs. 1A-1B. For example, displaying operation 702, detecting operation 704, and displaying operation 706 are, optionally, implemented by event sorter 170, event recognizer 180, and event handler 190. When a respective predefined event or sub-event is detected, event recognizer 180 activates an event handler 190 associated with the detection of the event or sub-event. Event handler 190 optionally utilizes or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in Figs. 1A-1B.

The embodiments described below are directed toward the user interface and user experience associated with the use of polls associated with a messaging conversation between multiple users. The embodiments described below are directed toward interactions of multiple users corresponding to the functionality, visual representation, and/or interactions corresponding to a respective poll.

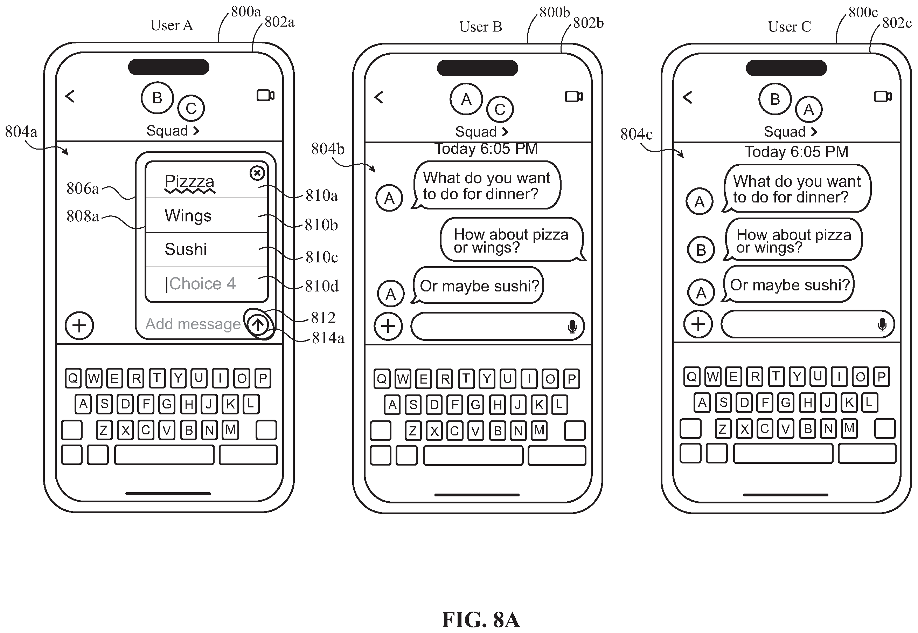

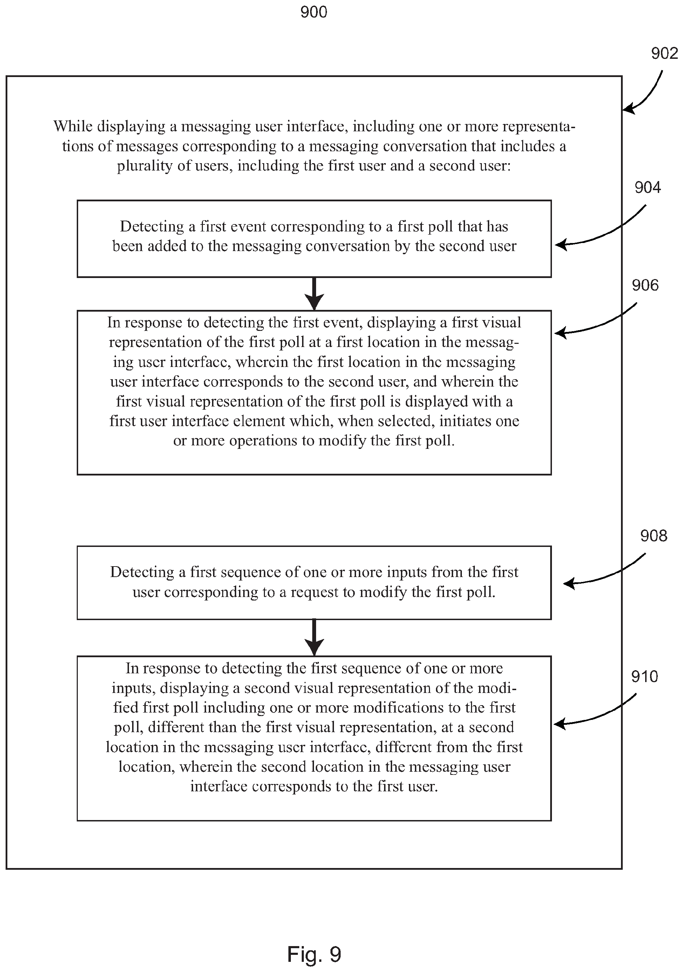

Fig. 8A-Fig. 8Q illustrate exemplary ways, based on one or more criteria, that one or more polls are displayed in relation to a messaging conversation at one or more electronic devices. The embodiments in these figures are used to illustrate the processes described below, including the processes described in Fig. 9 of one or more visual representations of a poll while generating the poll, editing the poll, and/or after the poll has been sent to the conversation. Although Figs. 8A-8Q illustrate various examples of ways an electronic device is able to perform the processes described below with respect to Fig. 9, it should be understood that these examples are not meant to be limiting, and the electronic device is able to perform one or more processes described below with reference to Fig. 9 in ways not expressly described with reference to Figs. 8A-8Q. In some embodiments, while the methods for displaying visual representations of polls are described in the context of user interface corresponding to a single messaging conversation, the context should be seen as exemplary, and should not be viewed as limiting to the disclosure. In some embodiments, the methods and processes described herein can be applied in multiple contexts where the display of one or more polls, one or more user interface element that are selectable to generate a poll based on the content of the one or more messages, and/or one information corresponding to one or more polls would be desired.

Fig. 8A illustrates a messaging conversation shown at a first electronic device 800a associated with a User A, a second electronic device 800b associated with User B, and a third electronic device 800c associated with User C. Each of the respective electronic devices display the messaging conversation via their display generation component 802a-802c. As shown in Fig. 8A, the first electronic device, associated with User A, has detected a request to display the editing user interface corresponding to a poll functionality. In response to the request to display the editing user interface, the first electronic device 800a displays, via the display generation component 802a, messaging user interface 804a, including a first visual representation 808a of a poll within a portion 806a of the messaging user interface corresponding to composing messages for delivery to the messaging conversation. As shown, the first electronic device has received inputs and/or generated content corresponding to the messaging conversation, resulting in entries corresponding to poll items including a first poll item 810a "Pizzza," a second poll item 810b "Wings," a third poll item 810c "Sushi," and a fourth poll item 410d which has been left blank. While the first visual representation 808a of the poll is displayed at the first electronic device, the first visual representation 808a is not displayed at the second electronic device 800b or the third electronic device 800c, wherein the second and third electronic device continue displaying the messaging conversation. Following receiving the entries corresponding to the forementioned poll items, the first electronic device detects an input 812 corresponding to selection of an affordance 814a that is selectable to send the poll to the messaging conversation.

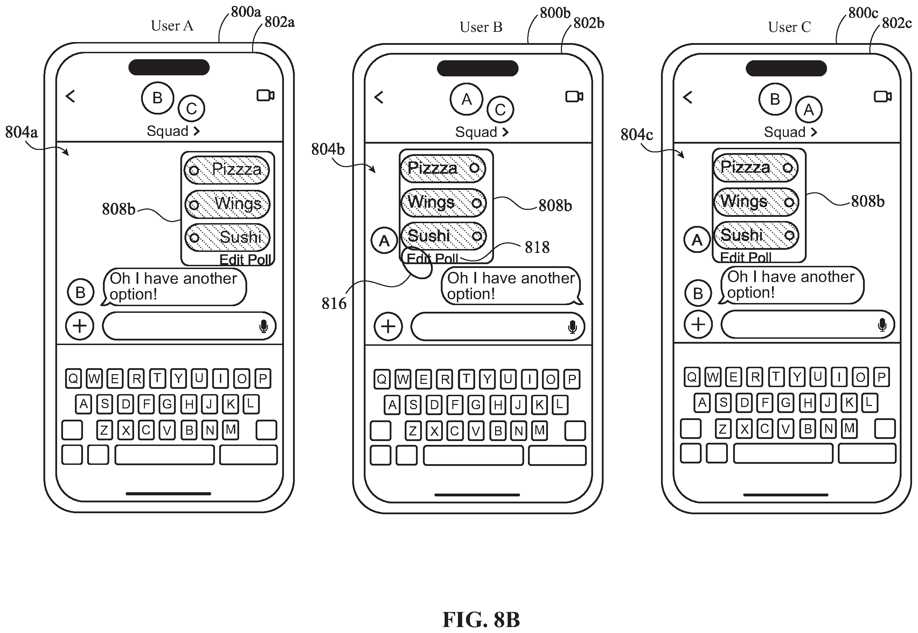

As shown in Fig. 8B, after the poll has been sent to the messaging conversation by the first electronic device 800a, a second visual representation 808b of the poll is displayed within the messaging user interface 804a-804c at each of the respective electronic devices 800a-800c. The second visual representation 808b is displayed in the same chronologically based location, as related to messages which are sent to the messaging conversation before and after the first poll is sent to the messaging conversation. For instance, the second visual representation 808b of the first poll is displayed after the message "Or maybe sushi?" in the messaging conversation sent by User A, and before the message "Oh I have another option!" which is sent to the messaging conversation after the poll is sent to the messaging conversation. Furthermore, the second visual representation 808b of the poll is displayed at the respective electronic devices on the left side of the messaging user interface or the right side of the messaging user interface depending upon which user sent the poll to the messaging conversation. In the illustrated instance for example, the second visual representation 808b of the poll is displayed on the right side of the first electronic device 800a due to the poll being sent to the messaging conversation via the first electronic device and/or by User A. Additionally or alternatively, the second visual representation 808b of the poll is displayed on the left side of the messaging user interface due to the poll not being sent to the messaging conversation via the second electronic device 800b or the third electronic device 800c, and/or by the respective users. While the second visual representation 808b of the poll is displayed at the second electronic device 800b, User B, via the second electronic device 800b sends a message of "Oh I have another option!" to the messaging conversation, after which the second electronic device detects a user input 816 corresponding to the selection of an affordance 818, which when selected corresponds to a request to display the editing user interface corresponding to the poll.

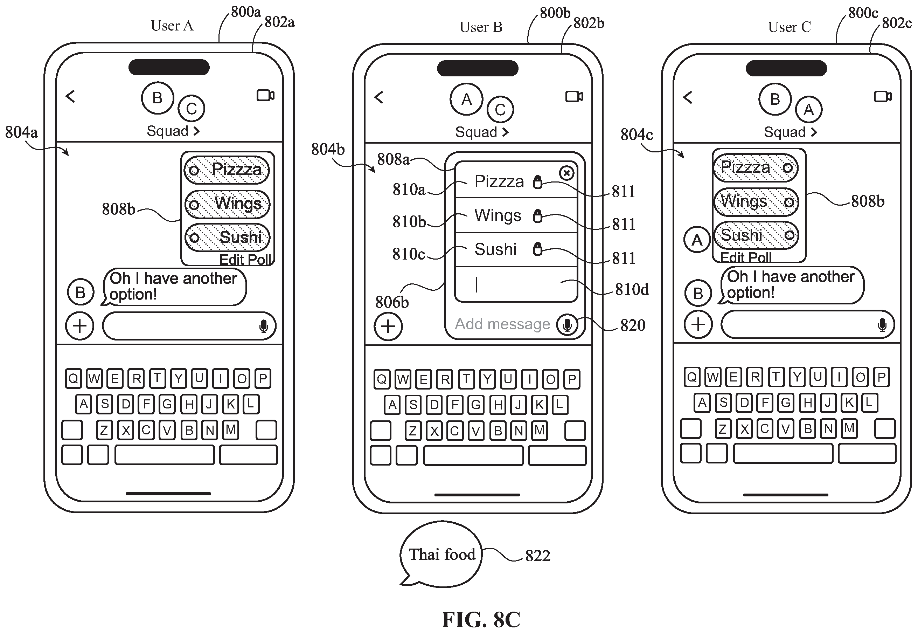

As shown in Fig. 8C, the second electronic device 800b displays the first visual representation 808a of the poll in the portion of the messaging user interface 804b within the portion 806b of the messaging user interface corresponding to composing messages for delivery to the messaging conversation. The poll items 810a-810c, which were added to the poll by User A, are locked as indicated by a lock icon 811. Accordingly User B is able to add a poll item corresponding to the fourth pill item 810d, but is unable to edit and/or delete the poll items that were not added by User B. While the first visual representation of the poll is displayed at the second electronic device, the first electronic device and the third electronic device continue displaying the second visual representation 808b of the poll in the messaging user interface 804a and 804c. While displaying the first visual representation of the poll, the second electronic device 800b detects a user input corresponding to a selection 820 corresponding to a request to provide input via spoken input, and the second electronic device subsequently receives a spoken input 822 from User B, corresponding to "Thai Food" directed to the fourth poll item 810d.

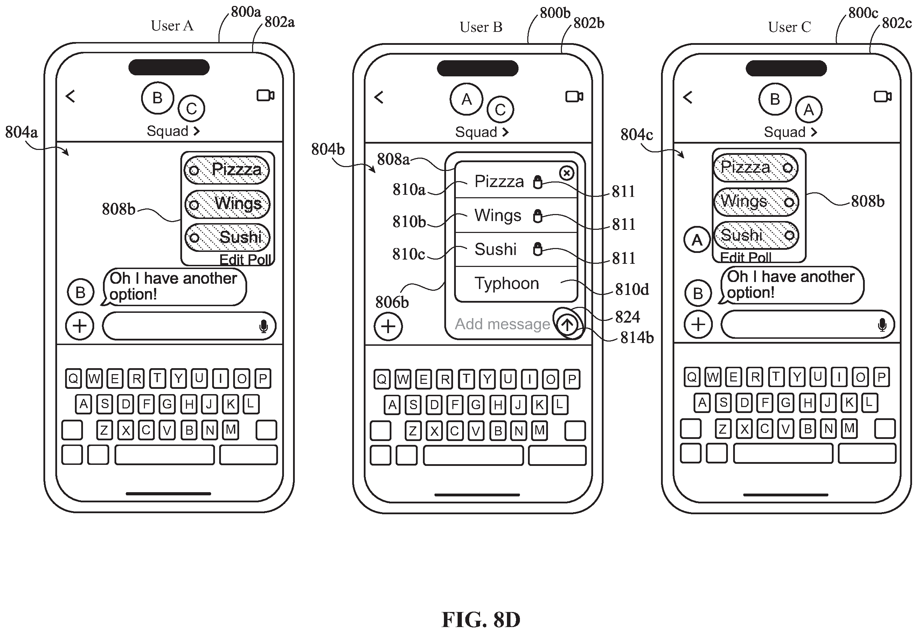

As shown in Fig. 8D, the second electronic device 800 has incorrectly transcribed the detected user input of "Thai Food" as "Typhoon" corresponding to the fourth poll item. Following the transcription of the fourth poll item 810d, the electronic device detects a user input 824 directed to the affordance 814b that is selectable to send the updated poll to the messaging conversation.

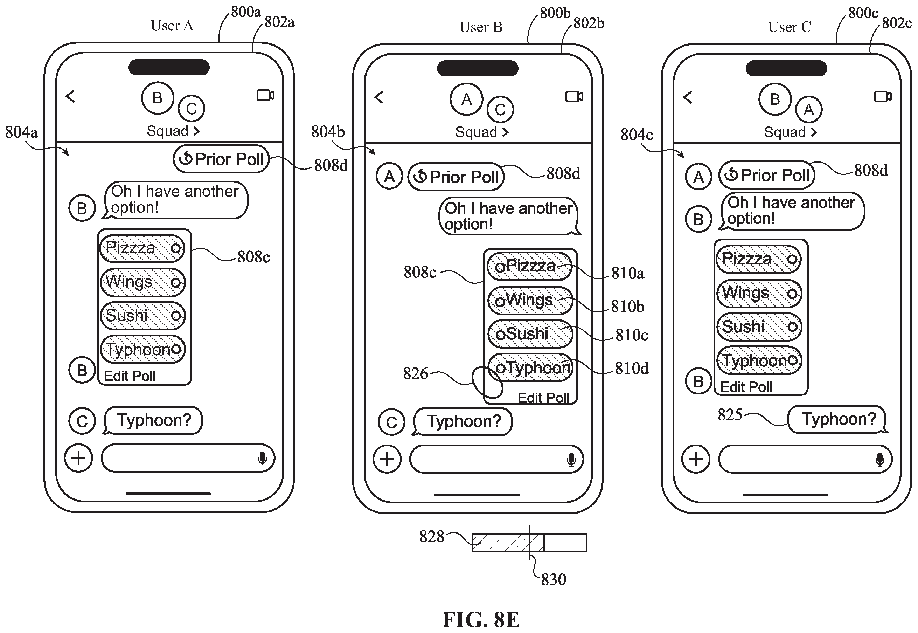

As shown in Fig. 8E, the updated poll is sent to the messaging conversation, wherein a third visual representation 808c of the poll is displayed at each of the electronic devices 800a-800c. The third visual representation 808c of the poll is at each of the respective electronic devices in a chronological location corresponding to the time at which the poll was updated by User B. Accordingly, the third visual representation 808c is displayed at each electronic device following the messaging including "Oh I have another Option." Furthermore, the second visual representation 808b of the poll is replaced with a fourth visual representation 808d of the poll which indicates that a previously displayed visual representation of the poll (e.g., second visual representation 808b) was shown in the location corresponding to the fourth visual representation 808d. Furthermore, in accordance with the updates to the poll including adding the fourth poll element 810d, resulting in the display of the third visual representation 808c of the poll in the updated chronological location, the respective electronic devices also display the third visual representation 808c of the poll in the location (e.g., left, or right) corresponding to the respective electronic devices and/or users. For instance, as shown in Fig. 8E, the third visual representation 808c of the poll is displayed on the right side of the second electronic device 800b due to the poll being updated to add an additional poll item via the second electronic device and/or by User B. Additionally or alternatively, the third visual representation 808c of the poll is displayed on the left side of the messaging user interface of the first electronic device 800a and the third electronic device 800c due to the poll not being sent to the messaging conversation via the first electronic device 800a or the third electronic device 800c, and/or by the respective users. After displaying the third visual representation 808c of the poll, the third electronic device detects one or more inputs resulting in "Typhoon?" 825 being sent to the messaging conversation from User C, thus alerting User B to the typographical error associated with the fourth poll item 810d. After displaying the message "Typhoon?" in the messaging conversation, while displaying the third visual representation 808c of the poll, the second electronic device detects a long-press user input 826 directed to the third visual representation 808c of the poll, wherein the time lapsed 828 from the initiation of the user input 826 exceeds a time threshold 830.

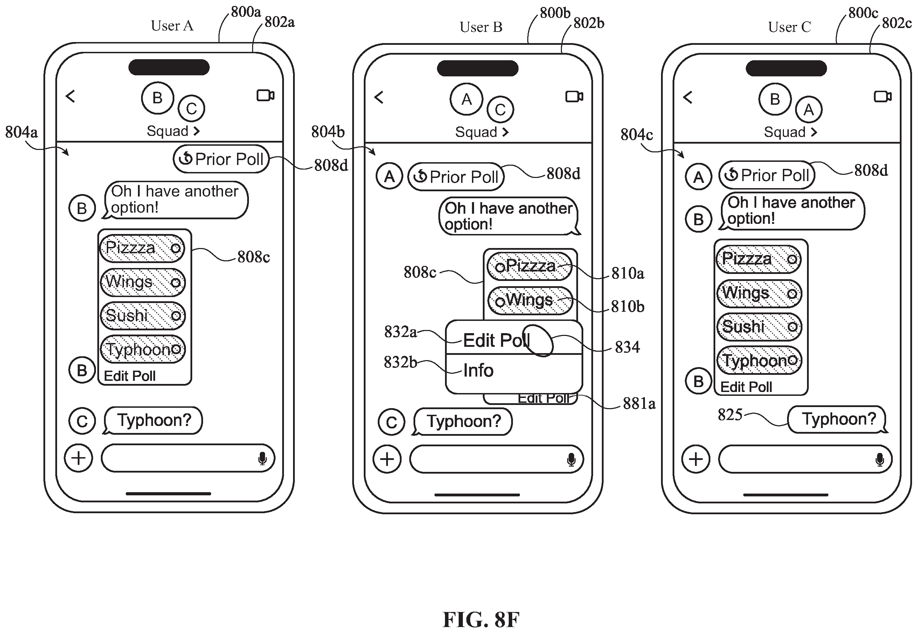

As shown in Fig. 8F, in response to detecting the long-press user input 826 (shown in Fig. 8E), the second electronic device displays a first visual representation 831 of a user interface menu which includes one or more menu options, including a first selectable affordance (e.g., "Edit Poll" 832a)) which is selectable to initiated one or more operations for editing the poll, and a second selectable affordance (e.g., "Info" 832b) which is selectable to initiate generating and/or displaying information corresponding to the poll. As shown, the second electronic device detects a user input 834 directed to "Edit Poll" which initiates one or more operations corresponding to editing the poll. While second electronic device is editing the poll, the other respective electronic devices (e.g., first electronic device 800a, and third electronic device 800c) are optionally unable to initiate editing the poll. Additionally or alternatively, in some embodiments, multiple electronic devices are able to initiate and actively edit the poll independent of when other users initiate editing the poll.

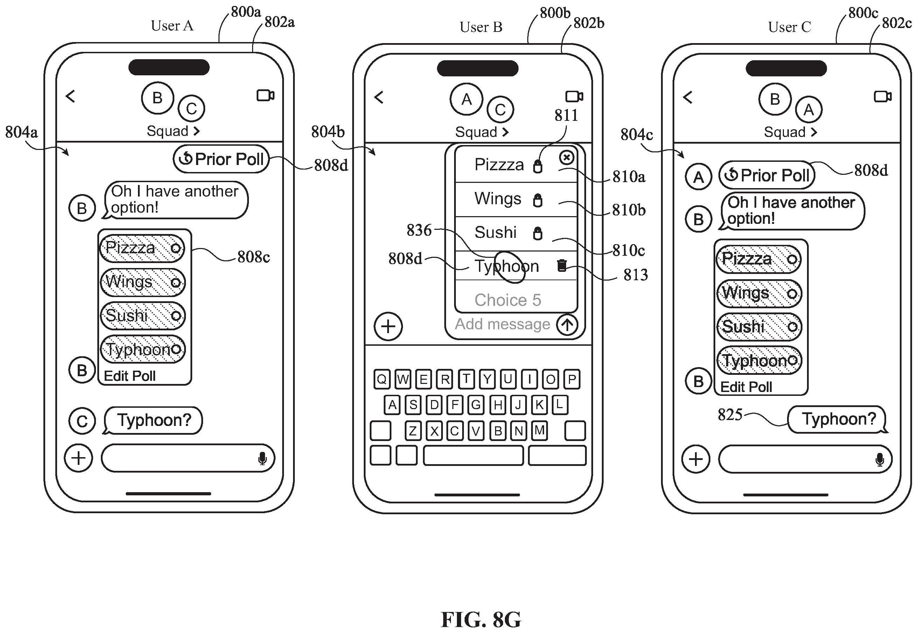

As shown in Fig. 8G, the second electronic device 800b displays the first visual representation 808a of the poll including the poll options 810a-810d. While displaying the first visual representation 808a of the poll, the poll items (e.g., 810a-810c) added by other users, are displayed with the lock icon 811, and the fourth poll item 810d, added by User B at the second electronic device, is displayed with a delete icon 813, the selection of which results in the deletion of the fourth poll item. While displaying the first visual representation of the poll including each of the poll items 810a-810d, the second electronic device receives a user input 836 to the fourth poll item 810d "Typhoon" which corresponds to a request to edit the fourth poll item.

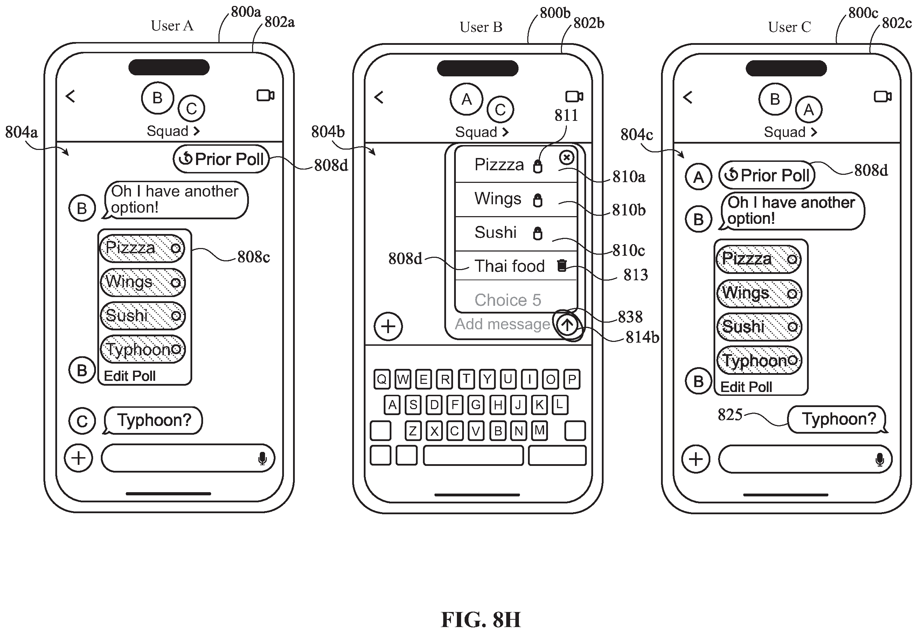

As shown in Fig. 8H, the second electronic device 800b has detected one or more user inputs which result in the correction of "Typhoon" to "Thai food", and further receives a user input 838 detected to the affordance 814b that is selectable to send the updated poll to the messaging conversation.

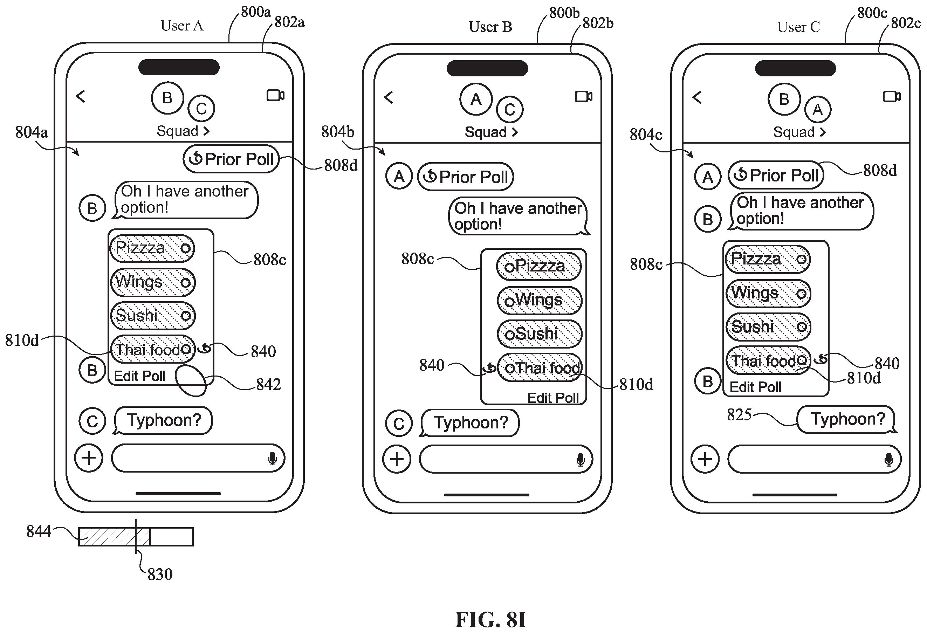

As shown in Fig. 8I, the third visual representation 808c of the poll is updated to reflect the correction of "Typhoon" to "Thai food" in the messaging user interface of each of the respective electronic devices. The updated third visual representation of the poll includes an identifier 840 which visually indicates that the fourth poll item 810d has been updated from the content (e.g., "Typhoon") which was originally associated with the fourth poll item 810d. Furthermore, while the first electronic device 800a displays the update third visual representation of the poll 808c, the first electronic device detects a long-press user input 842 directed to the third visual representation 808c of the poll, wherein the time lapsed 844 from the initiation of the user input 826 exceeds a time threshold 830.

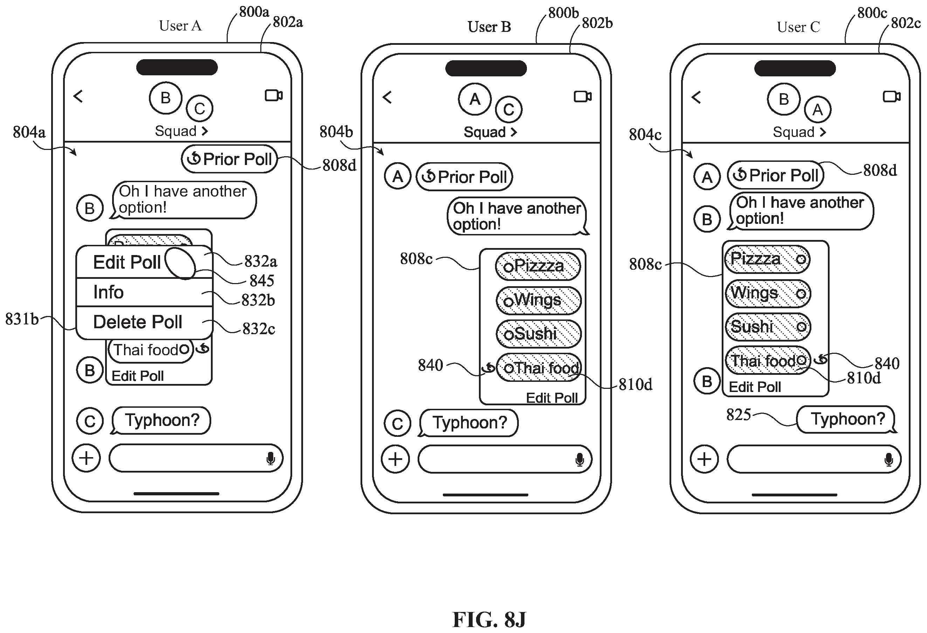

As shown in Fig. 8J, in response to detecting the long-press user input 842 (shown in Fig. 8J), the first electronic device 800a displays a second visual representation of the user interface menu 831b which includes one or more menu options, including the first selectable affordance (e.g., "Edit Poll" 832a)) which is selectable to initiated one or more operations for editing the poll, the second selectable affordance (e.g., "Info" 832b) which is selectable to initiate generating and/or displaying information corresponding to the poll, and a third selectable affordance (e.g., "Delete Poll" 832c) which is selectable to delete the poll from the messaging conversation. The "Delete Poll" option is displayed at the first electronic device as the poll was initially sent to the messaging conversation via the first electronic device, and/or by User A. As previously illustrated in Fig. 8F, the "Delete Poll" option was not displayed and/or not available at the second electronic device 800b as the poll was not initially sent to the messaging conversation via the second electronic device and/or the from User B. Additionally or alternatively, in some embodiments, the third selectable affordance includes an "Unsend Poll" option which is selectable, within a predetermined time period, to undo the transmission of the poll to the messaging conversation which results in an appearance that the poll was never sent to the messaging conversation. As shown, the second electronic device detects a user input 834 directed to "Edit Poll" which initiates one or more operations corresponding to editing the poll. While second electronic device is editing the poll, the other respective electronic devices (e.g., first electronic device 800a, and third electronic device 800c) are optionally unable to initiate editing the poll. Additionally or alternatively, in some embodiments, multiple electronic devices are able to initiate and actively edit the poll independent of when other users initiate editing the poll. While displaying the second visual representation 831b of the user interface menu, the first electronic device detects a user input 845 directed to "Edit Poll."

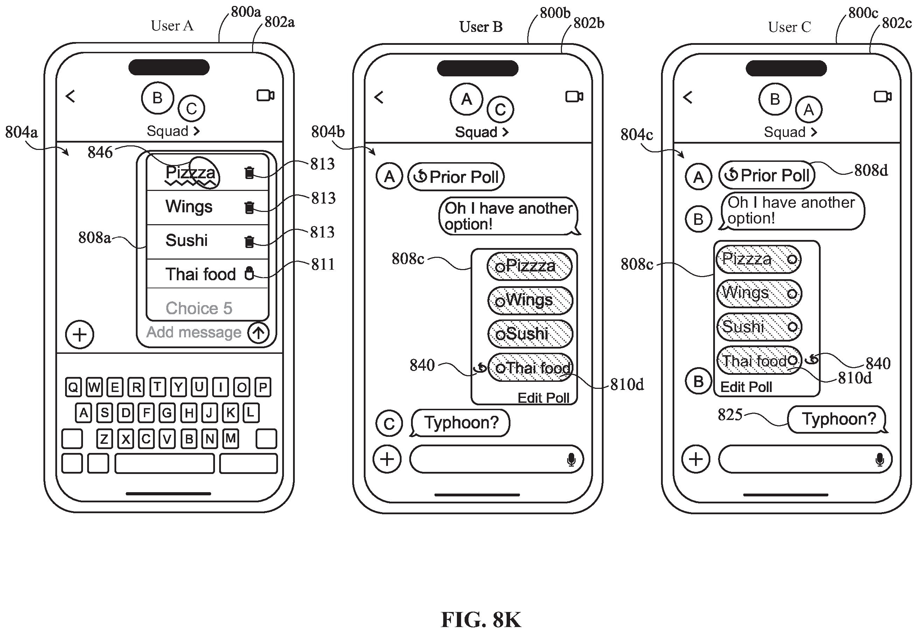

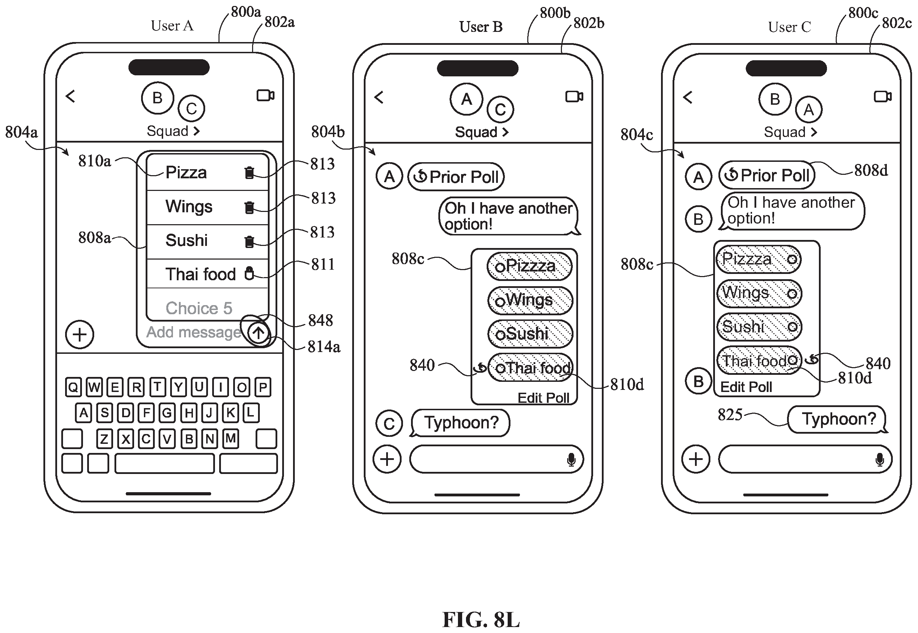

As shown in Fig. 8K, the first electronic device 800a displays the editing user interface including the first visual representation 808a. When displaying the first visual representation of the poll, the electronic device displays the poll items 810a-810c, added to the poll by User A, with the delete icon 813, and displays the fourth poll item 810d, added to the poll by User B, with a locked icon 811. The first electronic device 800a detects one or more user inputs 846 to "Pizzza" associated with the first poll item 810a, wherein the one or more user inputs results in updating the first poll item 810a from "Pizzza" to "Pizza" thereby correcting the typographical error as shown in Fig. 8L.

As shown in Fig. 8L, the first visual representation of the poll is updated to reflect the correction of the first poll item 810a, wherein while displaying the updated first visual representation 808a of the poll, the first electronic device detects a user input 848 corresponding to selection of an affordance 814a that is selectable to send the poll to the messaging conversation.

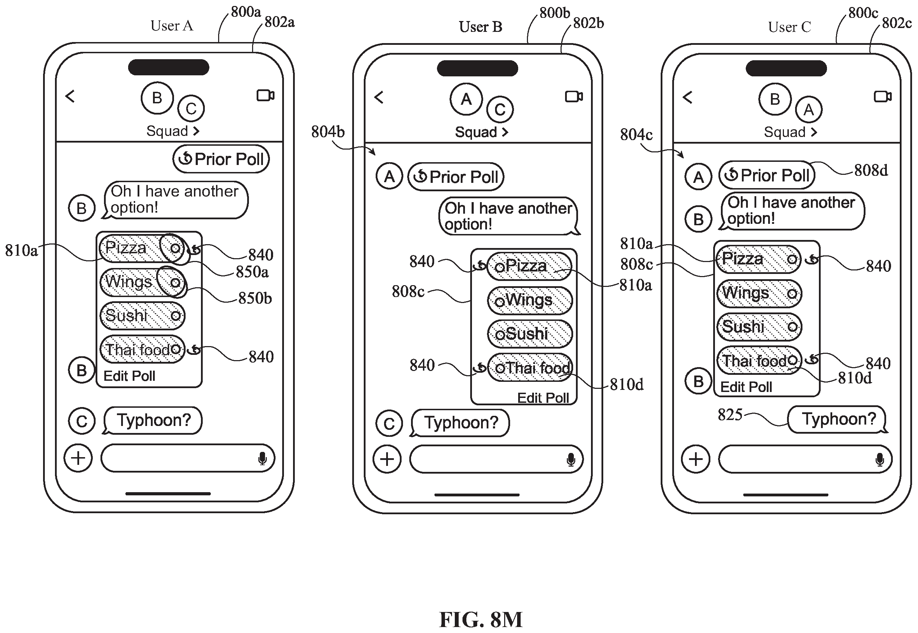

As shown in Fig. 8M, following the transmittal of the updated poll from the first electronic device 800a, each of the respective electronic devices 800a-800c display an updated third visual representation of the poll wherein the first poll item 810a is updated and includes an associated identifier 840 which visually indicates that the first poll item 810a has been updated from the content (e.g., "Pizzza") which was originally associated with the first poll item 810a. Although the poll has been updated via the first electronic device 800a, the third visual representation of the poll remains in the location corresponding to chronological location, and the location corresponding to being sent by User B. As shown, while displaying the updated third visual representation 810c of the poll, the first electronic device detects a first input 850a corresponding to the selection of "Pizza" and a second input 850b corresponding to the selection of "Wings."

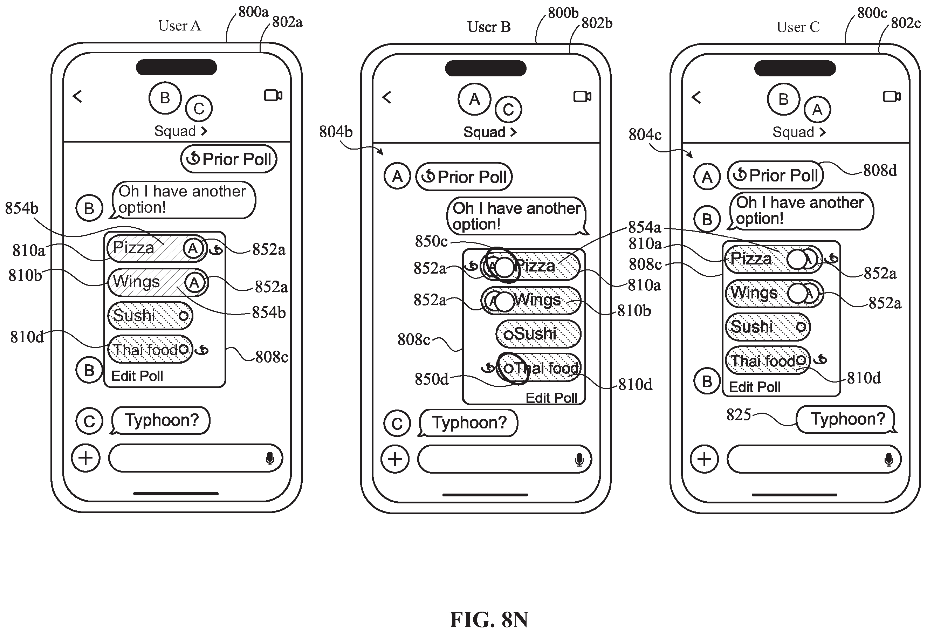

As shown in Fig. 8N, each electronic device 800a-800c updates the third visual representation of the first poll item 810a and the second poll item 810b to reflect the detected selections by User A, including displaying a first user icon 852a, associated with User A. Furthermore, the first electronic device 800a updates the display of the first poll item 810a and the second poll item 810b from a first level of shading 854a, to a second level 854b of shading to reflect a selection to the first poll item 810a and the second poll item 810b via the first electronic device 800a and/or by User A. After displaying the updates corresponding to the selections made at the first electronic device (shown in Fig. 8M) the second electronic device 800b detects user inputs 850c-850d corresponding to the selection of "Pizza" and "Thai food" respectively.

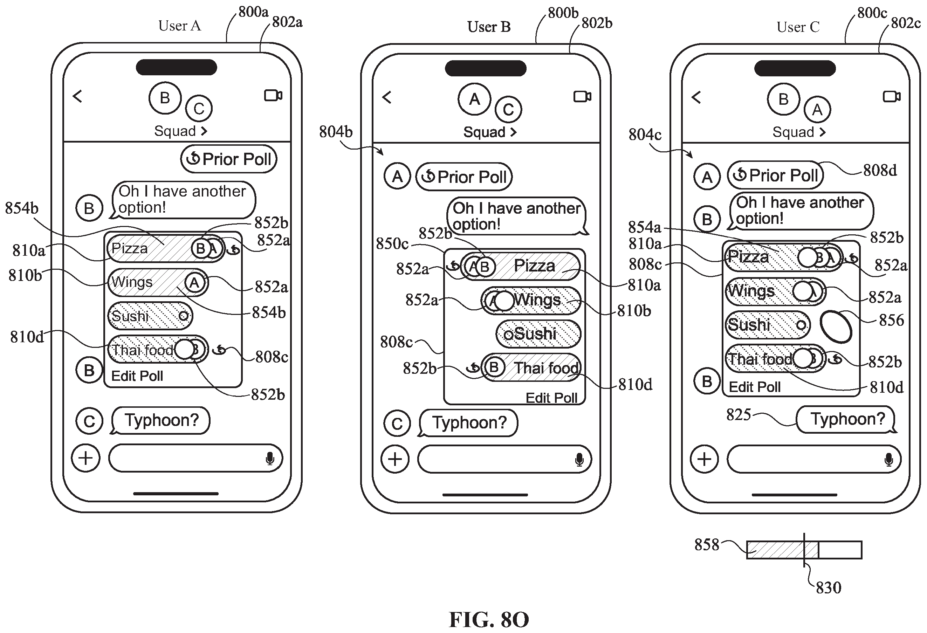

As shown in Fig. 8O, based on the inputs detected at the second electronic device (as shown in Fig. 8N), the third visual representation of the poll is further updated to reflect the selections detected at the second electronic device. Accordingly, each of the respective electronic devices update the display of the first poll item 810a and the fourth poll item 810d to include a second user icon 852b reflecting the selection by User B. Furthermore, the second electronic device 800b updates the display of the first poll item 810a and the fourth poll item 810d from a first level of shading 854a, to a second level 854b of shading to reflect a selection to the first poll item 810a and the fourth poll item 810d via the second electronic device 800b and/or by User B. While displaying the updated third visual representation 808c of the poll, based on the inputs detected at the second electronic device, the third electronic device detects a long-press user input 856 directed to the third visual representation 808c of the poll, wherein the time lapsed 858 from the initiation of the user input 856 exceeds a time threshold 830.

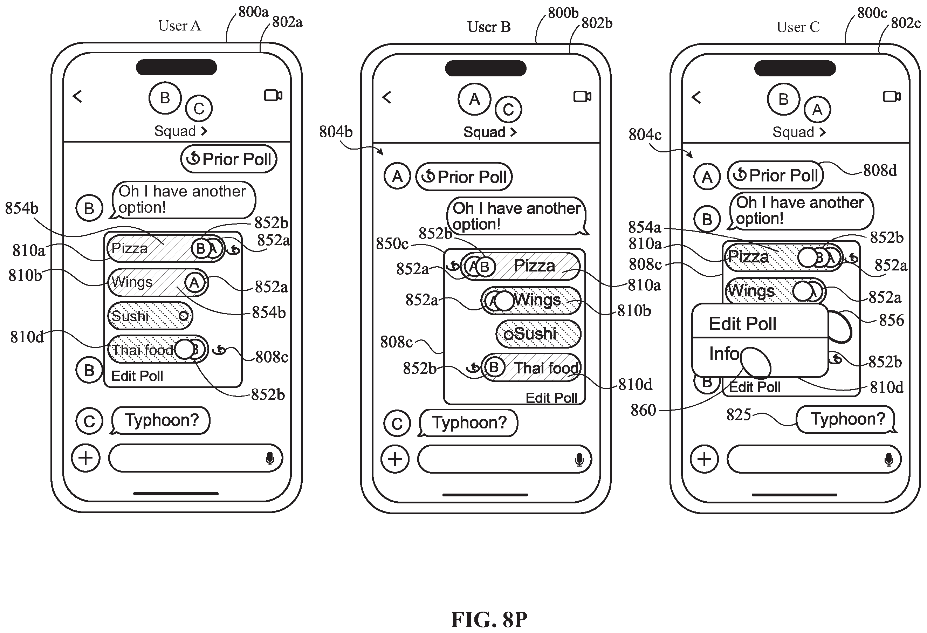

As shown in Fig. 8P, in response to detecting the long-press user input at the third electronic device, the third electronic device 800c displays the first visual representation 831a of the user interface menu including the first selectable affordance (e.g., "Edit Poll" 832a) which is selectable to initiated one or more operations for editing the poll, and the second selectable affordance (e.g., "Info" 832b) which is selectable to initiate generating and/or displaying information corresponding to the poll, without displaying the third selectable affordance third selectable affordance which is selectable to delete the poll from the messaging conversation. While displaying the first visual representation of the user interface menu, the third electronic device detects a user input 860 directed to "Info" 832b corresponding to a request to initiate generating and/or displaying information corresponding to the poll.

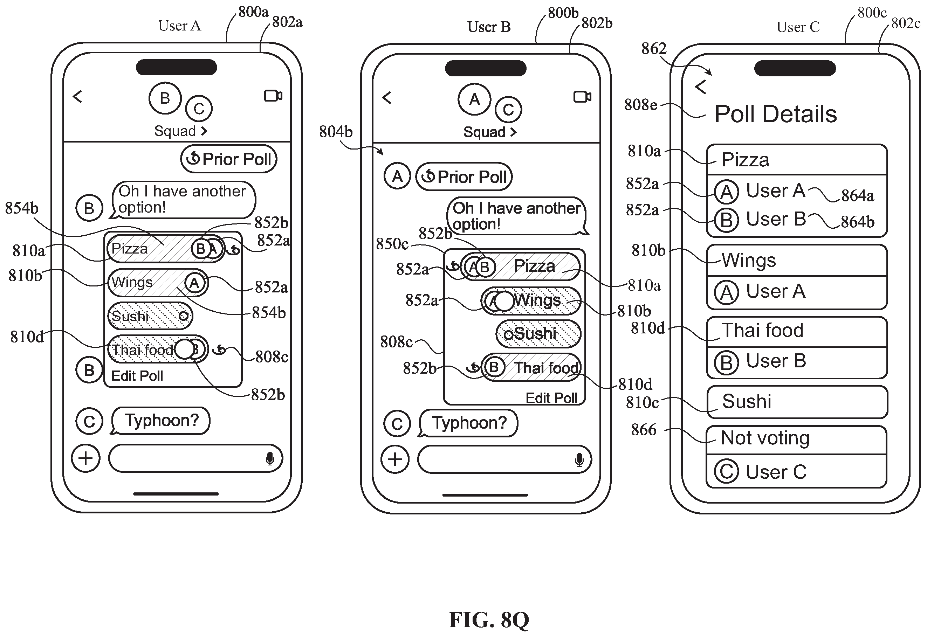

As shown in Fig. 8Q, the third electronic device 800c displays an information user interface 862 including a fifth visual representation 808e of the poll. In the information user interface, each of the poll items 810a-810 are displayed in a visual sequence that corresponds to one or more characteristics associated with the poll item, the number of selections associated with the poll item, alphabetical order and/or the chronological order in which the poll items were added to the poll. As shown, the first poll item 810 ("Pizza") is shown at the top of the information user interface due to having more selections (e.g., two selections) than the other poll items. Although the second poll item 810b ("Wings") and the fourth poll item ("Thai") each share the same number of selections (e.g., one selection), Wings is listed in visual priority (e.g., above) "Thai" due to "Wings" being added to the poll chronologically prior to "Thai." The third poll item 801c ("Sushi") is listed below the forementioned poll items as "sushi" received no selections. Additionally, each poll item provides a visual identification corresponding to the users which provided selections to the respective poll items optionally including the respective identity 864a-864b (e.g., contact name, contact nick name, phone number, etc.) and/or a user icon 852a-852b corresponding to each user. The information user interface 862 also includes a field 866 which includes information corresponding to the one or more users that have not provided selections in the poll. As shown, User C has not provided selections, thus User C is identified via their identity 864c and via the third user icon 852c associated with User C.

Fig. 9 illustrates a flow diagram illustrating changes in the visual representation of a poll based on one or more user inputs corresponding to participation and/or modification of the poll. The method 900 is optionally performed at first electronic device and/or electronic devices such as device 100, device 300, or device 500 as described above with reference to Figs. 1A-1B, 2-3, 4A-4B and 5A-5H. Additionally or alternatively, method 900 is optionally performed using a system, such as system 1000 as described in relation to Fig. 10 herein. Some operations in method 900 are, optionally combined and/or order of some operations is, optionally, changed.

The devices, methods, and/or computer-readable storage mediums described below enhance the operability of the device and makes the user-device interface more efficient (e.g., by helping the user to provide proper inputs and reducing user mistakes when operating/interacting with the device) which, additionally, reduces power usage and/or improves battery life of the device by enabling the user to use the device more quickly and efficiently. Performing an operation when a set of conditions has been met without requiring further user input (such as by updating the location where the poll is displayed corresponding to the user which modified the poll, the user interface provides visual information corresponding to the user which last modified the poll, enhances the operability of the device by reducing unnecessary inputs and/or steps to navigate through different user interfaces or sets of controls, reducing energy usage by the device. By updating the location where the poll is displayed corresponding to the user which modified the poll based on the time at which the poll was sent and/or updated, the user interface provides visual information corresponding to the user which last modified the poll at a current location within the messaging conversation, and reduces the need for user inputs to determine the source of the most recent modification to the poll.

In some embodiments, method 900 is performed at a first electronic device (e.g., 800a), corresponding to a first user, in communication with a display generation component (e.g., display 802a) and one or more input devices (e.g., microphone 113, proximity sensor 166, touch-sensitive display system 112, optical sensor(s) 164, depth camera sensor(s) 175, contact intensity sensor(s) 165, and/or other input control device(s) 116 at Fig. 1). In some embodiments, the first electronic device, first user, display generation component, and one or more input devices share one or more characteristics with the first electronic device, first user, display generation component, and/or one or more input devices as described herein in relation to method 700.

In some embodiments, such as shown in Fig. 8A - Fig. 8B while displaying (e.g., method step 901at Fig. 9) a messaging user interface, including one or more representations of messages (e.g., such as displayed in the messaging user interface 804a-804c) corresponding to messaging conversation that includes a plurality of users, including the first user (e.g., User B) and a second user (e.g., User A), a first electronic device (e.g., second electronic device 800b) detects (e.g., method step 902 at Fig. 9) a first event corresponding to a first poll that has been added to the messaging conversation by the second user (e.g., such as shown with respect to the second visual representation 808b that is displayed at the electronic devices) . In some embodiments, the messaging user interface, one or more messages, messaging application, first user and/or second user share one or more characteristics with the messaging user interface, one or more messages, messaging application, first user and/or second user as described herein in relation to method 700.

In some embodiments the first poll shares one or more characteristics with the poll as described herein in relation to method 700. In some embodiments the first event corresponds to the addition of the first poll to the messaging conversation by the second user, such as described in method 700.

In some embodiments, such as shown in Fig. 8B, in response to detecting the first event, the first electronic device displays (e.g., method step 906 at Fig. 9) a first visual representation of the first poll at a first location (e.g., such as on the left side of the messaging user interface 804b with respect to the second electronic device 800b) in the messaging user interface, wherein the first location in the messaging user interface corresponds to the second user (e.g., User A), and wherein the first visual representation of the first poll is displayed with a first user interface element (e.g., affordance 818) which, when selected, initiates one or more operations to modify the first poll. In some embodiments, the poll, when received from the second user, is displayed with a first visual representation in a portion and/or area of the user interface which corresponds to the first user. For instance, in some embodiments, messages corresponding to the second user are displayed in a first location of the user interface (e.g., the right side, left side, top, bottom, middle, etc.), and message corresponding to the first user are displayed in a second location of the user interface, (e.g., the left side, rights side, top, bottom, middle, etc.), wherein the second location is different than the first location. The second location is optionally opposite the first location, such as when the first location corresponds to the left side of the user interface, and the second location corresponds to the right side of the user interface. In some embodiments, when the poll is received from the second user, the first electronic device displays the first visual representation of the poll in the first location of the communication application. Furthermore, when the messaging conversation includes a third user, and the poll is received from the third user, the first visual representation of the poll is displayed in the first location of the communication application. Additionally or alternatively, when the first user sends the poll to the conversation, the first visual representation of the poll is optionally displayed in the second location of the communication application. The poll displayed at the first location at the first electronic device, is optionally displayed with a first visual representation and optionally includes a first user interface element which, when selected, corresponds to a request to initiate one or more operations to modify the poll. The first visual representation optionally shares one or more characteristics with the second visual representation of the poll as described herein in relation to method 700. In some embodiments, displaying the first visual representation of the poll in the first location, corresponding to the second user, includes displaying the poll with a first visual characteristic (e.g., color) corresponding to the second user, different than a second visual characteristic (e.g., color), corresponding to the first user. The location and the color with which a poll is displayed is optionally based on whether the user who sent the poll to the conversation is a local user, or a remote user, who is part of the conversation. For instance, when the first electronic device receives the poll from another user in the messaging conversation (e.g., second user, third user, etc.) the first electronic device optionally displays the poll, in the communication application, with a first color. Additionally or alternatively, when the first user, at the first electronic device, sends a poll to other users in the messaging conversation, the first electronic device optionally displays the poll with a second color, different from the first color, corresponding to the first user. In some embodiments, when a second electronic device receives the poll from the first user, the second electronic device displays the poll in the communication application in the first location with the first color. Further still, when a second user at the second electronic device sends the poll from the second user, the second electronic device displays the poll in the communication application in the second location with the second color. Thus, the color and/or location of the poll that is displayed by the electronic device optionally differ based on whether the user of the electronic device (or another user) sent the poll to the messaging conversation. The one or more operations to modify the poll optionally include adding one or more poll items, editing existing poll items, and/or deleting poll items. For instance, the first user interface element optionally includes "edit" or a graphic which indicates an editing functionality (e.g., including a graphical representation of a writing implement). In some embodiments the first visual representation of the poll corresponds to the first user interface element wherein a predetermined input such as a long-press input (e.g., touch and/or press input longer than a threshold period of time), increased force input (e.g., touch and/or press with a force greater than a threshold input force), and/or alternate input (e.g., via right click of a mouse, or via second hand of the user). In some embodiments, a threshold period of time corresponds to 0.25 seconds, 0.5 seconds, 1 second, 2 seconds, or greater than 2 seconds.

In some embodiments, such as shown in Fig. the first electronic device detects (e.g., method step 908 at Fig. 9) a first sequence of one or more inputs (e.g., user input 816) from the first user (e.g., User B) corresponding to a request to modify the first poll. In some embodiments, the first sequence of inputs corresponds to one or more user inputs received by the electronic device directed to a particular functionality, within a sequence time period (e.g., 1 second, 2, seconds, 5, seconds, 10 seconds, more than 10 seconds), received while a certain user interface is displayed (e.g., messaging user interface, poll generation user interface, poll editing user interface, etc.), received in association with the messaging application, and/or inputs which are otherwise determined to be corelated in time, purpose, or function. The one or more inputs optionally corresponds to one or more input types including touch input, voice input, gaze-based inputs, and/or inputs received via devices which are in digital communication with the first electronic device (e.g., mouse, keyboard, stylus, etc.). The first sequence of one or more inputs optionally corresponds to one or more inputs corresponding to editing and/or updating the first poll. For instance, after detecting that a poll item has been added to the messaging conversation by the second user, and the poll includes a first poll item and a second poll item, the first visual representation of the poll is displayed in the first location, wherein the first visual representation includes the first poll item and the second poll item.

In some embodiments, such as shown in Fig. 8E, in response to receiving the first sequence of one or more inputs (e.g., such as resulting in the fourth poll item 810d), the first electronic device displays (e.g., method step 910 at Fig. 9) a second visual representation (e.g., such as shown with respect to the third visual representation 808c that is displayed at the electronic devices) of the modified first poll including one or more modifications to the first poll, different than the first visual representation, at a second location (e.g., such as on the right side of the messaging user interface 804b with respect to the second electronic device 800b) in the messaging user interface, different from the first location, wherein the second location in the messaging user interface corresponds to the first user (e.g., User B). When the electronic device receives the first sequence of one or more inputs (e.g., from the first user) to modify the poll (e.g., adding a poll item, editing an existing poll item, and/or deleting an existing poll item) the first electronic device displays the first poll with a second visual representation in the second location, corresponding to the first user. While displaying the messaging conversation at the first electronic device, the second location optionally corresponds to the first user wherein messages, media, and/or polls sent by the first user are displayed in the second location. Additionally or alternatively, while displaying the messaging conversation at the first electronic device, the first location optionally corresponds to other users (e.g., second user, third user, fourth user, etc.) wherein messages, media, and/or polls sent by the other users are displayed in the first location. The second visual representation of the poll is optionally displayed with the first visual characteristic corresponding to the first user. For instance, while displaying the first visual representation of the poll which includes a first poll option and a second poll option, the electronic device optionally receives the first sequence of one or more inputs corresponding to the addition of a third poll option by the first user. In response to receiving the first sequence of one or more inputs, the first electronic device optionally displays the second visual representation of the poll, optionally including the third poll option, in the second location.

Additionally or alternatively, when the poll is sent by the second user at a second electronic device to the first user, while the first visual representation of the poll is displayed in the first location of the messaging user interface at the first electronic device, a third visual representation of the poll is optionally displayed, via a display generation component of the second electronic device, in a third location, different than the first location and the second location, of the messaging user interface at the second electronic device, wherein the third location corresponds to the second user (e.g., as described above with respect to the first location corresponding to the second user). The third visual representation optionally shares one or more characteristics (e.g., visual content, poll options, information, etc.) with the first visual representation of the first poll. In response to the second electronic device receiving an indication that the first poll has been modified at the first electronic device and/or the first electronic device displays the second visual representation of the first poll in the second location, the second electronic device optionally displays a fourth visual representation of the second visual representation of the poll in a fourth location, corresponding to the first user-different than the first location, the second location, and the third location, wherein the fourth visual representation of the poll is optionally displayed with the first visual characteristic corresponding to the first user.

In some embodiments, such as shown in Fig. 8E, wherein the first location (e.g., the location corresponding to the fourth visual representation 808d of the first poll) corresponds to a first time at the first electronic device (and/or in the messaging conversation), and the second location (e.g., the location corresponding to the third visual representation 808c of the first poll), corresponds to a second time, subsequent to the first time at the first electronic device (and/or in the messaging conversation). In some embodiments the location (e.g., first location, second location, etc.) as related to the messaging user interface corresponds to a respective time at the electronic device. Accordingly, for instance, the first location optionally corresponds to a first time at the electronic device, and the second location optionally corresponds to a second time, subsequent to the first time, at the electronic device. In some embodiments, the one or more messages in the messaging conversation are displayed in a chronological procession wherein each respective message is displayed in an order which indicates the relative chronological order in which the respective message was sent to the messaging conversation. For instance, while displaying the one or more messages in the messaging user interface, a first message sent to the messaging conversation at a first time is optionally displayed in a first location, and a second message which is sent to the messaging conversation at a second time, subsequent to the first time, is optionally displayed in a second location, vertically below the first location. Furthermore, a third message which is sent to the messaging conversation subsequent to the second message is displayed in a third location, vertically below the second location, and so on and so forth, When the first visual representation of the poll is sent to the messaging conversation by the second user at a first time, the first visual representation of the first poll is optionally displayed in a first location based on the first time. Accordingly, when the second visual representation of the first poll is sent to the messaging conversation at a second time, subsequent to the first time, the second location in which the second visual representation of the first poll is displayed corresponds to the second time in relation to the first time.

In some embodiments, such as shown in Fig. 8E,the first location (e.g., the location corresponding to the fourth visual representation 808d of the first poll) corresponds to a first side (e.g., left or right) of the messaging user interface, and the second location (e.g., the location corresponding to the third visual representation 808c of the first poll) corresponds to a second side (e.g., left or right), different than the first side. In some embodiments the location (e.g., first location, second location, etc.) as related to the messaging user interface corresponds to a respective side (e.g., left, or right) at the electronic device. Accordingly, for instance, the first location optionally corresponds to the right side of the messaging user interface, and the second location optionally corresponds to the left side of the messaging user interface. In some embodiments, the right side corresponds to polls and/or messages sent by a user via the respective electronic device, and the left side corresponds to polls and/or messages sent by other users via other respective electronic devices. For instance, when a poll is sent by a first user via a first electronic device associated with the first user, and the poll is received by a second electronic device associated with a second user, the first electronic device displays the poll on the right side of the messaging user interface, and the second electronic device displays the poll on the left side of the messaging user interface

In some embodiments, while displaying the poll in the first location (e.g., the location corresponding to the third visual representation 808c of the first poll as shown in Fig. 8E with respect to the second electronic device 800b) includes displaying the poll with a first visual characteristic (e.g., such as color) having a first value, and displaying the poll in the second location includes displaying the poll with the first visual characteristic having the first value. In some embodiments, while displaying the poll, the respective electronic device displays the poll with the same one or more visual characteristics and/or visual appearance independent of the location in which it is displayed in the messaging user interface. In some embodiments, one or more visual characteristics and the one or more levels they are displayed with shares one or more characteristics with the one or more visual characteristics and the one or more levels they are displayed with as described herein in relation to methods 700 and/or 900.

In some embodiments, when the one or more messages include a first message, in accordance with a determination that the first message was added to the messaging conversation by the first user, the first electronic device displays the first message in the second location with a second visual characteristic having a second value, such as if the message sent by User B (e.g., "Oh I have another Option") was displayed at the second electronic device (e.g., 800b) with a color corresponding to messages sent by User B . In some embodiments while displaying one or more messages transmitted to the messaging conversation, the first electronic device displays the one or more messages with a visual characteristic which is dependent upon the user that sent the one or more messages. For instance, when a first user, associated with the first electronic device, is detected to have sent the first message, the first electronic device optionally displays the first message with a second visual characteristic having a second value.

In some embodiments, when the one or more messages include a first message, in accordance with a determination that the first message was added to the messaging conversation by the second user, the first electronic device displays the first message in the first location with the second visual characteristic having a third value, different than the second value, such as if the message sent by User C (e.g., "Typhoon?") was displayed at the second electronic device (e.g., 800b) with a color corresponding to messages sent by users other than User B. Additionally or alternatively, when a second user, associated with a second electronic device, is detected to have sent the first message, the first electronic device displays the first message with a second visual characteristic having a third value, different than the second value, and optionally different than the first value.

In some embodiments, the first electronic device displays, such as shown in Fig. 8I, in the messaging user interface, a first visual representation (e.g., third visual representation 808c) of a second poll that has been sent to the messaging conversation. In some embodiments, the first electronic device displays a second poll that has been sent to the messaging conversation. The second poll optionally shares one or more characteristics with one or more polls as described herein in relation to method 700. In some embodiments, the second poll is sent by a first user associated with the first electronic device, or a second user not associated with the first electronic device. In some embodiments, the second poll is the first poll, or is different from the first poll.

In some embodiments, while displaying the first visual representation of the second poll, the first electronic device detects, via the one or more input devices, a second sequence of one or more inputs (e.g., user input 842 at Fig. 8I) (e.g., touch input, input via a device in digital communication with the electronic device (e.g., keyboard, mouse, stylus, etc.), voice input, gaze, and/or user movement of the electronic device) from the first user corresponding to a request to display an editing user interface (e.g., user interface menu 831b) corresponding to the second poll in the messaging conversation. In some embodiments, the one or more inputs corresponding to a request to display an editing user interface share one or more characteristics with the one or more inputs corresponding to a request to display an editing user interface with as described herein in relation to methods 700 and/or 900.While displaying the first visual representation of a second poll which has been sent to the messaging conversation, the first electronic device detects a second sequence of one or more inputs corresponding to a request to display an editing user interface. In some embodiments, the second sequence of the one or more inputs includes a touch input which last longer than a threshold time period, a touch input which includes multiple fingers, and/or a gesture performed by a hand of a respective user. In some embodiments the second sequence of one or more inputs includes a first user input which corresponds with a request to view a user interface menu including a user interface element that is selectable to display the editing user interface, and a second user input corresponding to the selection of the user interface element that is selectable to displaying the editing user interface. In some embodiments, the second poll shares one or more characteristics with the one or more polls described herein in relation to method 700.

In some embodiments, in response to receiving the second sequence of one or more inputs from the first user (e.g., User A), the first electronic device displays, in the messaging user interface, the editing user interface , including a second visual representation (e.g., first visual representation 808a) of the second poll. In response to the second sequence of one or more inputs from the first user, the first electronic device optionally displays the editing user interface which includes a second visual representation of the second poll and one or more options for editing, modifying and/or deleting poll items of the second poll. In some embodiments, the editing user interface optionally shares one or more characteristics with the editing user interface as described herein in relation to methods 700 and/or 900.

In some embodiments, in accordance with a determination that the second poll was added to the messaging conversation by the first user (e.g., User A), the first electronic device displays the editing user interface includes displaying a second user interface element (e.g., "Edit Poll" 832a) that is selectable to add one or more poll items to the second poll, and the first electronic device displays a third user interface element (e.g., "Delete Poll" 832c) that is selectable to modify the second poll, different than adding one or more poll items to the second poll. When the first electronic device detects that the second poll was sent to the messaging conversation by the first user, the electronic device displays the editing user interface which includes a user interface element that is selectable to add one or more poll items, and displays a user interface element that is selectable to modify the poll (e.g., delete poll items, delete the poll, and/or edit existing poll items) in a manner different than adding one or more poll items. Accordingly, when the electronic device detects that the second poll was sent by the first user, the first electronic device provides options which allow the first user to add an additional poll item and modify, and/or delete existing poll items.

In some embodiments, such as shown in Fig 8F, in accordance with a determination that the second poll was added to the messaging conversation by the second user (e.g., different than the local user of a respective electronic device), the first electronic device displays the editing user interface includes displaying the second user interface element (e.g., "Edit Poll" 832a), without displaying the third user interface element. When the first electronic device detects that the second poll was sent to the messaging conversation by the second user, the electronic device displays the editing user interface which includes the user interface element that is selectable to add one or more poll items, without displaying a user interface element that is selectable to modify the poll (e.g., delete poll items, delete the poll, and/or edit existing poll items) in a manner different than adding one or more poll items. Accordingly, when the electronic device detects that the second poll was sent by the second user, the first electronic device provides options which allow the first user to add one or more additional poll items without allowing the first user to modify existing poll items added by the second user. In some embodiments, when the second poll includes one or more poll items added by the second user and one or more poll items added by the first user, when the first electronic device displays the editing user interface, the first electronic device provides options which allow the first user to add one or more additional poll, and displays the user interface element that is selectable to modify the poll with regard to poll items added by the first user, without allowing the first user to modify the poll with regard to the poll items added by the second user.

In some embodiments, such as shown in Fig. 8F, the first electronic device detects, via the one or more input devices, a second sequence of one or more inputs (e.g., 834) (e.g., touch input, input via a device in digital communication with the electronic device (e.g., keyboard, mouse, stylus, etc.) from the first user (e.g., User B) corresponding to a request to display an editing user interface corresponding to the first poll. While displaying the first visual representation of the first poll which has been sent to the messaging conversation, the first electronic device detects a second sequence of one or more inputs corresponding to a request to display an editing user interface corresponding to the first poll that was sent to the messaging conversation by the first user. In some embodiments, the one or more inputs corresponding to a request to display an editing user interface share one or more characteristics with the one or more inputs corresponding to a request to display an editing user interface with as described herein in relation to methods 700 and/or 900.

In some embodiments, in response to detecting the second sequence of one or more inputs, the first electronic device displays the editing user interface of the first poll including a first poll item (e.g., poll items 810a-810d). In response to detecting the second sequence of one or more inputs directed to the first poll, the electronic device displays the editing user interface which includes a third visual representation of the first poll including one or more poll items including a first poll item.

In some embodiments, in accordance with a determination that the first poll item (e.g., 810d) was added to the first poll by the first user, the first electronic device displays the first poll item with a first visual identifier corresponding to the first user, such as if poll item (e.g., 810d) included an identifier (e.g., text, icon, etc.) corresponding to User B . When displaying the one or more poll items, the electronic device displays a respective visual identifier which indicates which user added the respective poll item to the messaging conversation. While displaying the third visual representation of the poll, when the first electronic device determines that the first poll item was added to the first poll by the first user, the first electronic device optionally displays a first visual identifier corresponding to the first user. In some embodiments, the display of the one or more visual identifiers shares one or more characteristics with the display of one or more icons as described herein in relation to methods 700 and/or 900.

In some embodiments, in accordance with a determination that the first poll item (e.g., 810a) was added to the first poll by the second user (e.g., User A), the first electronic device displays the first poll item with a second visual identifier corresponding to the second user, such as if poll item (e.g., 810a) included an identifier (e.g., text, icon, etc.) corresponding to User A. While displaying the third visual representation of the poll, when the first electronic device determines that the first poll item was added to the first poll by the second user, the first electronic device optionally displays a second visual identifier corresponding to the second user.

In some embodiments, the first electronic device detects, via the one or more input devices, a second sequence of one or more inputs (e.g., touch input, input via a device in digital communication with the electronic device (e.g., keyboard, mouse, stylus, etc.) from the first user corresponding to a request to display an editing user interface corresponding to the first poll. While displaying the first visual representation of the first poll which has been sent to the messaging conversation, the first electronic device optionally detects a second sequence of one or more inputs corresponding to a request to display an editing user interface corresponding to the first poll that was sent to the messaging conversation by the first user. Displaying the editing user interface optionally shares one or more characteristics with displaying the editing user interface as described herein with respect to method 700. In some embodiments, the one or more inputs corresponding to a request to display an editing user interface share one or more characteristics with the one or more inputs corresponding to a request to display an editing user interface with as described herein in relation to methods 700 and/or 900.

In some embodiments, in response to detecting the second sequence of one or more inputs, the first electronic device displays the editing user interface in a first portion of the messaging user interface corresponding to drafting one or more messages for sending to the messaging conversation, such as described in relation to method 700 and/or Fig. 6A-Fig. 6U. In response to detecting the second sequence of one or more inputs directed to the first poll, the electronic device displays the editing user interface in the portion of the messaging user interface corresponding to message drafting (e.g., text content, media content, attachments, etc.). For instance, in some embodiments when displaying the editing user interface, the first electronic first electronic device displays the editing user interface corresponding to the first poll in the portion of the messaging user interface where text-based input detected from the user is displayed while drafting a message to send to the messaging conversation. Displaying the editing user interface optionally shares one or more characteristics with displaying the editing user interface as described herein with respect to method 700. The portion of the messaging user interface corresponding to message drafting optionally shares one or more characteristics with the portion of the message user interface corresponding to message drafting as described herein as related to method 700.

In some embodiments, such as shown in Fig. 8M-Fig. 8N, while displaying the first visual representation (808c) of the first poll in the messaging user interface, the first electronic device detects, via the one or more input devices, a second sequence of one or more inputs (e.g., 850a-850b) (e.g., touch input, input via a device in digital communication with the electronic device (e.g., keyboard, mouse, stylus, etc.) from the first user corresponding to a request to participate in the first poll. In some embodiments, while the first electronic device is displaying the first poll in the messaging user interface, the first electronic device detects a second sequence of one or more inputs from the first user which corresponds to a request to participate in the poll. The one or more inputs of the second sequence optionally include one or more inputs directed to one or more poll selections corresponding to a selection and/or a deselection. In some embodiments, while displaying the first visual representation of the first poll, prior to detecting the second sequence of inputs, the one or more poll items are displayed with a first visual characteristic having a first level. In some embodiments the first visual characteristic shares one or more characteristics with one or more visual characteristics described herein as related to method 700. For instance, while displaying the first poll including a first poll item before the second sequence of one or more inputs, the first poll item is optionally displayed with a first color (e.g., orange, blue, green, purple, etc.), and displayed on a first side of the messaging user interface, corresponding to the second user.

In some embodiments, in response to detecting the second sequence of one or more inputs from the first user, the first electronic device updates the first visual representation (e.g., 808c) of the first poll to reflect (e.g., see first user icons 852a) the second sequence of one or more inputs from the first user without displaying the second visual representation of the first poll and while maintaining display of the first visual representation of the first poll at the first location in the messaging user interface. In some embodiments, in response to detecting the second sequence of one or more inputs from the first user, the first electronic device updates the first visual representation of the first poll to reflect the second sequence of one or more inputs from the first user without displaying the second visual representation of the first poll. In some embodiments, updating the first visual representation of the poll, without displaying the second visual representation of the first poll, includes updating the visual characteristic of one or more poll items from the first level to a second level without updating the location. For instance, after receiving the second sequence of one or more inputs from the first user, the first electronic device updates the first visual representation of the poll to display the one or more poll items with the first visual characteristic having a second level, different than the first level, without displaying the second visual representation of the first poll. For instance, while displaying the first poll including the first poll item, in response to receiving the second sequence of one or more inputs, the first poll item is optionally displayed with a second color (e.g., orange, blue, green, purple, etc.), different than the first color, while maintaining the display of the first poll on the first side of the messaging user interface.

In some embodiments, such as shown in Fig. 8K-Fig. 8M, the one or more modifications to the first poll include one or more modifications to the first poll by the first user. In some embodiments, in response to receiving the first sequence of one or more inputs (e.g., as related to correcting the spelling of "Pizza" in relation to poll item 810a) and in accordance with a determination that the one or more modifications to the first poll do not include an addition of a poll item to the first poll by the first user, the first electronic device forgoes displaying the second visual representation of the first poll in the second location. In some embodiments, in response to receiving one or more modifications to the first poll from the first user, the first electronic device updates the first poll based on the one or more modifications made by the first user. In some embodiments, when the one or more modifications do not include an addition of a poll item to the first poll by the first user, such as when the first user corrects a typographical error, the one or more modifications do not trigger the first electronic device to update the poll in a manner to display the second visual representation of the first poll. For instance, while displaying the first poll in a portion of the messaging user interface that corresponds to the second user, when the first electronic device detects the first sequence of one or more inputs include modifications to correct the spelling of "pizzza" to "pizza," without the addition of an additional poll item, the electronic device updates the first visual representation of the poll in the messaging conversation to reflect the spelling correction of "pizza" without updating the location of the first poll to the portion of the messaging user interface that corresponds to the first user. In some embodiments, when the first electronic device detects that the one or more modifications include adding a poll item to the poll, the first electronic device displays the second visual representation of the first poll in the second location and forgoes updating the first visual representation of the poll in the first location. In some embodiments, as shown in Fig. 8P, the messaging conversation includes a third user. In some embodiments the third user shares one or more characteristics with the one or more users as described herein in relation to method 700.

In some embodiments, the first electronic device detects an event corresponding to a request to modify the first poll by the third user, such as if User C selected "Edit Poll" and added a new poll item. In some embodiments, detecting an event corresponding to request to modify the first poll by the third user optionally shares one or more characteristics with detecting an event corresponding to request to modify the first poll by one or more users (e.g., first user, second user, etc.) as described herein in relation to method 700.

In some embodiments, in response to detecting the event corresponding to the request to modify the first poll by the third user, the first electronic device displays a third visual representation of the modified first poll, different than the first visual representation and the second visual representation, at a third location in the messaging user interface (e.g., right side for the third electronic device 800c, and left side for the first electronic device 800a and the second electronic device 800b, and in a new chronological location such as described in relation to Fig. 8E), different from the first location and the second location, wherein the third location in the messaging user interface corresponds to the third user. In some embodiments, displaying the third visual representation of the modified first poll and/or the third location optionally share one or more characteristics with displaying one or more visual representations (e.g., first, and/or second) of the first poll and/or one or more locations (e.g., first, and/or second) respectively as described herein, and/or in relation to method 700. In some embodiments, in response to receiving the request to modify the first poll based on one or more inputs from the third user, the electronic device updates the first poll in the messaging conversation and displays a third visual representation of the modified first poll in a portion of the messaging conversation that corresponds to the third user. For instance, while displaying the messaging conversation in the messaging user interface at the first electronic device, the right side of the messaging user interface optionally corresponds to messages and/or polls corresponding to the first user, and the left side of the messaging user interface optionally corresponds to messages and/or polls corresponding to users other than the first user (e.g., second user, third user, etc.). When the first electronic device receives the request to modify the first poll from the third user (e.g., via a second electronic device, and/or a third electronic device), the first electronic device optionally updates the first poll to reflect that the first poll has been modified by the third user. For instance, when the request to modify the first poll is received by the first electronic device while the first poll is displayed in the portion of the messaging user interface corresponding to the first user, displaying the third visual representation of the modified first poll optionally includes displaying the third visual representation of the modified first poll in the portion of the messaging conversation that corresponds to the third user. Additionally or alternatively, when the request to modify the first poll is received by the first electronic device while the first poll is displayed in the portion of the messaging user interface corresponding to the second user, displaying the third visual representation of the modified first poll optionally includes displaying the third visual representation of the modified first poll in the portion of the messaging user interface that corresponds to the third user. In some embodiments, the portion of the messaging user interface that corresponds to the second user is the same as the portion of the messaging user interface that corresponds to the third user.

In some embodiments, such as shown in Fig. 8I, in response to receiving the first sequence of one or more inputs, the first electronic device displays a third visual representation (808d) of the modified first poll in the first location of the messaging user interface.

In some embodiments, in response to receiving the first sequence of one or more inputs which cause the electronic device to display the poll with the second visual representation in the second location, the first electronic device optionally displays a third visual representation of the poll in the first location of the messaging user interface. For instance, when the first electronic device displays the second visual representation of the first poll in the second location after receiving one or more inputs corresponding to adding a poll option, the second visual representation of the first poll optionally includes one or more poll options included in the first visual representation of the first poll, ceases displaying the first visual representation of the first poll in the first location, and displays the third visual representation of the first poll in the first location of the messaging user interface. In some embodiments, the third visual representation of the first poll includes displaying a visual element that indicates that a previous visual representation of the first poll (e.g., different than the currently displayed visual representation of the first poll) was displayed in the first location. In some embodiments the third visual representation of the first poll includes one or more details about the first poll such as which user added the first poll to the messaging conversation, and/or when the poll was modified. In some embodiments the third visual representation of the poll is not selectable to perform actions corresponding to the first poll and/or does not include the one or more poll items. In some embodiments, the third visual representation of the first poll is selectable to case the messaging user interface to scroll to the location in which the second visual representation of the first poll is displayed.

In some embodiments, such as shown in Fig. 8O - Fig. 8Q, while displaying the first visual representation of the first poll, the first electronic device detects, via the one or more input devices, a first user input (e.g., 856) (e.g., touch input, input via a device in digital communication with the electronic device (e.g., keyboard, mouse, stylus, etc.), voice input, gaze, and/or user movement of the electronic device) from the first user directed to the first visual representation of the first poll. In some embodiments, the first user input shares one or more characteristics with one or more user inputs as described herein in relation to method 700, and/or method 900.

In some embodiments, in response to detecting the first user input and in accordance with a determination that the first user input satisfies one or more criteria, including a criterion that is satisfied when the first input has a duration longer than a threshold time period (e.g., 0.25 seconds, 0.5 seconds, 1 second, 2 seconds, or more than 2 seconds) , the first electronic device displays , in the messaging user interface, a user interface menu (e.g., 831a) corresponding to the first poll including one or more selectable user interface elements (e.g., 832a-832b) which, when selected, initiate one or more actions corresponding to the first poll. In some embodiments, in response to detecting the first input which has a duration longer than the threshold time period, the first electronic device displays a user interface menu in the messaging user interface which includes selectable user interface elements corresponding to one or more poll functionalities (e.g., "More info," "Unsend Poll," "Delete Poll," "Add Poll Item," "Edit Poll," etc.). In some embodiments, first electronic device displays the user interface menu including an option corresponding to unsending a poll for a first time period (e.g., 30 second, 2 minutes, 5 minutes, or 15 minutes), and following the expiration of the first time period, the electronic device forgoes displaying the menu user interface menu with the option corresponding to unsending the poll, and/or displays the menu user interface with an option corresponding to deleting the poll. In some embodiments, the user interface element corresponding to the one or more poll functionalities which are available and/or displayed are based on the user that initially generated and sent the first poll to the messaging conversation. For instance, when the first electronic device displays the user interface menu in relation to a poll sent by the second user, the user interface menu optionally does not include user interface elements corresponding to functionalities such as "Unsend Poll" or "Delete Poll," wherein such user interface elements would be included when the poll was sent to the messaging conversation by the first user. In some embodiments, when the selection directed to the first visual representation of the first poll fails to satisfy the criterion that is satisfied when the input has a duration longer than a threshold time period, the first electronic device forgoes displaying the user interface menu and optionally performs one or more operations corresponding to detecting user inputs as described herein in relation to methods 700 and/or 900.

In some embodiments, such as shown in Fig. 8P, while displaying the user interface menu (e.g., 831a), the first electronic device detects, via the one or more input devices, a second user input (e.g., 860) (e.g., touch input, input via a device in digital communication with the electronic device (e.g., keyboard, mouse, stylus, etc.) from the first user corresponding to selection of a first selectable user interface element (e.g., 832b) of the user interface menu corresponding to a request to display information about the first poll. In some embodiments, the second user input shares one or more characteristics with one or more user inputs as described herein in relation to method 700, and/or method 900.

In some embodiments, such as shown in Fig. 8Q, in response to detecting the second input, the first electronic device displays an information user interface (e.g., 862), including one or more details corresponding to the first poll. In some embodiments, in response to detecting the second input corresponding to a selection of a user interface element, of the user interface menu, corresponding to a request to display information about the first poll, the first electronic device displays an information user interface which includes one or more details corresponding the first poll. In some embodiments, the one or more details corresponding to the first poll optionally includes information such as which users have voted for each poll item, the user which added a particular poll item to the first poll, the number of selections (e.g., votes, choices, etc.) corresponding to each respective poll item, and/or information corresponding to users who have participated (e.g., selected one or more poll items) in the poll and/or users who have not participated in the poll. In some embodiments, the information corresponding to the users who selected each poll item includes an icon which corresponds to the respective user. In some embodiments, the icons are displayed in a visual order (e.g., left to right, top to bottom, etc.) corresponding to the chronological order in which each respective user selected each poll item. In some embodiments, when the first user has not voted for a respective poll item, the first electronic device displays a placeholder icon in a location which does not correspond to the chronological order of the selections received from other users. When the first electronic device detects the first user selects the respective poll item, the first electronic device ceases displaying the placeholder icon and includes the first user icon in chronological order with the other user icons. While displaying the third user interface, the first electronic device optionally orders the poll items by the number of selections each poll item received. In some embodiments, each poll item includes a platter which includes the respective information corresponding to the respective poll items. In some embodiments, each platter corresponding to each poll item includes a textual list of the users who selected the respective poll item listed in chronological order of the selection of the poll item. In some embodiments, the third user interface includes a platter which includes a list of one or more users who did not participate in the first poll.

It should be understood that the particular order in which the operations in Fig. 9 have been described is merely exemplary and is not intended to indicate that the described order is the only order in which the operations could be performed. One of ordinary skill in the art would recognize various ways to reorder the operations described herein. Additionally, it should be noted that details of other processes described herein with respect to other methods described herein (e.g., method 700) are also applicable in an analogous manner to method 900 described above with respect to Fig. 9. For example, display behavior with respect to polls in response to an event and/or user input with reference to method 900 optionally has one or more of the characteristics of displaying a selectable user interface element based on content of one or more messages associated with a messaging conversation described herein with reference to other methods described herein (e.g., method 700). For brevity, these details are not repeated here.

The operations in the information processing methods described above are, optionally, implemented by running one or more functional modules in an information processing apparatus such as general purpose processors (e.g., a as described with respect to Figs. 1A-1B, 3, 5A-5H) or application specific chips. Further, the operations described above with reference to Fig. 9 are, optionally, implemented by components depicted in Figs. 1A-1B. For example, detecting operation 902, and activating operation 904 are, optionally, implemented by event sorter 170, event recognizer 180, and event handler 190. When a respective predefined event or sub-event is detected, event recognizer 180 activates an event handler 190 associated with the detection of the event or sub-event. Event handler 190 optionally utilizes or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in Figs. 1A-1B.

FIG. 10 is a block diagram of a system 1000 in an example implementation for training an artificial intelligence/machine learning (AI/ML) model to detect one or more criteria for automatically recommending a poll for a messaging interface. As shown, the system 1000 includes an AI/ML model 1002 which is representative of one or more generative models, AI models, and/or ML models discussed above. Broadly, the AI/ML model 1002 utilizes algorithms to learn from, and make predictions on, training data by analyzing the training data to learn to generate outputs that reflect patterns and attributes of the training data. Examples of model architectures and machine learning techniques include neural networks, convolutional neural networks (CNNs), long short-term memory (LSTM) neural networks, transformers, generative adversarial networks (GANs), decision trees, support vector machines, linear regression, logistic regression, Bayesian networks, random forest learning, dimensionality reduction algorithms, boosting algorithms, deep learning neural networks, etc.

In various examples, the AI/ML model 1002 includes or corresponds to a large language model (LLM), which is a type of AI/ML model that is designed to understand, generate, and interact with human language inputs at a large scale. LLMs are trained on vast amounts of text data using deep learning techniques (e.g., neural networks) to learn patterns, nuances, and the structure of language. The use of the term "large" refers to both a size of the training data and also to the complexity and a scale of the neural networks, which may include billions or even trillions of parameters.

LLMs are configurable to perform a wide range of language-related tasks without being explicitly programmed for each one. Examples of these tasks include text generation, translation, summarization, question answering, sentiment analysis, and natural language processing. To train an LLM, the underlying AI/ML model is provided with training data that includes examples of text to train and retrain the model to predict a next word in a sequence. Over time, the LLM, once trained, is configured to generate text that is coherent and contextually relevant, is configurable to mimic a style and content of the training data, and so forth. In this way, LLMs provide a foundational tool in artificial intelligence for understanding and generating human language, powering a wide range of applications from conversational agents to content creation tools.

As previously mentioned, training of the AI/ML model 1002 is performable locally on the device 100, 300 and/or 500, on one or more servers external to the device 100, 300 and/or 500, or a combination thereof. Further, the trained AI/ML model 1002 is stored locally on the device 100, 300 and/or 500 and/or the trained AI/ML model 1002 is stored on multiple server devices in accordance with a federated deployment scenario.

In accordance with the described techniques, the AI/ML model 1002 is trained, configured, and/or prompted to determine whether one or more messages of a messaging conversation satisfy one or more criteria for recommending a poll. That is, the AI/ML model 1002 is trained, configured, and/or prompted to determine whether a messaging conversation meets the one or more criteria for generating the first user interface element (e.g., 620a) that is manipulable to initiate the poll generation process.

In various examples, the one or more criteria includes a criterion that the one or more messages of the messaging conversation include a query that demonstrates an intent to seek a consensus from multiple participants of the messaging conversation. Additionally or alternatively, the one or more criteria includes a criterion that the one or more messages of the messaging conversation include at least a threshold number of poll options posed by participants of the messaging conversation that are relevant to a content type (e.g., topic) of the query. For an example query "what should we have for dinner?," the content type of the query is food, and one criterion for poll recommendation is that a threshold number of food items be posed by participants of the messaging conversation.

Given this, the AI/ML model 1002 is trained to predict whether a messaging conversation includes a query that expresses an intent to seek a consensus from participants of a messaging group, and whether the messaging conversation includes a sufficient number of poll options that are relevant to the query topic. If both criteria are met, in some implementations, the AI/ML model 1002 is configured to recommend a poll be generated for the messaging conversation. That is, when both criteria are met, the AI/ML model 1002 outputs an instruction to generate the first user interface element 620a that is selectable to initiate the poll generation process. In some examples, the AI/ML model 1002 additionally generates the poll automatically in accordance with the described techniques, and the automatically generated poll is incorporated into the first editing user interface 624.

To train the AI/ML Model 1002, a training dataset 1004 of training samples 1006 is collected. Generally, the training samples 1006 are collectable from any one or more of a variety of public or proprietary sources, examples of which include public datasets, online content publication sources, social media platforms, comment sections, and so forth. Each training sample 1006 includes a messaging conversation and one or more labels. In particular, each training sample 1006 includes an intent label 1008 which indicates whether one or more messages of the messaging conversation express an intent to seek a consensus from participants of the messaging conversation. Training samples 1006 that do include an intent also include a message identifier label 1010 which identifies the one or more messages of the messaging conversation where the intent is expressed. Various training samples 1006 also include option label(s) 1012 which identify the poll options represented in the one or more messages of the messaging conversation. Finally, each training sample includes a positive/negative label 1014, which indicates whether a poll should be recommended for the messaging conversation. In various implementations, the system 1000 refrains from modifying the language of the messaging conversations obtained from the above-mentioned sources to encourage the AI/ML model 1002 to identify the intent and poll options within real-world conversations.

Accordingly, the training dataset 1004 includes positive training samples 1006 and negative training samples 1006. Here, the positive training samples 1006 are representative of messaging conversations for which a poll should be recommended to messaging participants, while negative training samples 1006 are representative of messaging conversations for which a poll should not be recommended to messaging participants. A positive training sample 1006 includes a positive intent label 1008 (e.g., indicating that the messaging conversation includes an intent to seek a consensus from the messaging group), a message identifier label 1010 identifying which message(s) express the intent, and a sufficient number of option labels 1012 that identify poll options that are relevant to a topic of the query. In contrast, a negative training sample 1006 includes at least one of a negative intent label 1008 (e.g., indicating that the messaging conversation lacks an intent to seek a consensus from the messaging group) and/or an insufficient number of the option label(s) 1012.

Thus, there are training samples 1006 that include a negative intent label 1008, but a sufficient number of conceivable poll options. Consider an example in which a training sample 1006 includes the following message - "tomorrow, I am going to have breakfast burritos for breakfast, a sandwich for lunch, and sushi for dinner." This example message includes entities of a common content type (e.g., food items), and as such, these entities are interpretable as poll options for a poll. While there are a sufficient number of poll options, there is no intent to seek a consensus from participants of the messaging group. As such, this example training sample is a negative sample labeled with a negative intent label 1008.

Including these negative samples 1006 in the training dataset 1004 encourages the AI/ML model 1002 to refrain from recommending a poll based solely on multiple entities of a common content type being mentioned in a messaging conversation. Similarly, negative training samples 1006 that include a positive intent label 1008 and an insufficient number of option label(s) 1012 encourage the AI/ML model 1002 to refrain from recommending a poll based solely on an intent to seek a consensus from the participants of the messaging group, e.g., without sufficient options being presented. Rather, based on the mixture of positive and negative samples the AI/ML model 1002 learns to (1) recommend a poll when the messaging conversation both exhibits the intent to seek a consensus from the messaging group, and includes the sufficient number of poll options, and (2) refrain from recommending a poll when one or both of these criteria are absent.

As shown, a training sample 1006 is provided to the AI/ML model 1002. Particularly, in one or more implementations, the training sample 1006 is provided to an adapter 1018 of the AI/ML model 1002. Generally, an adapter 1018 is a trainable module that is inserted into a trained LLM (e.g., the AI/ML model 1002) to enable task-specific fine-tuning without modifying the LLM's original parameters. Since the adapter 1018 is smaller (e.g., in terms of parameter count) than the LLM base model, training the adapter 1018 rather than the LLM as a whole enables adaptation of the LLM to new tasks using significantly fewer parameters, which reduces computational cost and storage consumption. Adapters 1018 are also modular, enabling different adapters trained for different tasks to be inserted into the LLM without changing the base model. Here, the adapter 1018 is trained for the task of determining whether to recommend a poll for a messaging conversation.

In response to receiving the training sample 1006, the adapter 1018 is configured to generate an output 1020. In particular, the output includes 1020 includes an intent prediction 1022, a message identifier prediction 1024, one or more option predictions 1026, and/or a positive/negative prediction 1028. The predictions 1022, 1024, 1026, 1028 correspond to the labels 1008, 1010, 1012, 1014, respectively, except that the labels are ground truth labels of the training data while the predictions are outputs by the adapter 1018 of the AI/ML model 1002.

For example, the intent prediction 1022 is a prediction by the adapter 1018 of whether the messaging conversation of the training sample 1006 expresses an intent to seek a consensus from participants of the messaging conversation. If the training sample 1006 is predicted as including the intent, the output 1020 further includes a message identifier prediction 1024 that identifies the one or more messages of the messaging conversation where the intent is expressed. The output predictions 1026 identify the poll options represented in the one or more messages of the messaging conversation. Finally, the positive/negative prediction 1028 is a prediction of whether a poll should be recommended for the messaging conversation. For example, the positive/negative prediction 1028 is positive if the intent prediction 1022 is positive and there are a sufficient number of option predictions 1026, but the positive/negative prediction 1028 is negative if at least one of these criteria are not met.

As shown, the output 1020 and the training sample 1006 are input to a loss function 1030. Generally, the loss function generates a loss 1032 that measures differences between the output 1020 and target values (e.g., the labels 1008, 1010, 1012, 1014) of the training sample 1006. In particular, the loss function 1030 measures whether the intent prediction 1022 matches the intent label 1008, whether the message identifier prediction 1024 matches the message identifier label 1010, and whether the positive/negative prediction 1028 matches the positive/negative label 1014. For any of these comparisons, the loss 1032 decreases based on a match, and vice versa. Additionally or alternatively, the loss function 1030 measures a difference between the option predictions 1026 and the option labels 1012 with a higher proportion of matches leading to a decreased loss 1032 value, and vice versa.

After the loss 1032 is computed, parameters of the adapter 1018 are adjusted to reduce the loss 1032 using an optimization function, examples of which include gradient descent, stochastic gradient descent, and momentum-based optimizers. For example, the AI/ML model 1002 is configurable as including a plurality of nodes that collectively form a plurality of layers. The layers, for instance, are configurable to include an input layer, an output layer, and one or more hidden layers. Calculations are performed by the nodes within the layers through the hidden states through a system of weighted connections, where the weights (e.g., parameters) are "learned" during training.

The parameters of the adapter 1018 are iteratively adjusted on different training samples 1006 of the training dataset 1004 until a stopping criterion is met. Examples of a stopping criterion include but are not limited to a predefined number of epochs being processed, loss 1032 convergence and/or stabilization, and achievement of a performance and/or accuracy threshold.

Once the stopping criterion is met, the adapter 1018 is trained to accurately predict when to recommend a poll for a messaging conversation, and the adapter 1018 is integrated into the AI/ML model 1002. Furthermore, the AI/ML model 1002 and the adapter 1018 are deployed to recommend polls for messaging conversations. For example, the AI/ML model 1002 receives a messaging conversation and predicts whether the messaging conversation meets the one or more criteria for recommending a poll. That is, the AI/ML model 1002 predicts whether the messaging conversation includes a query expressing an intent to seek a consensus from the messaging group and whether the messaging conversation includes at least a threshold number of poll options that are relevant to a topic of the query. If the criteria are met, the AI/ML model 1002 recommends a poll, and the system generates the first user interface element 620a that is selectable to initiate the poll generation process. If the user interface element 620a is selected, then the system (e.g., optionally, the AI/ML model 1002) generates the poll for inclusion in the first editing user interface 624. If the criteria are not met, the AI/ML model 1002 does not recommend a poll.

By including the positive training samples 1006 and the negative training samples 1006 in the training dataset 1004, the adapter 1018 learns to differentiate between messaging conversations that meet the criteria and those that do not meet the criteria, e.g., those that lack a clear intent to seek a consensus and/or lack selectable poll options. This functionality enables the system to determine when to recommend polls, and importantly, when to refrain from recommending polls. Indeed, the intent-based training enables the AI/ML model 1002 to learn to recommend polls solely when there is a clear intent to seek a consensus. This prevents the system from overloading users with poll recommendations, thereby improving user experience with the messaging application.

Moreover, by training based on the message identifiers (e.g., portions of the messaging conversations where the intent is expressed), the AI/ML model 1002 does not learn to prematurely identify intent. For example, if a positive training sample with intent to seek a consensus were to lack the message identifier label 1010, the AI/ML model 1002 may learn to associate other portions of the messaging conversation with the intent. The message identifier labels 1010 thus reduce false positive rate for intent predictions by the AI/ML model 1002.

Additionally, it should be noted that details of processes described herein with respect to other methods described herein (e.g., methods 700, and/or 900) are also applicable in relation to system 1000 as described in relation to Fig. 10.

As described above, one aspect of the present technology is tracking and displaying content. The present disclosure contemplates that in some instances, the data utilized may include personal information data that uniquely identifies or can be used to contact or locate a specific person. Such personal information data can include demographic data, content consumption activity, location-based data, telephone numbers, email addresses, twitter ID's, home addresses, data relating to a person's likeness, name, date of birth, or any other identifying or personal information.

The present disclosure recognizes that the use of such personal information data, in the present technology, can be used to the benefit of users. For example, analyzing messages sent to a messaging conversation can enable the electronic device to perform one or more operations pertaining to the generation of polls and/or collection of information from other users participating in the messaging conversation. Accordingly, use of such personal information data enables users to use electronic devices to perform enhanced operations with generating polls. Further, other uses for personal information data that benefit the user are also contemplated by the present disclosure. For instance, analyzing a user's handwriting may enhance detection of when a poll is potentially useful to the one or more users participating in the messaging conversation.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of location services, the present technology can be configured to allow users to select to "opt in" or "opt out" of participation in the collection of personal information data during registration for services or anytime thereafter. In another example, users can select not to enable recording of personal information data in a specific application (e.g., first application and/or second application). In addition to providing "opt in" and "opt out" options, the present disclosure contemplates providing notifications relating to the access or use of personal information. For instance, a user may be notified upon initiating content collection that their personal information data will be accessed and then reminded again just before personal information data is accessed by the device(s).

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, an electronic device generates one or more poll items and/or polls without associating the content with personal user data.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Some embodiments described herein can include use of learning and/or non-learning-based process(es). The use can include collecting, pre-processing, encoding, labeling, organizing, analyzing, recommending and/or generating data. Entities that collect, share, and/or otherwise utilize user data should provide transparency and/or obtain user consent when collecting such data. The present disclosure recognizes that the use of the data in the content generation processes can be used to benefit users. For example, the data can be used to train models that can be deployed to improve performance, accuracy, and/or functionality of applications and/or services. Accordingly, the use of the data enables the content generation processes to adapt and/or optimize operations to provide more personalized, efficient, and/or enhanced user experiences. Such adaptation and/or optimization can include tailoring content, recommendations, and/or interactions to individual users, as well as streamlining processes, and/or enabling more intuitive interfaces. Further beneficial uses of the data in the content generation processes are also contemplated by the present disclosure.

The present disclosure contemplates that, in some embodiments, data used by content generation processes includes publicly available data. To protect user privacy, data may be anonymized, aggregated, and/or otherwise processed to remove or to the degree possible limit any individual identification. As discussed herein, entities that collect, share, and/or otherwise utilize such data should obtain user consent prior to and/or provide transparency when collecting such data. Furthermore, the present disclosure contemplates that the entities responsible for the use of data, including, but not limited to data used in association with content generation processes, should attempt to comply with well-established privacy policies and/or privacy practices.

For example, such entities may implement and consistently follow policies and practices recognized as meeting or exceeding industry standards and regulatory requirements for developing and/or training content generation processes. In doing so, attempts should be made to ensure all intellectual property rights and privacy considerations are maintained. Training should include practices safeguarding training data, such as personal information, through sufficient protections against misuse or exploitation. Such policies and practices should cover all stages of the content generation processes development, training, and use, including data collection, data preparation, model training, model evaluation, model deployment, and ongoing monitoring and maintenance. Transparency and accountability should be maintained throughout. Such policies should be easily accessible by users and should be updated as the collection and/or use of data changes. User data should be collected for legitimate and reasonable uses of the entity and not shared or sold outside of those legitimate uses. Further, such collection and sharing should occur through transparency with users and/or after receiving the informed consent of the users. Additionally, such entities should consider taking any needed steps for safeguarding and securing access to such data and ensuring that others with access to the data adhere to their privacy policies and procedures. Further, such entities should subject themselves to evaluation by third parties to certify, as appropriate for transparency purposes, their adherence to widely accepted privacy policies and practices. In addition, policies and/or practices should be adapted to the particular type of data being collected and/or accessed and tailored to a specific use case and applicable laws and standards, including jurisdiction-specific considerations.

In some embodiments, content generation processes may utilize models that may be trained (e.g., supervised learning or unsupervised learning) using various training data, including data collected using a user device. Such use of user-collected data may be limited to operations on the user device. For example, the training of the model can be done locally on the user device so no part of the data is sent to another device. In other implementations, the training of the model can be performed using one or more other devices (e.g., server(s)) in addition to the user device but done in a privacy preserving manner, e.g., via multi-party computation as may be done cryptographically by secret sharing data or other means so that the user data is not leaked to the other devices.

In some embodiments, the trained model can be centrally stored on the user device or stored on multiple devices, e.g., as in federated learning. Such decentralized storage can similarly be done in a privacy preserving manner, e.g., via cryptographic operations where each piece of data is broken into shards such that no device alone (i.e., only collectively with another device(s)) or only the user device can reassemble or use the data. In this manner, a pattern of behavior of the user or the device may not be leaked, while taking advantage of increased computational resources of the other devices to train and execute the ML model. Accordingly, user-collected data can be protected. In some implementations, data from multiple devices can be combined in a privacy-preserving manner to train an ML model.

In some embodiments, the present disclosure contemplates that data used for content generation processes may be kept strictly separated from platforms where the content generation processes are deployed and/or used to interact with users and/or process data. In such embodiments, data used for offline training of the content generation processes may be maintained in secured datastores with restricted access and/or not be retained beyond the duration necessary for training purposes. In some embodiments, the content generation processes may utilize a local memory cache to store data temporarily during a user session. The local memory cache may be used to improve performance of the content generation processes. However, to protect user privacy, data stored in the local memory cache may be erased after the user session is completed. Any temporary caches of data used for online learning or inference may be promptly erased after processing. All data collection, transfer, and/or storage should use industry-standard encryption and/or secure communication.

In some embodiments, as noted above, techniques such as federated learning, differential privacy, secure hardware components, homomorphic encryption, and/or multi-party computation among other techniques may be utilized to further protect personal information data during training and/or use of the content generation processes. The content generation processes should be monitored for changes in underlying data distribution such as concept drift or data skew that can degrade performance of the content generation processes over time.

In some embodiments, the content generation processes are trained using a combination of offline and online training. Offline training can use curated datasets to establish baseline model performance, while online training can allow the content generation processes to continually adapt and/or improve. The present disclosure recognizes the importance of maintaining strict data governance practices throughout this process to ensure user privacy is protected.

In some embodiments, the content generation processes may be designed with safeguards to maintain adherence to originally intended purposes, even as the content generation processes adapt based on new data. Any significant changes in data collection and/or applications of content generation process use may (and in some cases should) be transparently communicated to affected stakeholders and/or include obtaining user consent with respect to changes in how user data is collected and/or utilized.

Despite the foregoing, the present disclosure also contemplates embodiments in which users selectively restrict and/or block the use of and/or access to data. That is, the present disclosure contemplates that hardware and/or software elements can be provided to prevent or block access to data. For example, in the case of some services, the present technology should be configured to allow users to select to "opt in" or "opt out" of participation in the collection of data during registration for services or anytime thereafter. In another example, the present technology should be configured to allow users to select not to provide certain data for training the content generation processes and/or for use as input during the inference stage of such systems. In yet another example, the present technology should be configured to allow users to be able to select to limit the length of time data is maintained or entirely prohibit the use of their data for use by the content generation processes. In addition to providing "opt in" and "opt out" options, the present disclosure contemplates providing notifications relating to the access or use of personal information. For instance, a user can be notified when their data is being input into the content generation processes for training or inference purposes, and/or reminded when the content generation processes generate outputs or make decisions based on their data.

The present disclosure recognizes content generation processes should incorporate explicit restrictions and/or oversight to mitigate against risks that may be present even when such systems having been designed, developed, and/or operated according to industry best practices and standards. For example, outputs may be produced that could be considered erroneous, harmful, offensive, and/or biased; such outputs may not necessarily reflect the opinions or positions of the entities developing or deploying these systems. Furthermore, in some cases, references to or failures to cite third-party products and/or services in the outputs should not be construed as endorsements or affiliations by the entities providing the content generation processes. Generated content can be filtered for potentially inappropriate or dangerous material prior to being presented to users, while human oversight and/or ability to override or correct erroneous or undesirable outputs can be maintained as a failsafe.

The present disclosure further contemplates that users of the content generation processes should refrain from using the services in any manner that infringes upon, misappropriates, or violates the rights of any party. Furthermore, the content generation processes should not be used for any unlawful or illegal activity, nor to develop any application or use case that would commit or facilitate the commission of a crime, or other tortious, unlawful, or illegal act including misinformation, disinformation, misrepresentations (e.g., deepfakes), deception, impersonation, and propaganda. The content generation processes should not violate, misappropriate, or infringe any copyrights, trademarks, rights of privacy and publicity, trade secrets, patents, or other proprietary or legal rights of any party, and appropriately attribute content as required. Further, the content generation processes should not interfere with any security, digital signing, digital rights management, content protection, verification, or authentication mechanisms. The content generation processes should not misrepresent machine-generated outputs as being human-generated.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best use the invention and various described embodiments with various modifications as are suited to the particular use contemplated.

## Claims

1. A method comprising:
at a first electronic device, corresponding to a first user, in communication with a display generation component and one or more input devices:
while displaying a messaging user interface associated with a messaging application, including representations of one or more messages corresponding to a messaging conversation that includes a plurality of users, including the first user and a second user:
detecting that the one or more messages satisfy one or more criteria; and
in response to detecting that the one or more messages satisfy the one or more criteria, displaying, in the messaging user interface, a first user interface element, which is selectable to initiate a poll generation process corresponding to content of the one or more messages.

2. The method of claim 1, wherein the one or more messages were included in the messaging conversation prior to the one or more criteria being satisfied.

3. The method of any one of claims 1-2, further comprising:
detecting a user input, via the one or more input devices, from the first user corresponding to composing a first message of the one or more messages;
while detecting the user input and prior to detecting an input to a second user interface element which is selectable to initiate transmitting the first message to the messaging conversation:
detecting that a first portion of the first message satisfies the one or more criteria; and
in response to detecting that the first portion of the first message satisfies the one or more criteria, displaying the first user interface element that is selectable to initiate the poll generation process corresponding to the content of the one or more messages, wherein the content of the one or more messages includes content corresponding to the first portion of the first message;
detecting, via the one or more input devices, the input to the second user interface element;
in response to detecting the input to the second user interface element:
transmitting the first message to the messaging conversation; and
after transmitting the first message to the messaging conversation and in accordance with a determination that the first message satisfies the one or more criteria, displaying the first user interface element that is selectable to initiate the poll generation process.

4. The method of any one of claims 1-3, further comprising:
while displaying the first user interface element, detecting, via the one or more input devices, an input to the first user interface element which is selectable to initiate the poll generation process corresponding to content of the one or more messages; and
in response to detecting the input to the first user interface element, displaying, in the messaging user interface, a first editing user interface for a first poll corresponding to the content of the one or more messages.

5. The method of claim 4, wherein the first editing user interface for the first poll includes one or more poll fields populated with one or more poll items corresponding to the content of the one or more messages, the one or more poll fields including a first poll field which is selectable to add an additional poll item to the first poll.

6. The method of any of claims 4-5, wherein the first editing user interface for the first poll is displayed in a first portion of the messaging user interface configured to receive user input, corresponding to message drafting, to transmit to the messaging conversation.

7. The method of any of claims 4-6, wherein displaying the first editing user interface for the first poll includes displaying a first visual representation of the first poll with a first visual characteristic at a first level; and
the method further comprising, while displaying the messaging user interface and the first visual representation of the first poll with the first visual characteristic at the first level, displaying, in the messaging user interface, a second user interface element, which is selectable to initiate transmitting the first poll to the messaging conversation; and
while displaying the messaging user interface including the first visual representation of the first poll with the first visual characteristic at the first level and the second user interface element, detecting, via the one or more input devices, a user input corresponding to selection of the second user interface element which is selectable to initiate transmitting the first poll to the messaging conversation; and in response to detecting the input corresponding to selection of the second user interface element:
transmitting the first poll to the messaging conversation;
displaying a second visual representation of the first poll, different from the first visual representation of the first poll, in a first portion of the messaging user interface; and
ceasing to display the first visual representation of the first poll,
wherein displaying the second visual representation of the first poll includes displaying second visual representation of the first poll with the first visual characteristic at a second level, different than the first level.

8. The method of claim 7, wherein displaying the second visual representation of the first poll in the messaging user interface includes displaying a first poll item with a second visual characteristic at a first level, and displaying a second poll item with the second visual characteristic at the first level, the method further comprising:
detecting an event corresponding to receiving an input from the first user or the second user corresponding to selection of the first poll item;
in response to detecting the event, updating the second visual representation of the first poll, including:
displaying the first poll item with the second visual characteristic at a second level, greater than the first level, wherein the second visual characteristic of the first poll item corresponds to a dimension along a first axis of the first poll item in the messaging user interface;
after detecting the event corresponding to selection of the first poll item and while displaying the second visual representation of the first poll, including displaying the first poll item with the second visual characteristic at the second level, detecting a second event corresponding to receiving an input corresponding to deselection of the first poll item; and
in response to detecting the second event, displaying the first poll item with the second visual characteristic at the first level.

9. The method of any one of claims 1-8, wherein the one or more criteria include a criterion that is satisfied when a first message of the one or more messages includes a query corresponding to a predetermined content type, and/or a criterion that is satisfied when the content of the one or more messages corresponds to a first content type, different from the predetermined content type.

10. The method of any one of claims 1-9, wherein detecting that the one or more messages satisfy the one or more criteria includes using a first AI model to determine whether the one or more messages satisfy the one or more criteria.

11. The method of any one of claims 1-10, wherein displaying the messaging user interface includes displaying a second user interface element, which is selectable to display one or more options corresponding to actions associated with the messaging conversation, including a third user interface element, different from the first user interface element, which is selectable to initiate the poll generation process.

12. The method of any one of claims 1-11, wherein:
the first user interface element is displayed in a first portion of the messaging user interface corresponding to display of suggested content corresponding to user input directed to a second portion of the messaging user interface configured to receive user input when composing one or more messages to transmit to the messaging conversation,
displaying the first user interface element in the first portion of the messaging user interface includes replacing display of a first selectable option for inserting first suggested content with the first user interface element,
the first user interface element is displayed in the first portion of the messaging user interface concurrently with a first selectable option for inserting first suggested content,
displaying the first user interface element includes displaying the first user interface element with a first visual effect having a first visual appearance; and
displaying the suggested content in the first portion of the messaging user interface includes displaying the suggested content without the first visual effect.

13. The method of any one of claims 1-12, wherein the one or more criteria includes a criterion that is satisfied when the messaging conversation includes three or more users, a criterion that is satisfied when the one or more messages were composed by the first user, and/or a criterion that is satisfied when the one or more messages were composed by the first user and/or the second user.

14. An electronic device, comprising:
one or more processors;
memory; and
one or more programs, wherein the one or more programs are stored in the memory and configured to be executed by the one or more processors, the one or more programs including instructions for performing any of the methods of claims 1-13.

15. A non-transitory computer readable storage medium storing one or more programs, the one or more programs comprising instructions, which when executed by one or more processors of an electronic device, cause the electronic device to perform any of the methods of claims 1-13.
